(19) **Europäisches Patentamt / European Patent Office / Office européen des brevets**

(11) **EP 4 697 701 A1**

(12) **EUROPEAN PATENT APPLICATION**
published in accordance with Art. 153(4) EPC

(43) Date of publication:
**18.02.2026 Bulletin 2026/08**

(21) Application number: **24789014.8**

(22) Date of filing: **09.04.2024**

(51) International Patent Classification (IPC):
**H04N 19/105** (2014.01)   **H04N 19/186** (2014.01)
**H04N 19/176** (2014.01)   **H04N 19/132** (2014.01)
**H04N 19/137** (2014.01)   **H04N 19/159** (2014.01)
**H04N 19/587** (2014.01)   **H04N 19/119** (2014.01)
**H04N 19/56** (2014.01)   **H04N 19/577** (2014.01)

(52) Cooperative Patent Classification (CPC):
**H04N 19/105; H04N 19/119; H04N 19/132;
H04N 19/137; H04N 19/159; H04N 19/176;
H04N 19/186; H04N 19/56; H04N 19/577;
H04N 19/587**

(86) International application number:
**PCT/KR2024/004766**

(87) International publication number:
**WO 2024/215072 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **14.04.2023   KR 20230049669
03.07.2023   KR 20230086128
06.10.2023   KR 20230133784
10.01.2024   KR 20240004499
08.04.2024   KR 20240047671**

(71) Applicant: **Electronics and Telecommunications
Research Institute
Daejeon 34129 (KR)**

(72) Inventors:
• **KIM, Dong Hyun**
  **Daejeon 34129 (KR)**
• **KIM, Jong Ho**
  **Daejeon 34129 (KR)**
• **LIM, Sung Chang**
  **Daejeon 34129 (KR)**
• **LIM, Woong**
  **Daejeon 34129 (KR)**
• **CHOI, Jin Soo**
  **Daejeon 34129 (KR)**
• **KANG, Jung Won**
  **Daejeon 34129 (KR)**

(74) Representative: **Betten & Resch
Patent- und Rechtsanwälte PartGmbB
Maximiliansplatz 14
80333 München (DE)**

(54) **IMAGE ENCODING/DECODING METHOD AND DEVICE USING MODEL-BASED PREDICTION METHOD, AND BITSTREAM STORAGE MEDIUM**

(57)    The present invention relates to an image encoding/decoding method and device, and a recording medium, the method comprising the steps of: obtaining a prediction block of a target block by performing prediction of the target block on the basis of a mapping model; and reconstructing the target block on the basis of the prediction block, wherein the mapping model may be determined by means of any one of a plurality of mapping model candidates.

EP 4 697 701 A1

【FIG. 1】

## Description

[Technical Field]

The present disclosure relates to a method and a device for encoding/decoding an image, and more specifically, relates to a method and a device for encoding/decoding an image including a weighted sum of a prediction block.

[Background Art]

Recently, demands for high-resolution and high-quality images such as HD(High Definition) images and UHD(Ultra High Definition) images have increased in a variety of application fields. As image data becomes high-resolution and high-quality, the volume of data relatively increases compared to the existing image data, so when image data is transmitted by using media such as the existing wire and wireless broadband circuit or is stored by using the existing storage medium, expenses for transmission and expenses for storage increase. High efficiency image encoding/decoding technologies for images having higher resolution and image quality may be required to resolve these problems which are generated as image data becomes high-**resolution** and high-quality.

There are various technologies such as an inter prediction technology which predicts a pixel value included in a current picture from a previous or subsequent picture of a current picture with an image impression technology, an intra prediction technology which predicts a pixel value included in a current picture by using pixel information in a current picture, a transform and quantization technology for compressing the energy of the remaining signals, an entropy encoding technology which allocates a short sign to a value with high appearance frequency and allocates a long sign to a value with low appearance frequency and so on, and image data may be effectively compressed and transmitted or stored by using these image compression technologies.

[Disclosure]

[Technical Problem]

In a conventional image encoding/decoding method and device, there is a limit to improving encoding efficiency because there is redundancy of information between a luma component sample and a chroma component sample; and a neighbor sample of a target block and a sample within a target block.

The present disclosure may provide a method and a device for reducing signaling bits by using redundancy of information between samples through model-based prediction in order to improve image encoding/decoding efficiency.

[Technical Solution]

An embodiment of the present disclosure is an image encoding method and device including configuring a sample set and deriving a mapping model; applying a mapping model to a target block; and entropy-encoding/decoding encoding information.

[Advantageous Effects]

The present disclosure may provide a method and a device for reducing signaling bits by using redundancy of information between samples through model-based prediction in order to improve image encoding/decoding efficiency.

[Description of Drawings]

FIG. 1 is a block diagram showing a configuration according to an embodiment of an encoding device to which the present disclosure is applied.
FIG. 2 is a block diagram showing a configuration according to an embodiment of a decoding device to which the present disclosure is applied.
FIG. 3 is a diagram roughly showing a division structure of an image when encoding and decoding an image.
FIG. 4 is a diagram for describing an embodiment of an intra prediction process.
FIG. 5 is a diagram for describing an embodiment of an inter prediction process.
FIG. 6 is a diagram for describing a process of transform and quantization.
FIG. 7 shows embodiments showing a division boundary in a geometric partitioning mode.

FIG. 8 is a diagram showing a division boundary, a division offset and a division angle in a geometric partitioning mode.

FIG. 9 shows an embodiment representing a weight map used for each prediction block according to a geometric partitioning boundary.

FIG. 10 is a diagram for an embodiment of template matching.

FIG. 11 shows a sub-sampling method of a search range of template matching.

FIG. 12 shows a sub-sampling method for a template of template matching.

FIGS. 13 to 18 show a search method in template matching according to an embodiment, respectively.

FIG. 19 shows a method for configuring a first template in an affine mode according to an embodiment.

FIG. 20 shows a method for configuring a second template in an affine mode according to an example.

FIG. 21 shows various examples for a sub-sampling method in bilateral matching.

FIG. 22 shows bilateral matching according to an embodiment.

FIG. 23 is a flowchart of an encoding method for a target block according to an embodiment.

FIG. 24 is a flowchart of a decoding method for a target block according to an embodiment.

FIG. 25 is a flowchart of a decoding method for a target block according to an embodiment.

FIG. 26 shows an embodiment for a first input structure and a second input structure.

FIG. 27 is a diagram for describing a specific position.

FIG. 28 shows a reference region used to derive a mapping model.

FIG. 29 shows samples of calculation of mapping model output.

FIG. 30 is a diagram for describing a neighbor sample within a target block and BOUND_LINE_NUM rows/columns and a sample within BOUND_LINE_NUM rows/columns within a target block.

FIG. 31 shows an embodiment determining whether to use top neighbor samples in configuring various sample sets based on at least one of a neighbor sample within two top rows/columns of a target block or a sample within two rows/columns within a target block.

FIG. 32 is a diagram showing a non-adjacent block of a current block.

FIG. 33 shows a filter based on a luma component position.

FIG. 34 shows an example of a 3x3-sized low-band filter for prediction sample correction.

FIG. 35 is a reference diagram for convenience of a description of a mapping model function.

FIG. 36 shows a first luma component sample and a neighbor sample.

FIG. 37 shows a first embodiment for generating a reference block when a motion vector (or a block vector) indicates a sub-pixel position.

FIG. 38 shows a second embodiment for generating a reference block when a motion vector (or a block vector) indicates a sub-pixel position.

[Best Mode]

As the present disclosure may make various changes and have multiple embodiments, specific embodiments are illustrated in a drawing and are described in detail in a detailed description. But, it is not to limit the present disclosure to a specific embodiment, and should be understood as including all changes, equivalents and substitutes included in an idea and a technical scope of the present disclosure. A similar reference numeral in a drawing refers to a like or similar function across multiple aspects. A shape and a size, etc. of elements in a drawing may be exaggerated for a clearer description. A detailed description on exemplary embodiments described below refers to an accompanying drawing which shows a specific embodiment as an example. These embodiments are described in detail so that those skilled in the pertinent art can implement an embodiment. It should be understood that a variety of embodiments are different each other, but they do not need to be mutually exclusive. For example, a specific shape, structure and characteristic described herein may be implemented in other embodiment without departing from a scope and a spirit of the present disclosure in connection with an embodiment. In addition, it should be understood that a position or an arrangement of an individual element in each disclosed embodiment may be changed without departing from a scope and a spirit of an embodiment. Accordingly, a detailed description described below is not taken as a limited meaning and a scope of exemplary embodiments, if properly described, are limited only by an accompanying claim along with any scope equivalent to that claimed by those claims.

In the present disclosure, a term such as first, second, etc. may be used to describe a variety of elements, but the elements should not be limited by the terms. The terms are used only to distinguish one element from other element. For example, without getting out of a scope of a right of the present disclosure, a first element may be referred to as a second element and likewise, a second element may be also referred to as a first element. A term of and/or includes a combination of a plurality of relevant described items or any item of a plurality of relevant described items.

When an element in the present disclosure is referred to as being "connected" or "linked" to another element, it should be understood that it may be directly connected or linked to that another element, but there may be another element between them. Meanwhile, when an element is referred to as being "directly connected" or "directly linked" to another element, it should be understood that there is no another element between them.

As construction units shown in an embodiment of the present disclosure are independently shown to represent different characteristic functions, it does not mean that each construction unit is composed in a construction unit of separate hardware or one software. In other words, as each construction unit is included by being enumerated as each construction unit for convenience of a description, at least two construction units of each construction unit may be combined to form one construction unit or one construction unit may be divided into a plurality of construction units to perform a function, and an integrated embodiment and a separate embodiment of each construction unit are also included in a scope of a right of the present disclosure unless they are beyond the essence of the present disclosure.

A term used in the present disclosure is just used to describe a specific embodiment, and is not intended to limit the present disclosure. A singular expression, unless the context clearly indicates otherwise, includes a plural expression. In the present disclosure, it should be understood that a term such as "include" or "have", etc. is just intended to designate the presence of a feature, a number, a step, an operation, an element, a part or a combination thereof described in the present specification, and it does not exclude in advance a possibility of presence or addition of one or more other features, numbers, steps, operations, elements, parts or their combinations. In other words, a description of "including" a specific configuration in the present disclosure does not exclude a configuration other than a corresponding configuration, and it means that an additional configuration may be included in a scope of a technical idea of the present disclosure or an embodiment of the present disclosure.

Some elements of the present disclosure are not a necessary element which performs an essential function in the present disclosure and may be an optional element for just improving performance. The present disclosure may be implemented by including only a construction unit which is necessary to implement essence of the present disclosure except for an element used just for performance improvement, and a structure including only a necessary element except for an optional element used just for performance improvement is also included in a scope of a right of the present disclosure.

Hereinafter, an embodiment of the present disclosure is described in detail by referring to a drawing. In describing an embodiment of the present specification, when it is determined that a detailed description on a relevant disclosed configuration or function may obscure a gist of the present specification, such a detailed description is omitted, and the same reference numeral is used for the same element in a drawing and an overlapping description on the same element is omitted.

Hereinafter, an image may refer to one picture that configures a video, and may also represent a video itself. For example, "encoding and/or decoding of an image" may refer to "encoding and/or decoding of a video," and may refer to "encoding and/or decoding of one of the images that configure a video".

Hereinafter, terms "moving image" and "video" may be used with the same meaning, and may be used interchangeably.

Hereinafter, a target image may be an image to be encoded, a target of encoding, and/or an image to be decoded, a target of decoding. In addition, a target image may be an input image input to an encoding device or may be an input image input to a decoding device. Here, a target image may have the same meaning as a current image.

Hereinafter, terms "image", "picture", "frame" and "screen" may be used with the same meaning, and may be used interchangeably.

Hereinafter, a target block may be a block to be encoded, a target of encoding, and/or a block to be decoded, a target of decoding. In addition, a target block may be a current block that is currently a target of encoding and/or decoding. For example, terms "target block" and "current block" may be used with the same meaning, and may be used interchangeably.

Hereinafter, terms "block" and "unit" may be used with the same meaning, and may be used interchangeably. Alternatively, "block" may refer to a specific unit.

Hereinafter, terms "region" and "segment" may be used interchangeably.

Hereinafter, a specific signal may be a signal representing a specific block. For example, an original signal may be a signal representing a target block. A prediction signal may be a signal representing a prediction block. A residual signal may be a signal representing a residual block.

In embodiments, each of specified information, data, a flag, an index, an element, an attribute, etc. may have a value. "0", a value of information, data, a flag, a index, an element, an attribute, etc., may represent logical false or a first predefined value. In other words, a value "0", false, logical false and a first predefined value may be used interchangeably. "1", a value of information, data, a flag, an index, an element, an attribute, etc., may represent logical true or a second predefined value. In other words, a value "1", true, logical true and a second predefined value may be used interchangeably.

When a variable such as i or j, etc. is used to represent a row, a column or an index, a value of i may be an integer greater than or equal to 0, or may be an integer greater than or equal to 1. In other words, in embodiments, a row, a column, an index, etc. may be counted from 0, or may be counted from 1.

Encoder: It refers to a device that performs encoding. In other words, it may refer to an encoding device.

Decoder: It refers to a device that performs decoding. In other words, it may refer to a decoding device.

Block: It is a MxN array of a sample. Here, M and N may refer to a positive integer value, and a block may commonly refer to a two-dimensional sample array. A block may refer to a unit. A current block may refer to a block to be encoded, a target of encoding in encoding, or a block to be decoded, a target of decoding in decoding. In addition, a current block may be at least one of a coding block, a prediction block, a residual block or a transform block. In particular, a shape of a block may include not only a square, but also a geometric figure that may be expressed two-dimensionally, such as a rectangle, a trapezoid, a triangle, a pentagon, etc. In addition, block information may include at least one of a block type indicating a coding block, a prediction block, a residual block, a transform block, etc., a block size, a block depth or block encoding or decoding order.

Sample: It is a basic unit that configures a block. According to a bit depth (Bd), it may be expressed as a value from 0 to $2^{Bd} - 1$. In the present disclosure, a sample may be used in the same meaning as a pixel or a pixel. In other words, a sample, a pixel and a pixel may have the same meaning.

Unit: It may refer to a unit of image encoding and decoding. In image encoding and decoding, a unit may be a region that one image is divided. In addition, a unit may refer to a division unit when one image is divided into segmented units and encoded or decoded. In other words, one image may be divided into a plurality of units. In image encoding and decoding, predefined processing may be performed for each unit. One unit may be further divided into sub-units having a smaller size compared to a unit. Depending on a function, a unit may refer to a block, a macroblock, a coding tree unit, a coding tree block, a coding unit, a coding block, a prediction unit, a prediction block, a residual unit, a residual block, a transform unit, a transform block, etc. In addition, in order to refer to a unit separately from a block, a unit may mean that it includes a luma component block, a corresponding chroma component block and a syntax element for each block. A unit may have a variety of sizes and shapes, and in particular, a shape of a unit may include not only a square, but also a geometric figure that may be expressed two-dimensionally, such as a rectangle, a trapezoid, a triangle, a pentagon, etc. In addition, unit information may include at least one of a unit type indicating a coding unit, a prediction unit, a residual unit, a transform unit, etc., a unit size, a unit depth or unit encoding or decoding order.

Coding Tree Unit: It consists of one luma component (Y) coding tree block and two related chroma component (Cb, Cr) coding tree blocks. In addition, it may mean that it includes the blocks and a syntax element for each block. Each coding tree unit may be divided by using at least one division method such as a quad tree, a binary tree, etc. to configure a sub-unit such as a coding unit, a prediction unit, a transform unit, etc. It may be used as a term for referring to a sample block that becomes a processing unit in an image decoding/coding process, such as division of an input image.

Coding Tree Block: It may be used as a term for referring to any one of a Y coding tree block, a Cb coding tree block or a Cr coding tree block.

Neighbor block: It may refer to a block adjacent to a current block. A block adjacent to a current block may refer to a block bordering a current block or a block positioned within a predetermined distance from a current block. A neighbor block may refer to a block adjacent to a vertex of a current block. Here, a block adjacent to a vertex of a current block may be a block vertically adjacent to a neighbor block horizontally adjacent to a current block, or a block horizontally adjacent to a neighbor block vertically adjacent to a current block. A neighbor block may also refer to a reconstructed neighbor block.

Reconstructed Neighbor Block: It may refer to a neighbor block that was already spatially/temporally encoded or decoded around a current block. In this case, a reconstructed neighbor block may refer to a reconstructed neighbor unit. A reconstructed spatial neighbor block may be a block in a current picture and may be also a block that was already reconstructed through encoding and/or decoding. A reconstructed temporal neighbor block may be a reconstructed block at a position corresponding to a current block of a current picture within a reference image or a neighbor block thereof.

Unit Depth: It may refer to a degree to which a unit is divided. In a tree structure, the highest node (Root Node) may correspond to an initial undivided unit. The highest node may be referred to as a root node. In addition, the highest node may have the minimum depth value. In this case, the highest node may have a depth of level 0. A node with a depth of level 1 may represent a unit generated as an initial unit is divided one time. A node with a depth of level 2 may represent a unit generated as an initial unit is divided two times. A node with a depth of level n may represent a unit generated as an initial unit is divided n times. A leaf node may be the lowest node, and may be a node that may not be further divided. A depth of a leaf node may be at the maximum level. For example, a predefined value of the maximum level may be 3. It may be said that a root node has the shallowest depth and a leaf node has the deepest depth. In addition, when a unit is expressed in a tree structure, a level at which a unit exists may refer to a unit depth.

Bitstream: It may refer to a column of bits including encoded image information.

Parameter Set: It corresponds to header information among the structures in a bitstream. At least one of a video parameter set, a sequence parameter set, a picture parameter set or an adaptation parameter set may be included in a parameter set. In addition, a parameter set may include slice header and tile header information.

Parsing: It may mean that a bitstream is entropy-decoded to determine a value of a syntax element, or may refer to entropy decoding itself.

Symbol: It may refer to at least one of a syntax element, a coding parameter, a transform coefficient value, etc. of a unit to be encoded/decoded. In addition, a symbol may refer to a target of entropy encoding or a result of entropy decoding.

Prediction Mode: It may be information indicating a mode encoded/decoded by intra prediction or a mode encoded/decoded by inter prediction.

Prediction Unit: It may refer to a basic unit when performing prediction such as inter prediction, intra prediction, inter compensation, intra compensation, motion compensation, etc. One prediction unit may be divided into a plurality of partitions or a plurality of sub-prediction units in a smaller size. A plurality of partitions may also be a basic unit in performing prediction or compensation. A partition generated by dividing a prediction unit may also be a prediction unit.

Prediction Unit Partition: It may refer to a form in which a prediction unit is divided.

Reference Picture List: It may refer to a list including at least one reference image used for inter prediction or motion compensation. A type of a reference image list may include List Combined (LC), List 0 (L0), List 1 (L1), List 2 (L2), List 3 (L3), etc., and at least one reference image list may be used for inter prediction.

Inter Prediction Indicator: It may refer to an inter prediction direction (unidirectional prediction, bidirectional prediction, etc.) of a current block. Alternatively, it may refer to the number of reference images used when generating a prediction block of a current block. Alternatively, it may refer to the number of prediction blocks used when performing inter prediction or motion compensation for a current block.

Prediction list utilization flag: It represents whether a prediction block is generated by using at least one reference image in a specific reference image list. An inter prediction indicator may be derived by using a prediction list utilization flag, and conversely, a prediction list utilization flag may be derived by using an inter prediction indicator. For example, if a prediction list utilization flag indicates a first value of 0, it may represent that a prediction block is not generated by using a reference image in a corresponding reference image list, and if it indicates a second value of 1, it may represent that a prediction block may be generated by using a corresponding reference image list.

Reference Picture Index: It may refer to an index indicating a specific reference image in a reference image list.

Reference Picture: It may refer to an image referred to by a specific block for inter prediction or motion compensation. Alternatively, a reference image may be an image that includes a reference block referred to by a current block for inter prediction or motion compensation. Hereinafter, terms "reference picture" and "reference image" may be used with the same meaning, and may be used interchangeably.

Motion Vector: It may be a two-dimensional vector used for inter prediction or motion compensation. A motion vector may refer to an offset between an encoding/decoding target block and a reference block. For example, (mvX, mvY) may represent a motion vector. mvX may represent a horizontal component, and mvY may represent a vertical component.

Search Range: A search range may be a two-dimensional region where a motion vector is searched during inter prediction. For example, a size of a search range may be MxN. M and N may be a positive integer, respectively. In addition, for example, a shape of a search range may include not only a square, but also a geometric figure that may be expressed two-dimensionally such as a rectangle, a trapezoid, a triangle, a pentagon, etc.

Motion Vector Candidate: It may refer to a block which becomes a prediction candidate when predicting a motion vector, or a motion vector of that block. In addition, a motion vector candidate may be included in a motion vector candidate list.

Motion Vector Candidate List: It may refer to a list configured by using at least one motion vector candidate.

Motion Vector Candidate Index: It may refer to an indicator indicating a motion vector candidate in a motion vector candidate list. It may be an index of a motion vector predictor.

Motion Information: It may refer to information including at least one of a motion vector, a reference image index, an inter prediction indicator, a prediction list utilization flag, reference image list information, a reference image, a motion vector candidate, a motion vector candidate index, a merge candidate or a merge index.

Merge Candidate List: It may refer to a list configured by using at least one merge candidate.

Merge Candidate: It may refer to a spatial merge candidate, a temporal merge candidate, a combined merge candidate, a combined bi-prediction merge candidate, a zero merge candidate, etc. A merge candidate may include motion information such as an inter prediction indicator, a reference image index for each list, a motion vector, a prediction list utilization flag, an inter prediction indicator, etc.

Merge Index: It may refer to an indicator indicating a merge candidate in a merge candidate list. In addition, a merge index may indicate a block deriving a merge candidate among blocks reconstructed to be spatially/temporally adjacent to a current block. In addition, a merge index may indicate at least one of motion information of a merge candidate.

Transform Unit: It may refer to a basic unit when performing residual signal encoding/decoding, such as transform, inverse transform, quantization, dequantization and transform coefficient encoding/decoding. One transform unit may be divided into a plurality of sub-transform units having a smaller size. Here, transform/inverse transform may include at least one of primary transform/inverse transform or secondary transform/inverse transform.

Scaling: It may refer to a process of multiplying a conversion coefficient level by a factor. A transform coefficient may be generated as a result of scaling a transform coefficient level. Scaling may also be referred to as dequantization.

Quantization Parameter: It may refer to a value used when generating a transform coefficient level for a transform coefficient in quantization. Alternatively, it may also refer to a value used when generating a transform coefficient by scaling a transform coefficient level in dequantization. A quantization parameter may be a value mapped to a quantization step size.

Residual quantization parameter (Delta Quantization Parameter): It may refer to a difference value between a predicted quantization parameter and a quantization parameter of an encoding/decoding target unit.

Scan: It may refer to a method for sorting the order of coefficients in a unit, a block or a matrix. For example, sorting two-dimensional arrays into a one-dimensional array is referred to as scan. Alternatively, sorting one-dimensional arrays into a two-dimensional array may also be referred to as scan or inverse scan.

Transform Coefficient: It may refer to a coefficient value generated after performing transform in an encoder. Alternatively, it may refer to a coefficient value generated after performing at least one of entropy decoding or dequantization in a decoder. A quantized level or a quantized transform coefficient level obtained by applying quantization to a transform coefficient or a residual signal may also be included in the meaning of a transform coefficient.

Quantized Level: It may refer to a value generated by performing quantization on a transform coefficient or a residual signal in an encoder. Alternatively, it may refer to a value to be dequantized before performing dequantization in a decoder. Similarly, a quantized transform coefficient level, a result of transform and quantization, may also be included in the meaning of a quantized level.

Non-zero Transform Coefficient: It may refer to a transform coefficient whose value size is not 0 or a transform coefficient level whose value size is not 0.

Quantization Matrix: It may refer to a matrix used in a quantization or dequantization process to improve the subjective or objective image quality of an image. A quantization matrix may also be referred to as a scaling list.

Quantization Matrix Coefficient: It may refer to each element in a quantization matrix. A quantization matrix coefficient may also be referred to as a matrix coefficient.

Default Matrix: It may refer to a predetermined quantization matrix predefined in an encoder and a decoder.

Non-default Matrix: It may refer to a quantization matrix that is not predefined in an encoder and a decoder and is signaled by a user.

Statistical value: A statistical value for at least one of a variable, an encoding parameter or a constant having specific values that may be calculated may be at least one of an average value, a weighted average value, a weighted sum value, the minimum value, the maximum value, a mode, a median value or an interpolation value of corresponding specific values.

Neighbor block: A neighbor block may refer to a block adjacent to a target block. A neighbor block may include a spatial neighbor block and a temporal neighbor block. A neighbor block may refer to a reconstructed neighbor block in a reference image. A neighbor block does not necessarily have to be adjacent to a target block.

A spatial neighbor block: A spatial neighbor block may be a block spatially adjacent to a target block. A target block and a spatial neighbor block may be included in a target image. A spatial neighbor block may include a block that at least part of its boundary is in contact with at least part of a boundary of a target block. Alternatively, a spatial neighbor block may include a block that a distance from a target block is less than or equal to a reference value. A spatial neighbor block may include a block diagonally adjacent to a vertex of a target block. A spatial neighbor block may include a top-left block adjacent to the top-left of a target block, a top block adjacent to the top of a target block, a top-right block adjacent to the top-right of a target block, a left block adjacent to the left of a target block, a right block adjacent to the right of a target block, a bottom-left block adjacent to the bottom-left of a target block, a bottom block adjacent to the bottom of a target block and a bottom-right block adjacent to the bottom- right of a target block.

Temporal neighbor block: A temporal neighbor block may be a block temporally adjacent to a target block. A temporal neighbor block may include a collocated block (col block). A collocated block may be a block in a reconstructed image in a reference image buffer. A collocated picture (col picture) may refer to an image including a collocated block. A collocated picture may be an image included in a reference image list. A collocated block may be determined based on a position of a target block in a target image. When two blocks are 'temporally adjacent', it may mean that the positions of two blocks meet a certain condition. A position of a collocated block in a collocated image may be the same as a position of a target block in a target image. Alternatively, a position of a collocated block in a collocated image may correspond to a position of a target block in a target image. Here, when the positions of blocks correspond, it may mean that the regions of blocks are the same, that a region of one block is included in a region of another block or that one block occupies a specific position of another block. For example, a position of a collocated block in a collocated image may be the same as a position of a target block in a target image. Alternatively, a collocated block may be a block including a collocated pixel in a collocated image. A collocated pixel may be a pixel having the same coordinates as the coordinates of a specific pixel of a target block. A temporal neighbor block may be a block temporally adjacent to a spatial neighbor block of a target block.

Neighbor sample: A neighbor sample may refer to a sample within a neighbor block. A neighbor sample may include a prediction sample, a reconstructed sample, a residual sample and a decoded sample.

Below, terms listed in one line may be used with the same meaning in embodiments, and may be used interchangeably in embodiments.

"Motion information", "Motion vector", "Block vector"

"Bi-prediction", "Bidirectional prediction", "Inter bi-prediction", "Inter bidirectional prediction"

"IBC mode", "Intra block copy mode", "IBC", "Intra block copy"

Predefined value: A predefined value may refer to a value commonly used in an encoding device and a decoding device. For example, a predefined value may be interpreted by being limited to a fixed value. Alternatively, a predefined value may be a value shared between an encoding device and a decoding device through signaling. Alternatively, a predefined value may be a value derived through the same procedure in an encoding device and a decoding device so that an encoding device and a decoding device have a common value. Alternatively, a predefined value may be a common value held by an encoding device and a decoding device. The value derived through the same procedure in an encoding device and a decoding device may include a value derived through the same procedure for the same value and/or the same information in an encoding device and a decoding device. The value derived through the same procedure in an encoding device and a decoding device may include a value derived by using the same conditional statement for the same value and/or the same information in an encoding device and a decoding device. A description of the predefined value may also be applied to predefined information. In the descriptions, 'value' may be replaced with 'information'.

Motion information: Motion information may refer to information including at least one of reference picture list information, a reference image, a motion vector candidate, a motion vector candidate index, a merge candidate and a merge index, CPMV, a block vector, a block vector candidate or a block vector candidate index as well as a motion vector, a reference picture index and an inter prediction indicator.

In the present disclosure, "when an indicator indicating whether of a specific method is true" may mean that whether of the specific method is true for a prediction mode; motion information; a coding parameter; and/or a position indicated by a corresponding indicator. For example, an indicator indicating whether to perform a specific mode may have a value from 0 to 3, and the specific mode may be performed only when the indicator has a value of 1 or 3. In this case, when an indicator indicating whether to perform a specific mode is true, it means that an indicator indicating whether to perform a specific mode has a value of 1 or 3.

In the present disclosure, "when an indicator indicating whether of a specific method is false" means that an indicator indicating whether of a specific method is not true.

In embodiments, rearrangement for a specific target may refer to sorting specific targets or elements within a specific target.

In the present disclosure, "when an indicator indicating whether to perform a specific method (or mode) on a target block is true" and "when a specific method is performed on a target block" may be used with the same meaning, and may be replaced each other.

In the present disclosure, "when an indicator indicating whether to perform a specific method (or mode) on a target block is false" and "when a specific method is not performed on a target block" may be used with the same meaning, and may be replaced each other.

In the present disclosure, a matching cost may include a template matching cost and a bilateral matching cost.

In the present disclosure, "sample of (block or reference region or template)" may refer to all samples in (block or reference region or template), or may refer to at least one sample in (block or reference region or template).

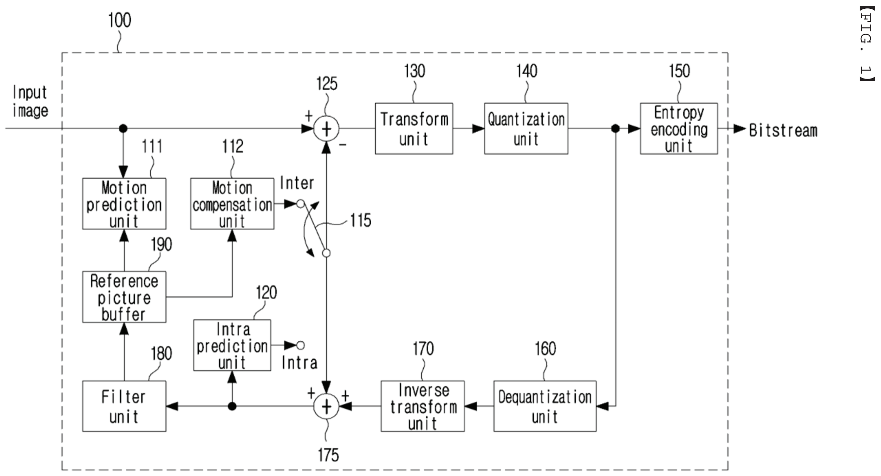

FIG. 1 is a block diagram showing a configuration according to an embodiment of an encoding device to which the present disclosure is applied.

An encoding device 100 may be an encoder, a video encoding device or an image encoding device. A video may include at least one image. An encoding device 100 may sequentially encode at least one image.

Referring to FIG. 1, an encoding device 100 may include a motion prediction unit 111, a motion compensation unit 112, an intra prediction unit 120, a switch 115, a subtractor 125, a transform unit 130, a quantization unit 140, an entropy encoding unit 150, a dequantization unit 160, an inverse transform unit 170, an adder 175, a filter unit 180 and a reference picture buffer 190.

An encoding device 100 may perform encoding on an input image in an intra mode and/or an inter mode. In addition, an encoding device 100 may generate a bitstream including encoded information through encoding for an input image and output a generated bitstream. A generated bitstream may be stored in a computer-readable recording medium, or may be streamed through a wired/wireless transmission medium. When an intra mode is used as a prediction mode, a switch 115 may be switched in an intra mode, and when an inter mode is used as a prediction mode, a switch 115 may be switched in an inter mode. Here, an intra mode may refer to an intra prediction mode, and an inter mode may refer to an inter prediction mode. An encoding device 100 may generate a prediction block for an input block of an input image. In addition, after a prediction block is generated, an encoding device 100 may encode a residual block by using a residual between an input block and a prediction block. An input image may be referred to as a current image that is currently a target of encoding. An input block may be referred to as a current block that is currently a target of encoding or an encoding target block.

When a prediction mode is an intra mode, an intra prediction unit 120 may use a sample of a block that was already encoded/decoded around a current block as a reference sample. An intra prediction unit 120 may perform spatial prediction for a current block by using a reference sample, and generate prediction samples for an input block through spatial prediction. Here, intra prediction may refer to intra prediction.

When a prediction mode is an inter mode, a motion prediction unit 111 may search for a region that best matches an input block from a reference image in a motion prediction process, and derive a motion vector by using a searched region. In this case, a search range may be used as the region. A reference image may be stored in a reference picture buffer 190. Here, when a reference image is encoded/decoded, it may be stored in a reference picture buffer 190.

A motion compensation unit 112 may generate a prediction block for a current block by performing motion compensation using a motion vector. Here, inter prediction may refer to inter prediction or motion compensation.

When a value of a motion vector does not have an integer value, the motion prediction unit 111 and the motion compensation unit 112 may generate a prediction block by applying an interpolation filter to some regions in a reference image. In order to perform inter prediction or motion compensation, whether a motion prediction and motion compensation method of a prediction unit included in a corresponding coding unit is a skip mode, a merge mode, an advanced motion vector prediction (AMVP) mode or a current picture reference mode may be determined based on a coding unit, and inter prediction or motion compensation may be performed according to each mode.

A subtractor 125 may generate a residual block by using a difference between an input block and a prediction block. A residual block may also be referred to as a residual signal. A residual signal may refer to a difference between an original signal and a prediction signal. Alternatively, a residual signal may transform or quantize or may be a signal generated by transforming or quantizing a difference between an original signal and a prediction signal. A residual block may be a residual signal in a unit of a block.

A transform unit 130 may generate a transform coefficient by performing transform on a residual block, and output a generated transform coefficient. Here, a transform coefficient may be a coefficient value generated by performing transform on a residual block. When a transform skip mode is applied, a transform unit 130 may skip transform for a residual block.

A quantized level may be generated by applying quantization to a transform coefficient or a residual signal. Hereinafter, in embodiments, a quantized level may also be referred to as a transform coefficient.

A quantization unit 140 may generate a quantized level by quantizing a transform coefficient or a residual signal according to a quantization parameter, and output a generated quantized level. In this case, a quantization unit 140 may quantize a transform coefficient by using a quantization matrix.

An entropy encoding unit 150 may generate a bitstream by performing entropy encoding according to a probability distribution on values calculated in a quantization unit 140 or coding parameter values calculated in an encoding process, and output a bitstream. An entropy encoding unit 150 may perform entropy encoding on information about an image sample and information for decoding an image. For example, information for decoding an image may include a syntax element, etc.

When entropy encoding is applied, a small number of bits may be allocated to a symbol with a high probability of occurrence and a large number of bits may be allocated to a symbol with a low probability of occurrence to express a symbol, reducing a size of a bit column for symbols to be encoded. An entropy encoding unit 150 may use an encoding method such as exponential Golomb, CAVLC (Context-Adaptive Variable Length Coding) and CABAC (Context-Adaptive Binary Arithmetic Coding) for entropy encoding. For example, an entropy encoding unit 150 may perform entropy encoding by using a variable length coding/code (VLC) table. In addition, an entropy encoding unit 150 may derive a binarization method of a target symbol and a probability model of a target symbol/bin, and then use a derived binarization method, probability model and context model to perform arithmetic coding.

An entropy encoding unit 150 may change a two-dimensional block form coefficient into a one-dimensional vector form through a transform coefficient scanning method to encode a transform coefficient level.

A coding parameter may include information derived from an encoding process or a decoding process as well as information (a flag, an index, etc.) encoded in an encoder and signaled to a decoder like a syntax element, and may refer to information needed when encoding or decoding an image. For example, a coding parameter may include at least one value or combined form of a unit/block size, a unit/block depth, unit/block division information, a unit/block division structure, division in a quad tree form, division in binary tree form, a division direction in a binary tree form (a horizontal direction or a vertical direction), a division form in a binary tree form (symmetric division or asymmetric division), a prediction mode (intra prediction or inter prediction), an intra prediction mode/direction, a reference sample filtering method, a reference sample filter tab, a reference sample filter coefficient, a prediction block filtering method, a prediction block filter tab, a prediction block filter coefficient, a prediction block boundary filtering method, a prediction block boundary filter tab, a prediction block boundary filter coefficient, an inter prediction mode, motion information, a motion vector, a reference image index, an inter prediction direction, an inter prediction indicator, a prediction list utilization flag, a reference image list, a reference image, a motion vector prediction candidate, a motion vector candidate list, whether to use a merge mode, a merge candidate, a merge candidate list, whether to use a skip mode, an interpolation filter type, an interpolation filter tab, an interpolation filter coefficient, a motion vector size, motion vector expression accuracy, a transform type, a transform size, information on whether to use primary transform, information on whether to use secondary transform, a primary transform index, a secondary transform index, information on whether there is a residual signal, a coded block pattern, a coded block flag, a quantization parameter, a quantization matrix, whether to apply an intra loop filter, an intra loop filter coefficient, an intra loop filter tab, an intra loop filter shape/form, whether to apply a deblocking filter, a deblocking filter coefficient, a deblocking filter tab, a deblocking filter strength, a deblocking filter shape/form, whether to apply an adaptive sample offset, an adaptive sample offset value, an adaptive sample offset category, an adaptive sample offset type, whether to apply an adaptive loop filter, an adaptive loop filter coefficient, an adaptive loop filter tab, an adaptive loop filter shape/form, a binarization/debinarization method, a context model determination method, a context model update method, whether to perform a regular mode, whether to perform a bypass mode, a context bin, a bypass bin, a transform coefficient, a transform coefficient level, a quantized level, a transform coefficient level scanning method, an image display/output order, slice identification information, a slice type, slice division information, tile identification information, a tile type, tile division information, a picture type, a bit depth, information on a luma signal or information on a chroma signal.

Here, signaling a flag or an index may mean in an encoder that a corresponding flag or index is entropy-encoded and included in a bitstream, and may mean in a decoder that a corresponding flag or index is entropy-decoded from a bitstream.

When an encoding device 100 performs encoding through inter prediction, an encoded current image may be used as a reference image for another image processed later. Accordingly, an encoding device 100 may reconstruct or decode a current encoded image, and store a reconstructed or decoded image as a reference image in a reference picture buffer 190.

A quantized level may be dequantized in a dequantization unit 160 and may be inversely transformed in an inverse transform unit 170. A dequantized and/or inversely transformed coefficient may be combined with a prediction block through an adder 175. A reconstructed block may be generated by combining a dequantized and/or inversely transformed coefficient with a prediction block. Here, a dequantized and/or inversely transformed coefficient refers to a coefficient that at least one of dequantization or inverse transform is performed, and may refer to a reconstructed residual block.

A reconstructed block may pass through a filter unit 180. A filter unit 180 may apply at least one of a deblocking filter, a sample adaptive offset (SAO), an adaptive loop filter (ALF), etc. to a reconstructed sample, a reconstructed block or a reconstructed image. A filter unit 180 may also be referred to as an in-loop filter.

A deblocking filter may remove block distortion generated at a boundary between blocks. To determine whether to perform a deblocking filter, whether to apply a deblocking filter to a current block may be determined based on a sample included in several columns or rows included in a block. When a deblocking filter is applied to a block, a different filter may be applied according to a required deblocking filtering strength.

A sample adaptive offset may be used to add an appropriate offset value to a sample value in order to compensate for an encoding error. A sample adaptive offset may correct an offset with an original image in a unit of a sample for an image that deblocking is performed. A method for dividing a sample included in an image into a certain number of regions, determining a region where an offset will be performed and applying an offset to a corresponding region or a method for applying an offset by considering the edge information of each sample may be used.

An adaptive loop filter may perform filtering based on a value obtained by comparing a reconstructed image and an original image. After dividing a sample included in an image into predetermined groups, filtering may be performed differentially for each group by determining a filter to be applied to a corresponding group. Information related to whether to apply an adaptive loop filter may be signaled for each coding unit (CU), and a shape and a filter coefficient of an adaptive loop filter to be applied may vary depending on each block.

A reconstructed block or a reconstructed image that passed through a filter unit 180 may be stored in a reference picture buffer 190. A reconstructed block that passed through a filter unit 180 may be part of a reference image. In other words, a reference image may be a reconstructed image composed of reconstructed blocks that passed through a filter unit 180. Subsequently, a stored reference image may be used for inter prediction or motion compensation.

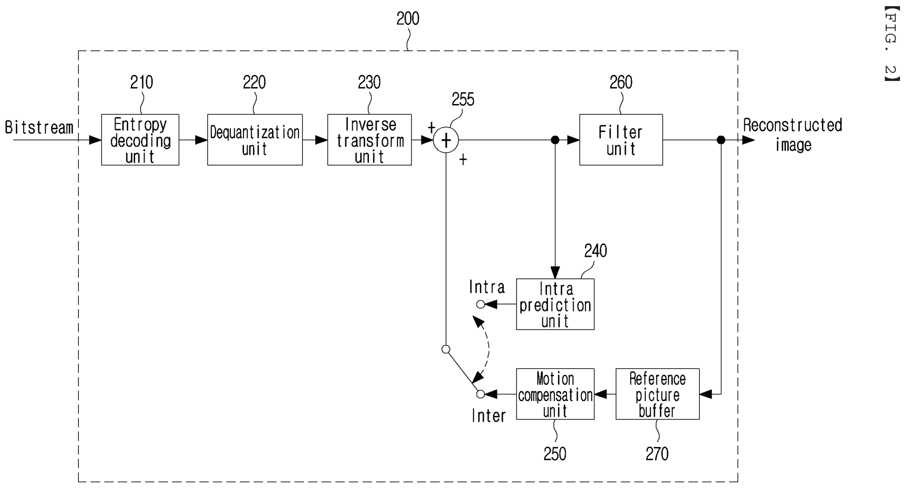

FIG. 2 is a block diagram showing a configuration according to an embodiment of a decoding device to which the present disclosure is applied.

A decoding device 200 may be a decoder, a video decoding device or an image decoding device.

Referring to FIG. 2, a decoding device 200 may include an entropy decoding unit 210, a dequantization unit 220, an inverse transform unit 230, an intra prediction unit 240, a motion compensation unit 250, an adder 255, a filter unit 260 and a reference picture buffer 270.

A decoding device 200 may receive a bitstream output from an encoding device 100. A decoding device 200 may receive a bitstream stored in a computer-readable recording medium or receive a bitstream streamed through a wired/wireless transmission medium. A decoding device 200 may perform decoding on a bitstream in an intra mode or an inter mode. In addition, a decoding device 200 may generate a reconstructed image or a decoded image through decoding, and output a reconstructed image or a decoded image.

If a prediction mode used for decoding is an intra mode, a switch may be switched in an intra mode. If a prediction mode used for decoding is an inter mode, a switch may be switched in an inter mode.

A decoding device 200 may decode an input bitstream to obtain a reconstructed residual block, and generate a prediction block. When a reconstructed residual block and a prediction block are obtained, a decoding device 200 may generate a reconstructed block to be decoded by adding a reconstructed residual block and a prediction block. A block to be decoded may be referred to as a current block.

An entropy decoding unit 210 may generate symbols by performing entropy decoding according to a probability distribution for a bitstream. Generated symbols may include a symbol in a form of a quantized level. Here, an entropy decoding method may be an reverse process of an entropy encoding method described above.

An entropy decoding unit 210 may change a one-dimensional vector form coefficient into a two-dimensional block form through a transform coefficient scanning method in order to decode a transform coefficient level.

A quantized level may be dequantized in a dequantization unit 220, and may be inversely transformed in an inverse transform unit 230. A quantized level is a result of performing dequantization and/or inverse transform, and may be generated as a reconstructed residual block. In this case, a dequantization unit 220 may apply a quantization matrix to a quantized level.

When an intra mode is used, an intra prediction unit 240 may generate a prediction block by performing on a current block spatial prediction using a sample value of an already decoded block around a block to be decoded.

When an inter mode is used, a motion compensation unit 250 may generate a prediction block by performing on a current block motion compensation using a motion vector and a reference image stored in a reference picture buffer 270. When a value of a motion vector does not have an integer value, the motion compensation unit 250 may generate a prediction block by applying an interpolation filter to a partial region in a reference image. To perform motion compensation, whether a motion compensation method of a prediction unit included in a corresponding coding unit is a skip mode, a merge mode, an AMVP mode or a current picture reference mode may be determined based on a coding unit, and motion compensation may be performed according to each mode.

An adder 255 may generate a reconstructed block by adding a reconstructed residual block and a prediction block. A filter unit 260 may apply at least one of a deblocking filter, a sample adaptive offset or an adaptive loop filter to a reconstructed block or a reconstructed image. A filter unit 260 may output a reconstructed image. A reconstructed block or a reconstructed image may be stored in a reference picture buffer 270 and used for inter prediction. A reconstructed block that passed through a filter unit 260 may be part of a reference image. In other words, a reference image may be a reconstructed image composed of reconstructed blocks that passed through a filter unit 260. Subsequently, a stored reference image may be used for inter prediction or motion compensation.

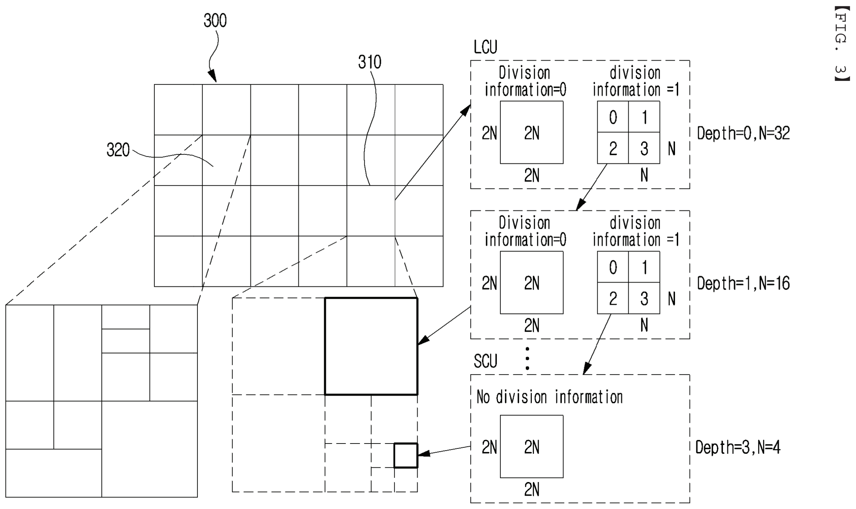

FIG. 3 is a diagram roughly showing a division structure of an image when encoding and decoding an image. FIG. 3 roughly shows an embodiment in which one unit is divided into a plurality of sub-units.

In order to efficiently divide an image, a coding unit (CU) may be used in encoding and decoding. A coding unit may be used as a basic unit of image encoding/decoding. In addition, in encoding/decoding an image, a coding unit may be used as a unit for distinguishing between an intra prediction mode and an inter prediction mode. A coding unit may be a basic unit used for a process of prediction, transform, quantization, inverse transform, dequantization, or encoding/decoding of a transform coefficient.

Referring to FIG. 3, an image 300 is sequentially divided in a unit of a largest coding unit (LCU), and a division structure is determined in a unit of a LCU. Here, a LCU may be used in the same meaning as a coding tree unit (CTU). Division of a unit may refer to division of a block corresponding to a unit. Block division information may include information about a depth of a unit. Depth information may represent the number and/or degree of unit divisions. One unit may be hierarchically divided into a plurality of sub-units with depth information based on a tree structure. In other words, a unit and a sub-unit generated by division of the unit may correspond to a node and a child node of the node, respectively. Each divided sub-unit may have depth information. Depth information may be information showing a size of a CU, and may be stored for each CU. Since a unit depth represents the number and/or degree of unit divisions, division information of a sub-unit may also include information about a size of a sub-unit.

A division structure may refer to distribution of coding units (CU) within a LCU 310. This distribution may be determined according to whether to divide one CU into a plurality of CUs (an positive integer equal to or greater than 2, including 2, 4, 8, 16, etc.). A horizontal size and a vertical size of a CU generated by division may be half a horizontal size and half a vertical size of a CU before division, respectively, or may have a size smaller than a horizontal size and a size smaller than a vertical size of a CU before division according to the number of divisions. A CU may be recursively divided into a plurality of CUs. By recursive division, at least one of a horizontal size or a vertical size of a divided CU may be reduced compared to at least one of a horizontal size or a vertical size of a CU before division. Division of a CU may be performed recursively up to a predefined depth or a predefined size. For example, a depth of a LCU may be 0, and a depth of a smallest coding unit (SCU) may be a predefined maximum depth. Here, a LCU may be a coding unit with the maximum coding unit size as described above, and a SCU may be a coding unit with the minimum coding unit size. Division begins from a LCU 310, and a depth of a CU increases by 1 each time a horizontal size and/or a vertical size of a CU decreases due to division. For example, for each depth, an undivided CU may have a size of 2Nx2N. In addition, for a divided CU, a CU with a size of 2Nx2N may be divided into 4 CUs with a size of NxN. A size of N may be reduced by half each time a depth increases by 1.

In addition, information about whether a CU is divided may be expressed through division information of a CU. Division information may be 1-bit information. All CUs excepting a SCU may include division information. For example, if a value of division information is a first value, a CU may not be divided, and if a value of division information is a second value, a CU may be divided.

Referring to FIG. 3, a LCU with a depth of 0 may be a 64x64 block. 0 may be the minimum depth. A SCU with a depth of 3 may be a 8x8 block. 3 may be the maximum depth. A CU of a 32x32 block and a 16x16 block may be expressed as depth 1 and depth 2, respectively.

For example, when one coding unit is divided into four coding units, a horizontal size and a vertical size of four divided coding units may be half a size compared to a horizontal size and a vertical size of a coding unit before division. For example, when a 32x32-sized coding unit is divided into four coding units, each of four divided coding units may have a size of 16x16. When one coding unit is divided into four coding units, a coding unit may be said to be divided in a form of a quad-tree.

For example, when one coding unit is divided into two coding units, a horizontal size or a vertical size of two divided coding units may be half a size compared to a horizontal size or a vertical size of a coding unit before division. As an example, when a 32x32-sized coding unit is vertically divided into two coding units, each of two divided coding units may have a size of 16x32. When one coding unit is divided into two coding units, a coding unit may be said to be divided in a form of a binary tree. A LCU 320 of FIG. 3 is an example of a LCU to which both division in a quad tree form and division in a binary tree form are applied.

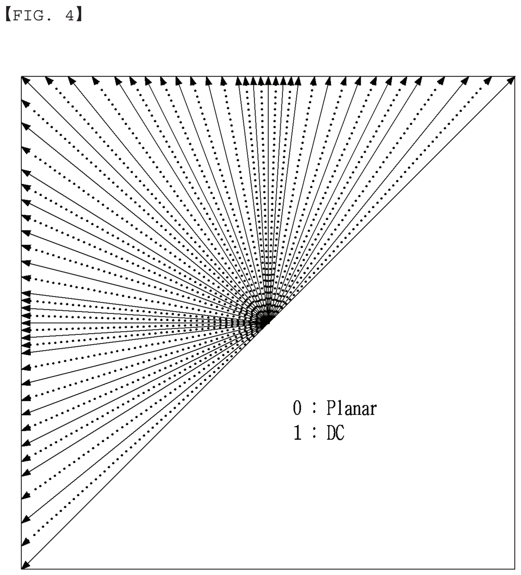

FIG. 4 is a diagram for describing an embodiment of an intra prediction process.

Arrows from the center to the outside of FIG. 4 may represent prediction directions of intra prediction modes.

Intra encoding and/or decoding may be performed by using a reference sample of a neighbor block of a current block. A neighbor block may be a reconstructed neighbor block. For example, intra encoding and/or decoding may be performed by using a value or an encoding parameter of a reference sample included in a reconstructed neighbor block.

A prediction block may refer to a block generated as a result of performing intra prediction. A prediction block may correspond to at least one of a CU, a PU or a TU. A unit of a prediction block may be a size of at least one of a CU, a PU or a TU. A prediction block may be a square block with a size of 2x2, 4x4, 16x16, 32x32, 64x64, etc., or may be a rectangular block with a size of 2x8, 4x8, 2x16, 4x16, 8x16, etc.

Intra prediction may be performed according to an intra prediction mode for a current block. The number of intra prediction modes that a current block may have may be a predefined fixed value, or may be a value that is determined differently according to an attribute of a prediction block. For example, an attribute of a prediction block may include a size of a prediction block, a form of a prediction block, etc.

The number of intra prediction modes may be fixed to N regardless of a block size. Alternatively, for example, the number of intra prediction modes may be 3, 5, 9, 17, 34, 35, 36, 65, or 67, etc. Alternatively, the number of intra prediction modes may vary depending on a size of a block and/or a type of a color component. For example, the number of intra prediction modes may vary depending on whether a color component is a luma signal or a chroma signal. For example, as a size of a block increases, the number of intra prediction modes may increase. Alternatively, the number of intra prediction modes of a luma component block may be greater than the number of intra prediction modes of a chroma component block.

An intra prediction mode may be a non-directional mode or a directional mode. A non-directional mode may be a DC mode or a planar mode, and a directional mode (an angular mode) may be a prediction mode with a specific direction or angle. The intra prediction mode may be expressed as at least one of a mode number, a mode value, a mode number, a mode angle or a mode direction. The number of intra prediction modes may be M equal to or greater than one, including the non-directional mode and the directional mode.

For intra prediction for a current block, whether samples included in a reconstructed neighbor block may be used as a reference sample of a current block may be checked. If there is a sample that may not be used as a reference sample of a current block, it may be used as a reference sample of a current block after a sample value of at least one of samples included in a reconstructed neighbor block is replaced with a sample value of a sample that may not be used as a reference sample by using a copied and/or interpolated value.

During intra prediction, a filter may be applied to at least one of a reference sample or a prediction sample based on at least one of an intra prediction mode or a size of a current block.

For a planar mode, when generating a prediction block of a current block, according to a position of a prediction target sample in a prediction block, a sample value of a prediction target sample may be generated by using a weighted sum of a top reference sample and a left reference sample of a current sample and a top-right reference sample and a bottom-left reference sample of a current block. In addition, for a DC mode, when generating a prediction block of a current block, an average value of top and left reference samples of a current block may be used. In addition, for a directional mode, a prediction block may be generated by using a top, left, top-right and/or bottom-left reference sample of a current block. Interpolation in a unit or a real number may be also performed to generate a prediction sample value.

An intra prediction mode of a current block may be predicted from an intra prediction mode of a block existing around a current block and may be entropy-encoded/decoded. If an intra screen prediction mode of a current block is the same as an intra prediction mode of a neighbor block, information that an intra prediction mode of a current block is the same as an intra prediction mode of a neighbor block may be signaled by using predetermined flag information. In addition, indicator information for the same intra prediction mode as an intra prediction mode of a current block among the intra prediction modes of a plurality of neighbor blocks may be signaled. If an intra prediction mode of a current block is different from an intra prediction mode of a neighbor block, intra prediction mode information of a current block may be entropy-encoded/decoded by performing entropy encoding/decoding based on an intra prediction mode of a neighbor block.

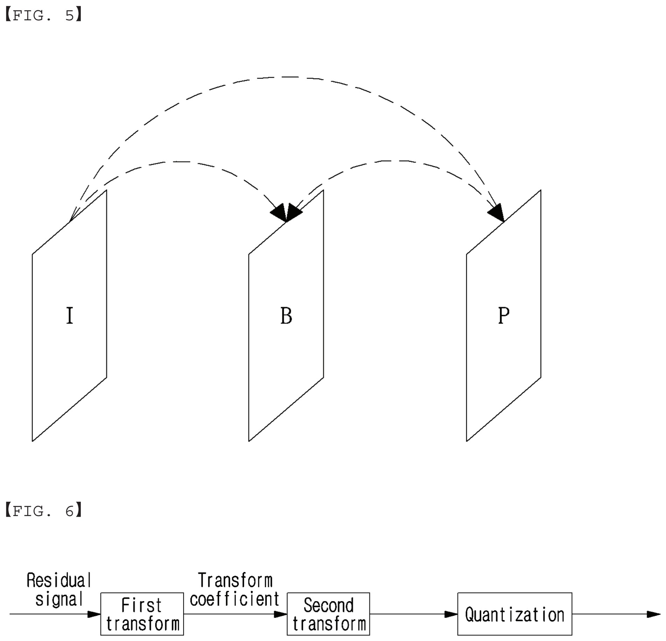

FIG. 5 is a diagram for describing an embodiment of an inter prediction process.

A square shown in FIG. 5 may represent an image. In addition, in FIG. 5, an arrow may represent a prediction direction. Each image may be classified into I-picture (Intra Picture), P-picture (Predictive Picture), B-picture (Bi-predictive Picture), etc. according to an encoding type.

An I-picture may be encoded/decoded through intra prediction without inter prediction. A P picture may be encoded/decoded through inter prediction using only a reference image that exists in an unilateral direction (e.g., a forward direction or a reverse direction). A B picture may be encoded/decoded through inter prediction using reference images that exist in a bilateral direction (e.g., a forward direction and a reverse direction). In addition, for a B picture, it may be encoded/decoded through inter prediction using reference images that exist in a bilateral direction or inter prediction using a reference image that exists in one of a forward direction and a reverse direction. Here, a bilateral direction may be forward and reverse. Here, when inter prediction is used, an encoder may perform inter prediction or motion compensation, and a decoder may perform motion compensation corresponding thereto.

Below, inter prediction according to an embodiment is described in detail.

Inter prediction or motion compensation may be performed by using a reference image and motion information.

Motion information for a current block may be derived during inter prediction by each of an encoding device 100 and a decoding device 200. Motion information may be derived by using motion information of a reconstructed neighbor block, motion information of a collocated block (col block) and/or a block adjacent to a collocated block. A collocated block may be a block corresponding to a spatial position of a current block within an already reconstructed collocated picture (col picture). Here, a collocated picture may be one picture among at least one reference image included in a reference image list.

A method for deriving motion information may vary depending on a prediction mode of a current block. For example, a prediction mode applied for inter prediction may include an AMVP mode, a merge mode, a skip mode, a current picture reference mode, etc. Here, a merge mode may be referred to as a motion merge mode.

For example, when AMVP is applied as a prediction mode, a motion vector candidate list may be generated by determining at least one of a motion vector of a reconstructed neighbor block, a motion vector of a collocated block, a motion vector of a block adjacent to a collocated block or a (0, 0) motion vector as a motion vector candidate. A motion vector candidate may be derived by using a generated motion vector candidate list. The motion information of a current block may be determined based on a derived motion vector candidate. Here, a motion vector of a collocated block or a motion vector of a block adjacent to a collocated block may be referred to as a temporal motion vector candidate, and a motion vector of a reconstructed neighbor block may be referred to as a spatial motion vector candidate.

An encoding device 100 may calculate a motion vector difference (MVD) between a motion vector of a current block and a motion vector candidate and entropy encode a MVD. **In** addition, an encoding device 100 may generate a bitstream by entropy encoding a motion vector candidate index. A motion vector candidate index may indicate an optimal motion vector candidate selected among motion vector candidates included in a motion vector candidate list. A decoding device 200 may entropy-decode a motion vector candidate index from a bitstream, and select a motion vector candidate of a decoding target block among the motion vector candidates included in a motion vector candidate list by using an entropy-decoded motion vector candidate index. In addition, a decoding device 200 may derive a motion vector of a decoding target block through the sum of an entropy-decoded MVD and a motion vector candidate.

A bitstream may include a reference image index, etc. indicating a reference image. A reference image index may be entropy-encoded and signaled from an encoding device 100 to a decoding device 200 through a bitstream. A decoding device 200 may generate a prediction block for a decoding target block based on a derived motion vector and reference image index information.

Another example of a method for deriving motion information is a merge mode. A merge mode may refer to merging a movement for a plurality of blocks. A merge mode may refer to a mode in which motion information of a current block is derived from motion information of a neighbor block. When a merge mode is applied, a merge candidate list may be generated by using motion information of a reconstructed neighbor block and/or motion information of a collocated block. Motion information may include at least one of 1) a motion vector, 2) a reference image index or 3) an inter prediction indicator. A prediction indicator may be unidirectional (L0 prediction, L1 prediction) or bidirectional.

A merge candidate list may represent a list where motion information is stored. Motion information stored in a merge candidate list may be at least one of motion information of a neighbor block adjacent to a current block (a spatial merge candidate) and motion information of a block collocated to a current block in a reference image (a temporal merge candidate), new motion information generated by a combination of motion information already existing in a merge candidate list or a zero merge candidate.

An encoding device 100 may generate a bitstream by entropy encoding at least one of a merge flag or a merge index, and then signal it to a decoding device 200. A merge flag may be information representing whether to perform a merge mode for each block, and a merge index may be information about which block will be merged among neighbor blocks adjacent to a current block. For example, neighbor blocks of a current block may include at least one of a left adjacent block, a top adjacent block or a temporal adjacent block of a current block.

A skip mode may be a mode in which motion information of a neighbor block is applied to a current block as it is. When a skip mode is used, an encoding device 100 may entropy-encode information about motion information of a block that will be used as motion information of a current block and signal it to a decoding device 200 through a bitstream. In this case, an encoding device 100 may not signal a syntax element regarding at least one of motion vector difference information, a coding block flag or a transform coefficient level to a decoding device 200.

A current picture reference mode may refer to a prediction mode using a pre-reconstructed region within a current picture to which a current block belongs. In this case, a vector may be defined to specify the pre-reconstructed region. Whether a current block is encoded in a current picture reference mode may be encoded by using a reference image index of a current block. A flag or an index representing whether a current block is a block encoded in a current picture reference mode may be signaled, or may be inferred through a reference image index of a current block. If a current block is encoded in a current picture reference mode, a current picture may be added to a fixed position or a random position within a reference image list for a current block. For example, the fixed position may be a position where a reference image index is 0 or the last position. When a current picture is added to a random position in a reference image list, a separate reference image index showing the random position may be signaled.

FIG. 6 is a diagram for describing a process of transform and quantization.

As shown in FIG. 6, a quantized level may be generated by performing a transform and/or quantization process on a residual signal. The residual signal may be generated as a difference between an original block and a prediction block (an intra prediction block or an inter prediction block). Here, a prediction block may be a block generated by intra prediction or inter prediction. Here, transform may include at least one of primary transform or secondary transform. A transform coefficient may be generated by performing primary transform on a residual signal, and a secondary transform coefficient may be generated by performing secondary transform on a transform coefficient.

Primary Transform may be performed by using at least one of a plurality of pre-defined transform methods. As an example, a plurality of pre-defined transform methods may include Discrete Cosine Transform (DCT), Discrete Sine Transform (DST), or Karhunen Loeve Transform (KLT)-based transform, etc. Secondary transform may be performed on a transform coefficient generated after primary transform is performed. A transform method applied during primary transform and/or secondary transform may be determined according to at least one of an encoding parameter of a current block and/or a neighbor block. Alternatively, transform information indicating a transform method may be signaled.

A quantized level may be generated by performing quantization on a residual signal or a result of performing primary transform and/or secondary transform. A quantized level may be scanned according to at least one of top-right diagonal scan, vertical scan or horizontal scan based on at least one of an intra prediction mode or a block size/form. For example, a coefficient of a block may be scanned by using top-right (upright) diagonal scanning to change it into an one-dimensional vector form. According to a size of a transform block and/or an intra prediction mode, vertical scan that scans a two-dimensional block-type coefficient in a column direction or horizontal scan that scans a two-dimensional block-type coefficient in a row direction may be used instead of top-right diagonal scan. A scanned quantization level may be entropy-encoded and included in a bitstream.

A decoder may generate a quantized level by entropy decoding a bitstream. Quantized levels may be inverse scanned and arranged in a two-dimensional block form. In this case, at least one of top-right diagonal scan, vertical scan or horizontal scan may be performed as a inverse scanning method.

Dequantization may be performed on a quantized level, secondary inverse transform may be performed according to whether secondary inverse transform is performed, and a reconstructed residual signal may be generated by performing primary inverse transform according to whether primary inverse transform is performed on a result of performing secondary inverse transform.

Hereinafter, adaptive motion vector resolution (AMVR) and adaptive block vector resolution (ABVR) will be described.

In embodiments, a term "resolution" may refer to a term "motion vector resolution".

In adaptive motion vector resolution, the resolution of a motion vector difference may be adjusted in a unit of a block.

Adaptive motion vector resolution information may represent the resolution of a motion vector difference. The resolution of a motion vector difference for a target block may be determined through signaling/encoding/decoding of adaptive motion vector resolution information.

Information related to adaptive motion vector resolution may include at least one of an indicator indicating whether to use adaptive motion vector resolution, an index for indicating motion vector resolution, the number of resolution candidates in adaptive motion vector resolution or a type of a resolution candidate in adaptive motion vector resolution. As an example, if an indicator indicating whether to use adaptive motion vector resolution in a target block is true, an index for indicating motion vector resolution in a target block may be signaled/encoded/decoded.

Motion vector resolutions applicable to blocks may be the same or different.

For example, resolutions of a motion vector applicable to a target block may be determined based on at least one of a coding parameter, motion information or mode information of a target block.

Adaptive motion vector resolution may improve encoding efficiency by adjusting the resolution of a motion vector difference.

For example, adjusted resolution may be one of a 16-pel, a 8-pel, a 4-pel, a full-pel, a half-pel and a quarter-pel, and it is not limited to pels listed above.

When adjusted resolution is a n-pel, a position indicated by a motion vector difference if a value of a component of a motion vector difference is changed by 1 may be changed by n pixel(s). In other words, if adjusted resolution of a target block is a n-pel, each component of a motion vector difference may indicate a reference block in a unit of n pixels.

For example, if a motion vector difference that should be actually applied to a target block is (a, b) and adjusted resolution is a p-pel, (a/p, b/p), not (a, b), may be encoded. In other words, a motion vector difference signaled/encoded in an encoding device may be (a/p, b/p). A decoding device may derive an original motion vector difference (a, b) again by multiplying a signaled motion vector difference (a/p, b/p) by p.

Embodiments for an inter prediction mode in the present disclosure may be expanded.

First, in that a specific reconstructed block is referred to for prediction of a target block, an inter prediction mode, an intra block copy (IBC) mode and an intra template matching prediction mode may have common characteristics.

Accordingly, in embodiments, an inter prediction mode may be replaced with an IBC mode or an intra template matching mode. A description for a case in which an inter prediction mode is used for a target block may also be applied when an IBC mode or an intra template matching mode is used for a target block. A description for an inter prediction mode may be applied to an IBC mode or an intra template matching mode, and an inter prediction mode may be replaced with an IBC mode or an intra template matching mode. In addition, information related to an inter prediction mode may be considered as information related to an IBC mode or an intra template matching mode. A description for information related to an inter prediction mode may be applied to information related to an IBC mode or an intra template matching mode. For example, when an IBC mode or an intra template matching mode is used for a target block, a value of an inter prediction mode indicator may be 0 (or false). However, in this case, a value of an IBC mode indicator or an intra template matching mode indicator may be 1 (or true).

In addition, in embodiments, a motion vector (MV) of inter prediction may be replaced with a block vector (BV) of IBC. A description for a case in which a MV is used for a target block may also be applied when a BV is used for a target block. A description for a MV may be applied to a BV, and a MV may be replaced with a BV. In addition, information related to a MV may be considered information related to a BV. A description for information related to a MV may be applied to information related to a BV. However, a BV may be information indicating a specific reconstructed block in a target image including a target block, not a reference image.

Accordingly, a description for the adaptive motion vector resolution (AMVR) may be also applied to adaptive block vector resolution (ABVR) by replacing a motion vector with a block vector.

In embodiments related to an inter prediction mode, it was described that a reference block and a reference template of template matching exist in a reference image. On the other hand, when an IBC mode or an intra template matching mode is used for a target block, a reference block and a reference template may exist only in a target image. Accordingly, in embodiments, a reference image described in relation to an inter prediction mode may be considered as a target image in an IBC mode and an intra template matching mode. Alternatively, in embodiments, a reference image described in relation to an inter prediction mode may be limited to a target image in an IBC mode and an intra template matching mode, and an image other than a target image may not be referred to in an IBC mode and an intra template matching mode.

In that a reference block of a target block is determined based on a block vector of a target block and a prediction block of a target block is determined based on a reference block of a determined target block, IBC and intra template matching methods may have common characteristics.

Accordingly, in embodiments, IBC may be replaced with intra template matching. A description for a case in which an IBC mode is used for a target block may also be applied when an intra template matching mode is used for a target block. A description for an IBC mode may be applied to an intra template matching mode, and an IBC mode may be replaced with an intra template matching mode. In addition, information related to an IBC mode may be considered as information related to an intra template matching mode. A description for information related to an IBC mode may be applied to information related to an intra template matching mode.

An IBC mode may include at least one of an IBC merge mode, an IBC-AMVP mode, an IBC mode in a unit of a sub-block or an IBC-MBVD mode.

In embodiments, intra template matching may be replaced with IBC. A description for a case in which an intra template matching mode is used for a target block may also be applied when an IBC mode is used for a target block. A description for an intra template matching mode may be applied to an IBC mode, and an intra template matching mode may be replaced with an IBC mode. In addition, information related to an intra template matching mode may be considered as information related to an IBC mode. A description for information related to an intra template matching mode may be applied to information related to an IBC mode.

An intra template matching mode may include at least one of an intra template matching mode in a unit of all blocks (i.e., an intra template matching mode not in a unit of a sub-block), a template matching mode in a unit of a sub-block or an IBC template matching mode.

Hereinafter, a subsampling method will be described. When subsampling is performed, it may mean that only some samples are selected among samples within a specific region.

A subsampling method may be applied in various ways in a prediction stage, a transform stage, a reconstruction stage, etc., and may be applied to various filters (a down sample filter, an up sample filter, a reference sample filter, a filter at a unit boundary, an interpolation filter, a low-pass filter, a high-pass filter, etc.) and technologies of the present disclosure for selecting some samples among samples within a specific region, such as motion vector adjustment, etc.

When subsampling is performed, it may mean that 1) a SUBSAMPLE_START_HOR-th sample in a horizontal direction and a SUBSAMPLE_START_VER-th sample in a vertical direction are selected based on a specific sample; and 2) a sample whose sample interval is a multiple of SUBSAMPLE_STEP_HOR in a horizontal direction and a multiple of SUBSAMPLE_STEP_VER in a vertical direction is selected based on a sample in 1), when only some of samples in a specific region are selected. Alternatively, when subsampling is performed, it may mean that part of the sample in 1) and the sample in 2) is selected. A position of the specific sample may be a top-left sample, a bottom-left sample, a bottom-right sample or a top-right sample of a region where subsampling is performed. However, a position of a specific sample is not limited to a top-left sample of a region where subsampling is performed.

SUBSAMPLE_START_HOR and SUBSAMPLE_START_VER may be 0 or a positive integer, respectively. Information about at least one of SUBSAMPLE_START_HOR or SUBSAMPLE_START_VER may be signaled/encoded/decoded, or a value of SUBSAMPLE_START_HOR and/or SUBSAMPLE_START_VER may be determined as a predefined value without signaling/encoding/decoding of information.

SUBSAMPLE_STEP_VER and SUBSAMPLE_STEP_HOR may be 0, 1, 2, or a positive integer, respectively. Information about at least one of SUBSAMPLE_STEP_VER or SUBSAMPLE_STEP_HOR may be signaled/encoded/decoded, or a value of SUBSAMPLE_STEP_VER and/or SUBSAMPLE_STEP_HOR may be determined as a predefined value without signaling/encoding/decoding of information.

A subsampling method may be classified by a region where subsampling is performed, a position of a region where subsampling is performed, a size of a region where subsampling is performed, SUBSAMPLE_START_HOR, SUBSAMPLE_START_VER, SUBSAMPLE_STEP_HOR and SUBSAMPLE_STEP_VER. However, the criteria for classifying subsampling methods are not limited to the above-described values.

Information about a subsampling method may be signaled/encoded/decoded, or a predefined subsampling method may be used without signaling/encoded/decoded.

Information about a subsampling method may be information for determining a subsampling method.

For example, information about a subsampling method may be information about at least one of a region where subsampling is performed, a position of a region where subsampling is performed, a size of a region where subsampling is performed, SUBSAMPLE_START_HOR, SUBSAMPLE_START_VER, SUBSAMPLE_STEP_HOR or SUBSAMPLE_STEP_VER.

For example, a subsampling method may be determined based on at least one of motion information, a coding parameter, a size or a prediction mode of a target block.

A subsampling method may be determined at least one of a sequence level, a picture level, a sub-picture level, a tile level, a tile group level, a slice level, a Coding Tree Unit (CTU) level, a Coding Unit (CU) level or a Prediction Unit (PU) level, but a determined unit is not limited thereto.

Hereinafter, a geometric partitioning mode (GPM) will be described.

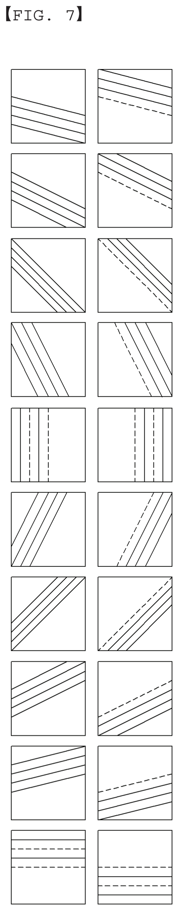

FIG. 7 shows embodiments showing a division boundary in a geometric partitioning mode.

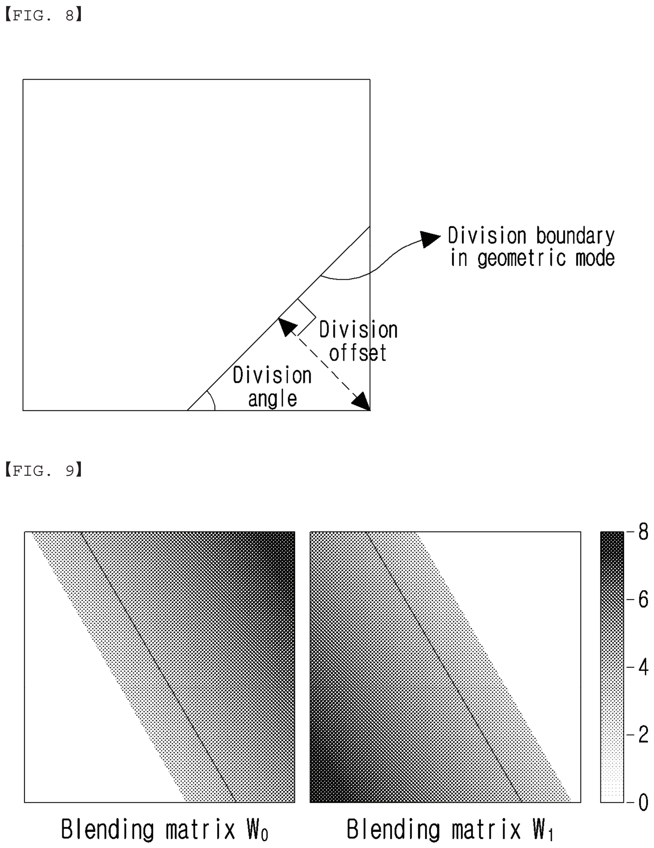

FIG. 8 is a diagram showing a division boundary, a division offset and a division angle in a geometric partitioning mode.

FIG. 9 shows an embodiment representing a weight map used for each prediction block according to a geometric partitioning boundary.

Referring to FIG. 7, a geometric partitioning mode of the present disclosure may have various types of division forms. A geometric partitioning form may include at least one of a vertical partitioning form, a horizontal partitioning form or a diagonal partitioning form. Referring to FIG. 8, each division type may be determined based on at least one of a division offset or a division angle. A division offset and a division angle may be a predefined value or may be determined by information encoded/decoded from a bitstream. In FIG. 7, among 20 geometric partitioning mode forms, 4 vertical or horizontal divisions are disclosed, and 16 diagonal division forms are classified. The 20 geometric partitioning modes may be specified by an index, and may be defined in an encoder/a decoder as a separate table.

A prediction method by a geometric partitioning mode determines a division boundary that divides a target block into two parts in various directions in the form of a straight line, and may include a method for performing a weighted sum for two prediction blocks (or, reference blocks) by using a weight map determined based on a division boundary. In performing a weighted sum, the above-described subsampling method may be performed.

At least one prediction block (or at least one reference block) in a geometric partitioning mode may refer to an unidirectionally and/or bidirectionally predicted prediction block, or a reference block in at least one direction in unidirectional prediction and/or bidirectional prediction.

Alternatively, for example, at least one prediction block in a geometric partitioning mode may refer to an intra predicted prediction block.

For example, in a geometric partitioning mode, one prediction block may be inter-predicted, and the other prediction block may be intra-predicted. Here, inter prediction may be replaced with prediction using an IBC mode or prediction using an intra template matching mode, as described above.

Hereinafter, template matching will be described.

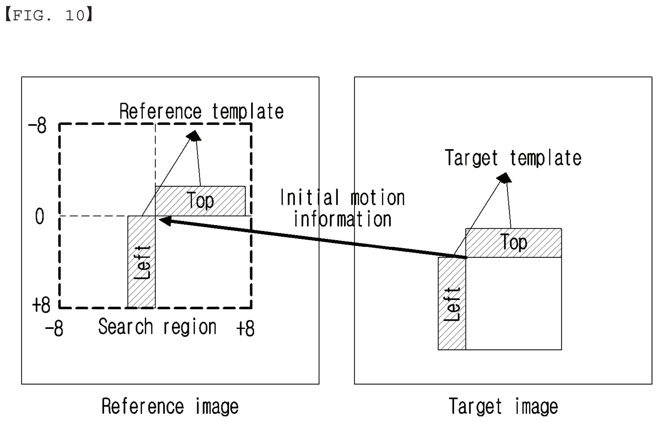

FIG. 10 is a diagram for an embodiment of template matching.

In template matching, motion information of a target block may be determined and/or changed based on a calculation result of a cost function between a target template and a reference template.

A reference block may include at least one of 1) a block indicated by initial motion information, 2) a block indicated by motion information derived in a search process of template matching, 3) a block indicated by motion information improved finally through template matching, 4) a block in which a sample (or, a position) belonging to a search range of template matching is selected one of the top-left, the bottom-left, the top-right, the bottom-right and the center or 5) a block determined finally through template matching.

A size of a reference block may be the same as a size of a target block.

Motion information improved through template matching may be motion information with the lowest matching cost derived from a template matching search process. However, a method for deriving motion information is not limited to the above-described standards.

A template matching cost may refer to the result of a calculation using a cost function for a template of a target block and a template of a reference block used in template matching.

Each of a reference block, a reference template and a reference region may include at least one of a prediction sample, a reconstructed sample, a residual sample or a decoded sample of a reference image. Alternatively, each of a reference block, a reference template and a reference region may include at least one of a prediction sample, a reconstructed sample, a residual sample or a decoded sample of a target image.

A target template may include a neighbor sample of a target block. A reference region of a target block may include a neighbor sample of a target block.

For example, a reference region of a target block may include at least one of samples positioned in a bottom-left, left, top-left, top or top-right region around a target block.

For example, in template matching, a target template may be the same as a reference region of a target block.

For example, samples of a target template based on a target block may be samples that correspond to samples of a reference template based on a reference block.

For example, in configuring a target template in template matching, some of the samples within a reference region of a target block may be selected. A target template may be configured by using selected samples.

For example, samples selected for configuring a target template based on a target block may be samples corresponding to samples selected for configuring a template of a reference block based on a reference block.

For example, a reference region of a target block based on a target block may be a region corresponding to a reference region of a reference block based on a reference block.

A reference template may include a neighbor sample of a reference block. A reference region of a reference block may include a neighbor sample of a reference block.

For example, a reference region of a reference block may include at least one of samples positioned in a bottom-left, left, top-left, bottom or top-right region around a reference block.

For example, in template matching, a reference template may be the same as a reference region of a reference block.

For example, samples of a reference template based on a reference block may be samples corresponding to samples of a target template based on a target block.

For example, in configuring a reference template in template matching, some of the samples within a reference region of a reference block may be selected. A reference template may be configured by using selected samples.

For example, samples selected to configure a reference template based on a reference block may be samples corresponding to samples selected to configure a template of a target block based on a target block.

For example, a reference region of a reference block based on a reference block may be a region corresponding to a reference region of a target block based on a target block.

A template matching method may include at least one of an intra template matching mode or an inter template matching mode.

An intra template matching mode may refer to a template matching method in which each of a reference block, a reference template and a reference region includes at least one of a prediction sample, a reconstructed sample, a residual sample or a decoded sample of a target image.

An inter template matching mode may refer to a template matching method in which each of a reference block, a reference template and a reference region includes at least one of a prediction sample, a reconstructed sample, a residual sample or a decoded sample of a target image.

A target/reference template of template matching may include at least one of 1) at least one of samples in TMSIZE_LEFT lines adjacent to the left of a target/reference block; or 2) at least one of samples in TMSIZE_ABOVE lines adjacent to the top of a target/reference block. However, a method for configuring a template and/or a positional relationship between each sample in a template and a target/reference block are not limited to a relationship or a method described above.

Each of TMSIZE_LEFT and TMSIZE_ABOVE may be 0, 1, 2, 3, 4, or a positive integer greater than or equal to 4. TMSIZE_LEFT and TMSIZE_ABOVE may be equal to each other. Alternatively, TMSIZE_LEFT and TMSIZE_ABOVE may be different. Each of TMSIZE_LEFT and TMSIZE_ABOVE may be a predefined value or may be a value determined based on signaled/encoded/decoded information. Each of TMSIZE_LEFT and TMSIZE_ABOVE may be determined based on at least one of motion information, a coding parameter, a size or a prediction mode of a target block.

In configuring a template for template matching, all samples in a reference region may be used, or only some of samples in a reference region may be used. In determining some samples above, a subsampling method described above may be applied.

The template for template matching may refer to at least one of a template of a target block or a template of a reference block.

The reference region may refer to at least one of a reference region of a target block or a reference region of a reference block for template matching.

In configuring a template for template matching by using only some samples positioned in a reference region, subsampling may be performed on all or part of a reference region.

In configuring a template for template matching by using only some samples positioned in a reference region, a reference region may be divided into at least two regions. A divided region may be one of 1) a region where subsampling is performed, 2) a region where subsampling is not performed and which is used for template configuration, and 3) a region which is not used for template configuration. A template for template matching may be configured by using samples selected through subsampling in 1) and samples in a region in 2).

For example, a region corresponding to 1) may be a region belonging to the left and/or top-left of a block among regions within a reference region.

For example, a region corresponding to 1) may be a region belonging to the top and/or top-left of a block among regions within a reference region.

Alternatively, in configuring a template for template matching by using only some samples positioned in a reference region, a reference region may be divided into at least two regions, respectively. A divided region may be one of 1) a region where subsampling is performed and 2) a region that is not used for template configuration. A template for template matching may be configured by using samples selected through subsampling in 1).

In performing the calculation of a cost function between a target template and a reference template in template matching, all samples in each template may be used, or only some of samples in each template may be used. In other words, calculation of a cost function may be performed only for some samples.

In performing the calculation of a cost function between templates by using only at least one partial sample within a template, subsampling for all or part of a template region may be performed.

In performing the calculation of a cost function between templates by using only at least one partial sample within a template, a region of a template for template matching may be divided into at least two regions, respectively. A divided region may be one of 1) a region where subsampling is performed, 2) a region where subsampling is not performed and which is used for calculating a cost function and 3) a region which is not used for calculating a cost function. Calculation of a cost function between templates in template matching may be performed by using samples selected through subsampling in 1) and samples in a region in 2).

Alternatively, in performing the calculation of a cost function between templates by using only at least one partial sample within a template, a region of a template for template matching may be divided into at least two regions, respectively. A divided region may be one of 1) a region where subsampling is performed and 2) a region that is not used for calculating a cost function. Calculation of a cost function between templates in template matching may be performed by using samples selected through subsampling in 1).

In performing a search process of template matching, all samples/positions within a search region may be used, or only some of samples/positions within a search region may be selected. Calculation of a search and/or matching cost may be performed only for selected samples/positions. Alternatively, calculation of a search and/or matching cost may be performed only for motion information indicating selected samples/positions.

In performing a search process of template matching by using only some of samples/positions in a search region, subsampling for all or part of a search region may be performed.

In performing a search process of template matching by using only some of samples/positions within a search region, a search region may be divided into at least two regions, respectively. A divided region may be one of 1) a region where subsampling is performed, 2) a region where subsampling is not performed and a search process is performed and 3) a region where a search process is not performed. A search process of template matching may be performed for pixels and/or positioned selected through subsampling 1) and samples/positions within a region in 2). Alternatively, a search process of template matching may be performed for motion information indicating samples/positions selected through subsampling in 1) and samples/positions within a region in 2).

Alternatively, in performing a search process of template matching by using only some of samples/positions in a search region, a search region may be divided into at least two regions, respectively. A divided region may be one of 1) a region where subsampling is performed and 2) a region where a search process is not performed. A search process of template matching may be performed by using samples/positions selected through subsampling in 1). Alternatively, a search process of template matching may be performed for motion information indicating samples/positions selected through subsampling in 1).

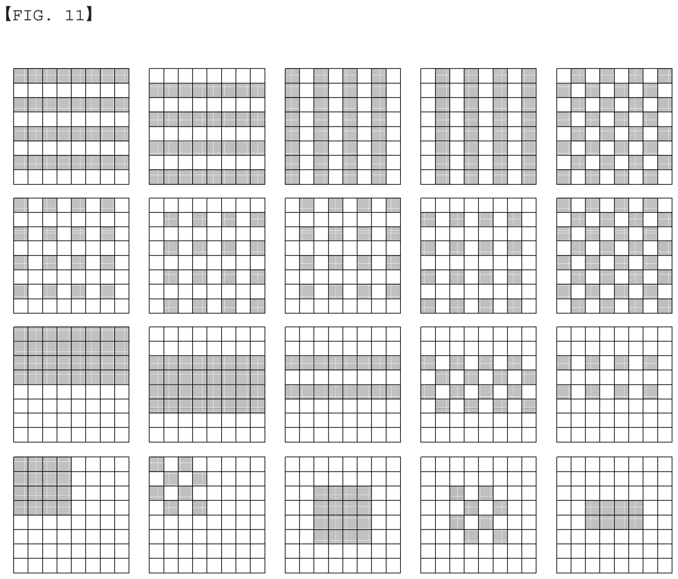

FIG. 11 shows a sub-sampling method of a search range of template matching.

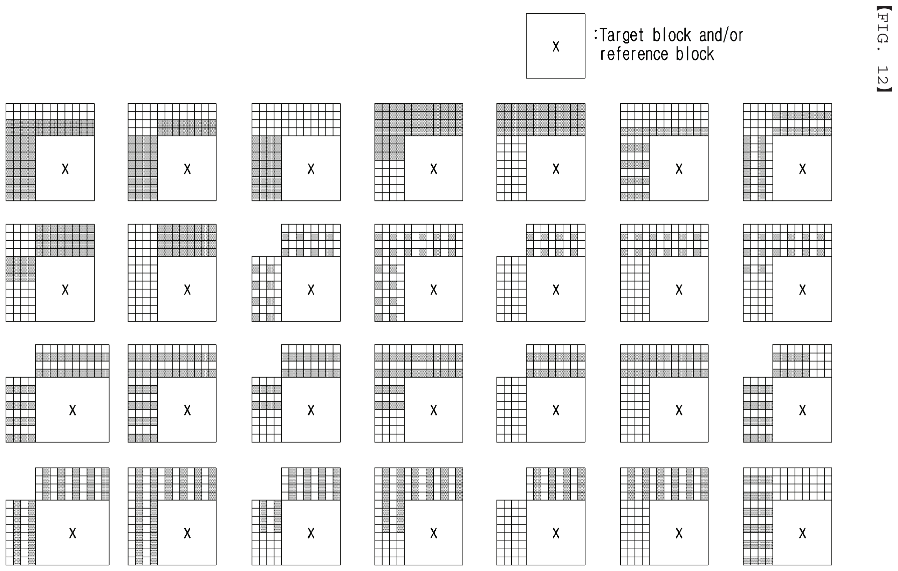

FIG. 12 shows a sub-sampling method for a template of template matching.

Shaded samples (or, positions) in FIGS. 11 and 12 may refer to samples (or, positions) selected through subsampling.

For all or part of a reference region, subsampling may be performed as shown in FIG. 12, and a template may be configured by using only selected samples (or, positions).

For all or part of a template region of template matching, subsampling may be performed as shown in FIG. 12, and calculation of a cost function may be performed only on selected samples (or, positions).

For all or part of a search region of template matching, subsampling may be performed as shown in FIG. 11, and calculation of a search and/or matching cost may be calculated only on selected pixels and/or positions.

For all or part of a search region of template matching, subsampling may be performed as shown in FIG. 11, and calculation of a search and/or matching cost may be performed only on motion information indicating selected pixels and/or positions.

By performing a first search step by using first motion information as initial motion information, second motion information that is a result of correcting first motion information may be derived. In a second search step performed after a first search step, second motion information may be used as initial motion information.

If initial motion information (e.g., an initial motion vector or an initial block vector) is not motion information in a unit of an integer pixel (i.e., in a unit of a fractional pixel), a result of rounding off (or, rounding down or rounding up) corresponding initial motion information may be used instead as initial motion information.

For example, in order to generate a reference template at a position indicated by motion information obtained by adding a specific offset to initial motion information in a unit of a fractional pixel in a search process, a sample at a position in a unit of a fractional pixel must be generated by applying an interpolation filter to samples at an integer pixel position. However, if initial motion information is limited in a unit of an integer pixel, complexity may be reduced because there is no need to interpolate a fractional pixel position in a search process.

Search may be performed by using calculation of a cost function for determining a similarity between NUM_TEMPLATE_COMPARE templates.

Search may include a process of determining at least one motion information satisfying a specific condition within a specific search range. Motion information of a target block may be determined and/or changed based on at least one motion information determined through search.

Motion information that satisfies a specific condition may refer to motion information with the lowest matching cost among motion information within a search range, but it is not limited thereto.

Alternatively, search may include a process of determining at least one block that satisfies a specific condition within a specific search range. Motion information indicating a block determined through search may be used as motion information of a target block.

A block that satisfies a specific condition may refer to a reference block with the lowest matching cost among reference blocks within a search range, but it is not limited thereto.

A cost function may refer to a function that determines a similarity between at least one sample in a target template and at least one sample in a reference template.

A similarity between a first value and a second value may be determined by using at least one of an operation for comparing a specific value with a difference between two values, 2) a ratio between two values or 3) a difference between two values.

A cost function may be a function that determines a similarity between at least one sample in a target template and a sample in a reference template corresponding thereto.

A cost function may be at least one of a Sum of Absolute Differences (SAD), a Sum of Absolute Transformed Differences (SATD), a Mean-Removed Sum of Absolute Differences (MR-SAD), a Mean Squared Error (MSE) and a Sum of Squared Error (SSE). However, cost functions are not limited to items listed above.

A cost function used in template matching may be predefined, or may be determined based on signaled/encoded/decoded information.

For example, if a target block satisfies an activation condition for bilateral matching and/or part of an activation condition for bilateral matching, or if bilateral matching is performed in a target block, a MR-SAD may be used as a cost function in template matching.

For example, if a target block does not satisfy an activation condition for bilateral matching and/or part of an activation condition for bilateral matching, or if bilateral matching is not performed in a target block, a SAD may be used as a cost function in template matching.

For example, a type of a cost function in bilateral matching may be determined based on whether a specific condition is satisfied in bilateral matching. **In** this case, a type of a cost function in template matching may be determined based on whether an activation condition for bilateral matching and the specific condition for determining a type of a cost function in bilateral matching are satisfied.

For example, if a target block satisfies an activation condition for bilateral matching and the specific condition, a MR-SAD may be used as a cost function in bilateral matching, and otherwise, a SAD may be used as a cost function in bilateral matching.

For example, if a target block satisfies an activation condition for bilateral matching; and bi-prediction with weights is performed or the number of samples in a target block is greater than a specific value, a MR-SAD may be used as a cost function in template matching, and otherwise, a SAD may be used as a cost function in template matching.

A search range may be a specific range centered on a position indicated by initial motion information. In other words, the center of a search range may be a position indicated by initial motion information.

Alternatively, a search range may be a specific range in which initial motion information indicates a top-left position. In other words, the top-left of a search range may be a position indicated by initial motion information.

Alternatively, a search range may consist of pre-reconstructed regions around a target block. As an example, a search range may include at least one of samples (or, a position of samples) positioned in a bottom-left, left, top-left, top or top-right region around a target block.

At least one of a size or a shape of a search range for a target block may be predefined in an encoder and a decoder.

Alternatively, at least one of a size or a shape of a search range in a target block may be determined based on at least one of a target block size, a coding parameter of a target block, motion information of a target block or a prediction mode of a target block.

Alternatively, information representing one of a size and a shape of a search range for a target block may be encoded and signaled.

A search range may have a rectangular shape with a horizontal length of SR_X and a vertical length of SR_Y. Alternatively, a search range may have a diamond shape with a horizontal length of SR_X and a vertical length of SR_Y. Alternatively, a search range may have a cross shape with a horizontal length of SR_X and a vertical length of SR_Y. However, a shape and a size of a search range are not limited to the above-described embodiments.

Each of SR_X and SR_Y may be a positive integer. Each of SR_X and SR_Y may be a predefined value or a value determined based on signaled/encoded/decoded information.

Initial motion information may be determined based on at least one of motion information of a target block, a coding parameter of a target block, a motion vector of a target block, a reference image of a target block, a block vector of a target block, a motion vector predictor of a target block, a block vector predictor of a target block, motion information of at least one neighbor block of a target block, a merge candidate of a target block, a motion vector difference of a target block or a block vector difference of a target block.

A search method may be classified based on at least one of a search pattern, search resolution, a search range, initial motion information or a unit from which motion information is derived.

A search method may be determined based on at least one of motion information of a target block, a coding parameter of a target block, a size of a target block, a prediction mode of a target block, a reference image of a target block, at least one sample value in a target block, a target template, at least one sample value in a target template or a region of a target template.

A search pattern may be one of a diamond pattern, a cross pattern, and a full-search pattern. However, a search pattern is not limited to patterns listed above.

Search using a diamond pattern may mean searching at least one of positions of (0, 2×RR), (RR, RR), (2×RR, 0), (RR, -RR), (0, -RR), (-RR, -RR), (-RR, 0), (-RR, RR) and (0, 0) when (0, 0) represents a position indicated by initial motion information.

Search using a cross pattern may mean searching at least one of positions of (0, RR), (RR, 0), (0, -RR), (-RR, 0) and (0, 0) when (0, 0) represents a position indicated by initial motion information.

A RR may be search resolution or a value determined based on search resolution, or may be a predefined positive number.

Search using a full-search pattern may mean searching for all positions within a pre-defined search range.

For example, when FS_i has values from -FS_X to FS_X and FS_j has values from -FS_Y to FS_Y, search using a full-search pattern may mean searching positions of (FS_ixRR, FX_jxRR). Here, (0, 0) may be a position indicated by initial motion information. However, a search range is not limited to positions described above. Each of FS_X and FS_Y may be a predefined positive number.

Search resolution may be one of a 4-pel, a full-pel, a half-pel and a quarter-pel. However, search resolution is not limited to pels described above.

Search resolution may be predefined, determined based on at least one of information about adaptive motion vector resolution, or determined based on a signaled/encoded/decoded value.

A unit from which motion information is derived may include a unit of an entire block and a unit of a sub-block.

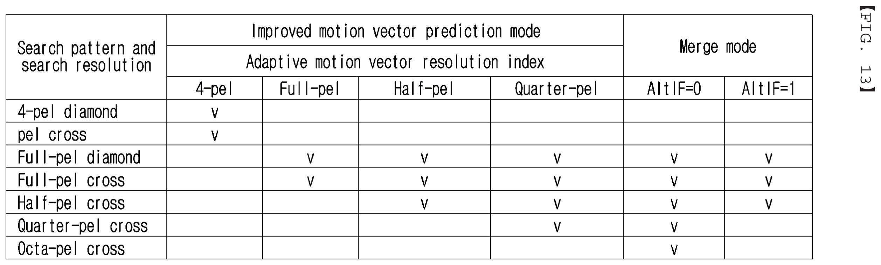

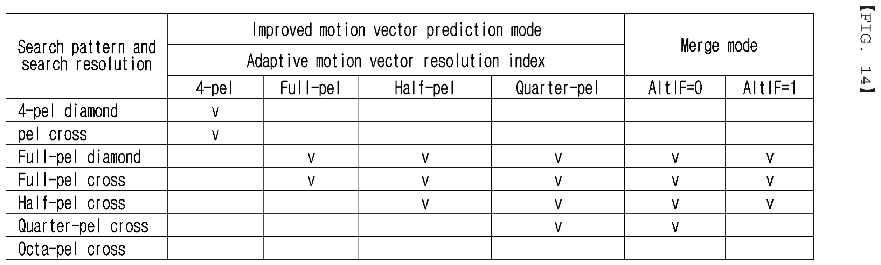

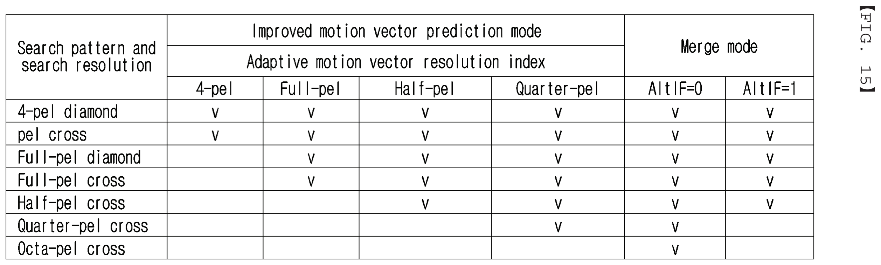

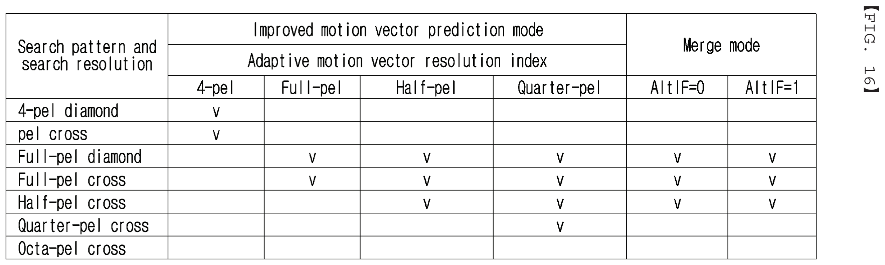

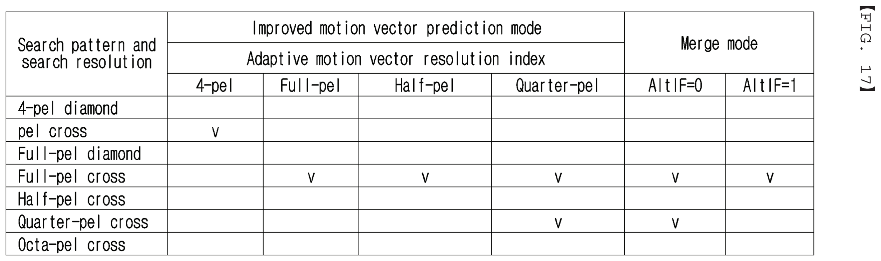

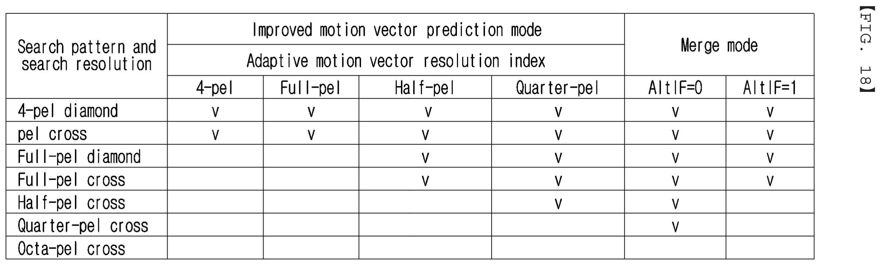

FIGS. 13 to 18 show a search method in template matching according to an embodiment, respectively.

Based on motion information, a coding parameter, a prediction mode and adaptive motion vector resolution of a target block, a specific column in a table shown in FIGS. 13 to 18 may be determined. Search may be performed by using a search pattern and search resolution corresponding to a row marked with "v" in order from the top to the bottom of a determined column.

For example, if a target block is in an AMVP mode and resolution determined through adaptive motion vector resolution is a 4-pel in FIG. 13, search of a cross pattern using 4-pel search resolution may be performed after search of a diamond pattern using 4-pel search resolution is performed.

ALT_IF may refer to an index of an adaptive interpolation filter. An interpolation filter may be applied to calculate a pixel value at a specific-resolution sample position. An adaptive interpolation filter may be an interpolation filter selected by an index among a plurality of interpolation filters. In other words, when an adaptive interpolation filter is applied, different interpolation filters may be used according to an index to calculate a pixel value at a specific-resolution sample position.

For example, specific resolution may be a half-pel. However, specific resolution is not limited to a half-pel.

For example, an interpolation filter determined by an index may be one of a 6-tap interpolation filter and a 8-tap interpolation filter. However, a determination method of an interpolation filter is not limited to the above-described determination method.

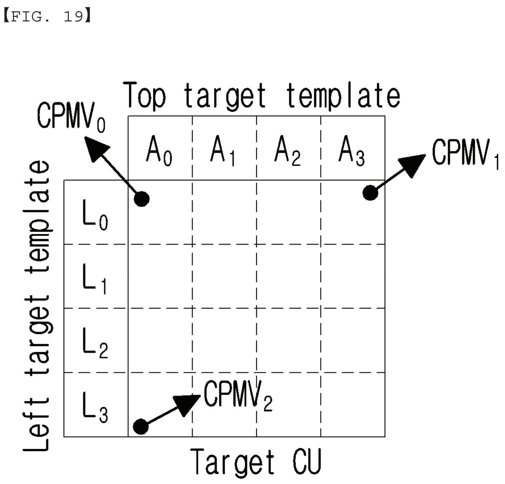

FIG. 19 shows a method for configuring a first template in an affine mode according to an embodiment.

A CPMV may refer to an affine control point motion vector (CPMV). A MV of each sub-block within a target block may be derived by using a CPMV. A CPMV may use any one of a 4-parameter affine motion model using two CPMVs and a 6-parameter affine motion model using three CPMVs.

When a target block is in an affine mode, a target block may be divided in a unit of a sub-block with a width of N and a height of M. Motion information for each sub-block may be determined based on at least one of motion information, a coding parameter or a size of a target block. A template matching cost for a target block may be determined based on at least one of a template matching cost for divided sub-blocks. For example, a template matching cost for a target block may be the sum of template matching costs for divided sub-blocks or an average of template matching costs for each sub-block.

N and M may be 2, 4, 8, 16, or a positive integer, respectively. Each of N and M may be a predefined value, or may be a value determined based on signaled/encoded/decoded information.

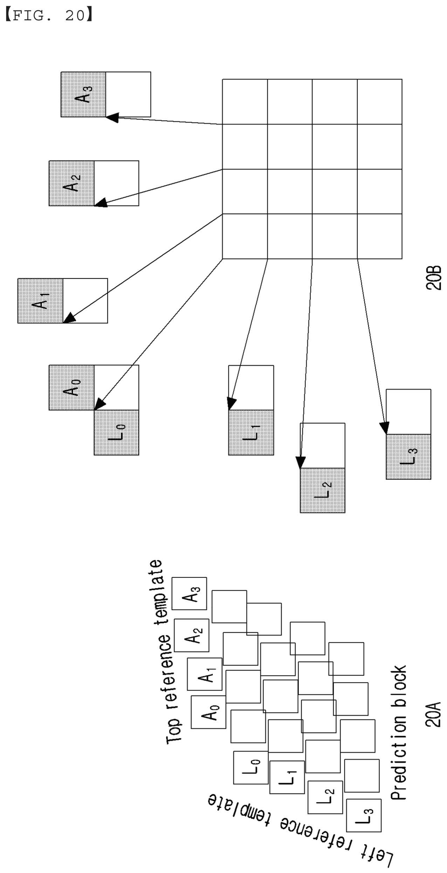

FIG. 20 shows a method for configuring a second template in an affine mode according to an example.

Referring to FIG. 20A, a reference template (A0~A3 to L0~L4) of a target block may be configured by including at least one of samples at a position indicated from a target template position corresponding to each reference template by a motion vector (or a block vector) determined for each reference template position based on a CPMV of a target block. A motion vector (or, a block vector) determined for each reference template position may refer to a motion vector (or, a block vector) determined for at least one of positions in a corresponding reference template (e.g., the center position of a corresponding reference template).

Referring to FIG. 20B, a reference template (A0~A3 to L0~L4) of a target block may be configured by including at least one of samples at a position indicated from a target template position corresponding to each reference template by a motion vector (or, a block vector) of the most adjacent sub-block within a target block.

For example, motion information of a target block may be determined based on motion information of a neighbor block. It may be expressed as "a target block inherited motion information from a neighbor block".

For example, when a target block is in a merge mode, one merge candidate may be specified from a merge candidate list based on a merge index, and motion information of a specified merge candidate may be used as motion information of a target block.

For example, when a target block is in an AMVP mode, one MV candidate may be specified from a MV candidate list based on a MV candidate index, and motion information of a specified MV candidate may be used as motion information of a target block.

When motion information inherited by a target block from a neighbor block indicates bidirectional prediction, an embodiment in which template matching in a target block is performed may be as follows. Each step below may be performed sequentially.

In a first step, template matching may be performed for each of a L0 direction and a L1 direction, and a template matching cost (C0, C1) for motion information determined for a L0 direction and a L1 direction may be calculated.

In this case, when performing template matching for each direction, template matching may be performed in the same way as performing template matching in unidirectional prediction for a corresponding direction, without considering motion information of other directions. For example, in this case, if a target block satisfies a predefined condition, a MR-SAD may be used as a cost function, and otherwise, a SAD may be used as a cost function.

The predefined condition may be a condition based on at least one of whether to perform a model-based prediction method in a target block; an indicator indicating whether to perform a model-based prediction method in a target block; whether to perform bilateral matching in a target block; an indicator indicating whether to perform bilateral matching in a target block; motion information of a target block; a size of a target block; a coding parameter of a target block; motion information of a neighbor block of a target block; a coding parameter of a neighbor block of a target block; or a type of a cost function in template matching in a neighbor block of a target block.

For example, if whether to perform a model-based prediction method in a target block is true, or if an indicator indicating whether to perform a model-based prediction method in a target block is true, a MR-SAD may be used as a cost function, and otherwise, a SAD may be used as a cost function.

For example, if whether to perform bilateral matching in a target block is true, or if an indicator indicating whether to perform bilateral matching in a target block is true; and the number of samples in a target block is equal to or greater than a specific value, a MR-SAD may be used as a cost function, and otherwise, a SAD may be used as a cost function.

The cost function may refer to a cost function used when searching template matching; and/or a cost function used to calculate at least one of C0, C1 or C'. A cost function used when searching template matching and a cost function used to calculate at least one of C0, C1 or C' may be the same or different.

For example, when searching template matching, a MR-SAD may be used as a cost function, and C0, C1 and C' may be calculated by using a SAD.

In a second step, for C0 < C1, a new target template T' may be generated by using a target template and a template in a L0 direction.

For example, when a target template is T, a reference template in a L0 direction is T0 and a reference template in a L1 direction is T1, it may be determined as in $T'=w_T \times T + w_{t0} \times T0$. Here, $w_T$ and $w_{T0}$ may be a predefined value, respectively. In addition, $w_T$ and $w_{T0}$ may be a value determined based on whether to perform bi-prediction with weights in a target block; and/or a weight in bi-prediction with weights. For example, $w_T$ may be 2, and $w_{T0}$ may be -1.

For C0 > C1, a new target template T' may be generated by using a target template and a template in a L1 direction. If a value of C0 is the same as a value of C1, it may be considered as one of C0 < C1 or C1 > C0 and a procedure in a second step may be performed.

In a third step, for C0 < C1, template matching may be performed by considering a target template as T' for a L1 direction, and a template matching cost C' for motion information determined for a L1 direction may be calculated.

For C0 > C1, template matching may be performed by considering a target template as T' for a L0 direction, and a template matching cost C' for motion information determined for a L0 direction may be calculated.

If a value of C0 is the same as a value of C1, it may be considered as one of C0 < C1 or C1 > C0 and a procedure in a third step may be performed.

In a fourth step, for $C'=w_{C0} \times C0 + w_{C1} \times C1$, motion information of a target block may be changed into motion information indicating unidirectional prediction in a L0 direction or in a L1 direction based on a value of C0 and C1.

For C0 < C1, motion information of a target block may be changed into motion information indicating unidirectional prediction in a L0 direction. Alternatively, motion information for a L1 direction may be considered unavailable in a target block.

For C0 > C1, motion information of a target block may be changed into motion information indicating unidirectional prediction in a L0 direction. Alternatively, motion information for a L1 direction may be considered unavailable in a target block.

If a value of C0 is the same as a value of C1, it may be considered as one of C0 < C1 or C1 > C0 and a procedure in a fourth step may be performed. Here, $w_{C0}$ and $w_{C1}$ may be a predefined value, respectively. Here, $w_{C0}$ and $w_{C1}$ may be a value determined based on whether to perform bi-prediction with weights in a target block; and/or a weight in bi-prediction with weights. For example, $w_{C0}$ may be 1, and $w_{C1}$ may be 1/8.

For example, the second step to the fourth step may be performed only when a target block satisfies a predefined condition.

For example, the second step to the fourth step may be performed only when a target block is bidirectional prediction, and bilateral matching is not performed in a target block or a target block does not satisfy an activation condition for bilateral matching.

In bilateral matching, a reference block in a L0 direction and a reference block in a L1 direction may be used as a template, and motion information of a target block may be determined and/or changed based on a calculation result of a cost function between two templates.

A reference block may include at least one of 1) a reference block indicated by initial motion information, 2) a reference block indicated by motion information derived in a search process of bilateral matching or 3) a reference block indicated by motion information finally improved through bilateral matching.

For example, in configuring a template for bilateral matching, a reference block in a L0 direction and a reference block in a L1 direction may be used as a template.

A bilateral matching cost may refer to a result value of calculation using a cost function for a template of a reference block in a L0 direction and a reference block in a L1 direction used in bilateral matching.

If a target block is in an intra block copy (IBC) mode and is predicted by using at least two reference blocks, bilateral matching may be also performed by using two different reference blocks among the reference blocks of a target block as a template.

In configuring a template for bilateral matching, only some of pixels and/or positions within a reference block in a L0 direction and a reference block in a L1 direction may be selected. A template may be configured by using only selected pixels and/or selected positions.

A template for the bilateral matching may refer to at least one of a template in a L0 direction or a template in a L1 direction.

For example, in configuring a template for bilateral matching, subsampling for a reference block in a L0 direction and a reference block in a L1 direction may be used.

For example, in configuring a template for bilateral matching, subsampling for part of a reference block in a L0 direction and part of a reference block in a L1 direction may be used.

Alternatively, for example, in configuring a template for bilateral matching, a reference block in a L0 direction and a reference block in a L1 direction may be divided into at least two regions, respectively. A divided region may be one of 1) a region where subsampling is performed, 2) a region where subsampling is not performed and that is used for template configuration or 3) a region that is not used for template configuration. A template for bilateral matching may be configured by using pixels and/or positions selected through subsampling in 1) and pixels and/or positions in a region in 2).

Alternatively, for example, in configuring a template for bilateral matching, a reference block in a L0 direction and a reference block in a L1 direction may be divided into at least two regions, respectively. A divided region may be one of 1) a region where subsampling is performed and 2) a region that is not used for template configuration. A template for bilateral matching may be configured by using pixels and/or positioned selected through subsampling in 1).

For example, in configuring a template for bilateral matching, a region used to configure a template may be a partial region of a reference block in a L0 direction and a partial region of a reference block in a L1 direction.

For example, in configuring a template for bilateral matching, pixels (or, positions) used to configure a template may be selected only from a partial region of a reference block in a L0 direction and a partial region of a reference block in a L1 direction.

A size of the partial region of a reference block in a L0 direction may be smaller than a size of a region of a reference block in a L0 direction. For example, a height (a vertical size) of a partial region of a reference block in a L0 direction may be smaller than a height (a vertical size) of a reference block in a L0 direction. For example, a width (a horizontal size) of a partial region of a reference block in a L0 direction may be smaller than a width (a horizontal size) of a reference block in a L0 direction.

Alternatively, a size of the partial region of a reference block in a L1 direction may be smaller than a size of a region of a reference block in a L1 direction. For example, a height (a vertical size) of a partial region of a reference block in a L1 direction may be smaller than a height (a vertical size) of a reference block in a L1 direction. For example, a width (a horizontal size) of a partial region of a reference block in a L1 direction may be smaller than a width (a horizontal size) of a reference block in a L1 direction.

In performing the calculation of a cost function between templates in bilateral matching, only some of pixels and/or positions within a template region may be selected. Calculation of a cost function may be performed only for selected pixels and/or selected positions.

For example, in performing the calculation of a cost function between templates in bilateral matching, subsampling for a template region in a L0 direction and a template region in a L1 direction may be performed.

For example, in performing the calculation of a cost function between templates in bilateral matching, subsampling for part of a template region in a L0 direction and part of a template region in a L1 direction may be performed.

Alternatively, for example, in performing the calculation of a cost function between templates in bilateral matching, each of a template region in a L0 direction and a template region in a L1 direction may be divided into at least two regions. A divided region may be one of 1) a region where subsampling is performed, 2) a region where subsampling is not performed and which is used for calculating a cost function and 3) a region which is not used for calculating a cost function. Calculation of a cost function between templates in bilateral matching may be performed by using pixels and/or positions selected through subsampling in 1) and pixels and/or positions within a region in 2).

Alternatively, for example, in performing the calculation of a cost function between templates in bilateral matching, each of a template region in a L0 direction and a template region in a L1 direction may be divided into at least two regions. A divided region may be one of 1) a region where subsampling is performed and 2) a region that is not used for calculating a cost function. Calculation of a cost function between templates in bilateral matching may be performed by using pixels and/or positions selected through subsampling in 1).

For example, in performing the calculation of a cost function between templates in bilateral matching, a region used to calculate a cost function may be a partial region of a template in a L0 direction and a partial region of a template in a L1 direction.

A size of the partial region of a template in a L0 direction may be smaller than a size of a region of a template in a L0 direction. For example, a height (a vertical size) of a partial region of a template in a L0 direction may be smaller than a height (a vertical size) of a template in a L0 direction. For example, a width (a horizontal size) of a partial region of a template in a L0 direction may be smaller than a width (a horizontal size) of a template in a L0 direction.

Alternatively, a size of the partial region of a template in a L1 direction may be smaller than a size of a region of a template in a L1 direction. For example, a height (a vertical size) of a partial region of a template in a L1 direction may be smaller than a height (a vertical size) of a template in a L1 direction. For example, a width (a horizontal size) of a partial region of a template in a L1 direction may be smaller than a width (a horizontal size) of a template in a L1 direction.

In performing a search process of bilateral matching, only some of pixels and/or positions within a search region may be selected. Calculation of a search and/or matching cost may be performed only for selected pixels and/or selected positions. Alternatively, calculation of a search and/or matching cost may be performed only for motion information indicating selected pixels and/or positions.

For example, in performing a search process of bilateral matching, subsampling for all or part of a search region may be performed.

Alternatively, for example, in performing a search process of bilateral matching, a search region may be divided into at least two regions, respectively. A divided region may be one of 1) a region where subsampling is performed, 2) a region where subsampling is not performed and a search process is performed and 3) a region where a search process is not performed. A search process of bilateral matching may be performed for pixels and/or positions selected through subsampling in 1) and pixels and/or positions in a region in 2). Alternatively, a search process of bilateral matching may be performed for motion information indicating pixels and/or positions selected through subsampling in 1) and pixels and/or positions in a region in 2).

Alternatively, for example, in performing a search process of bilateral matching, a search region may be divided into at least two regions, respectively. A divided region may be one of 1) a region where subsampling is performed and 2) a region where a search process is not performed. A search process of bilateral matching may be performed by using pixels and/or positions selected through subsampling in 1). Alternatively, a search process of bilateral matching may be performed for motion information indicating pixels and/or positions selected through subsampling in 1).

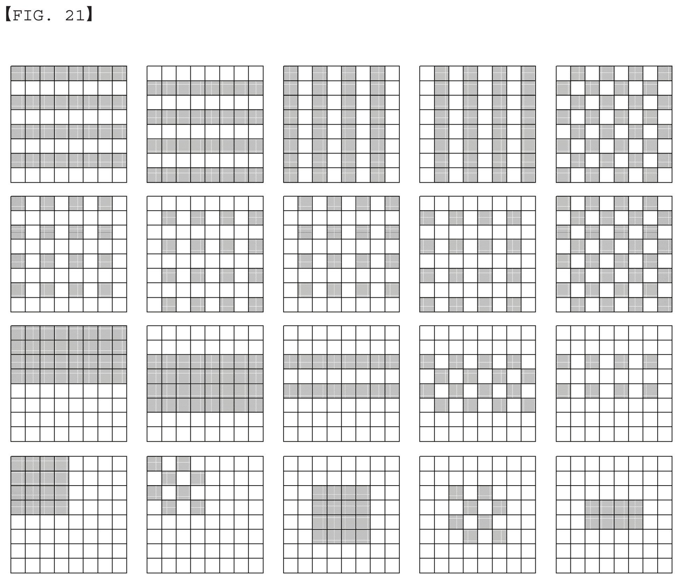

FIG. 21 shows various examples for a sub-sampling method in bilateral matching.

Shaded samples (or, positions) in FIG. 21 may refer to samples (or, positions) selected through subsampling.

For a reference block region in a L0 direction and a reference block region in a L1 direction, subsampling may be performed as shown in FIG. 21, and a template may be configured by using only selected samples (or, positions).

For a partial region of a reference block region in a L0 direction and a partial region of a reference block region in a L1 direction, subsampling may be performed as shown in FIG. 21, and a template may be configured by using only selected samples (or, positions).

For all or part of a template region of bilateral matching, subsampling may be performed as shown in FIG. 21, and the calculation of a cost function may be performed only for selected samples (or, positions).

For all or part of a search region of bilateral matching, subsampling may be performed as shown in FIG. 21, and the calculation of a search and/or matching cost may be performed only for selected pixels and/or positions.

For all or part of a search region of bilateral matching, subsampling may be performed as shown in FIG. 21, and the calculation of a search and/or matching cost may be performed only for motion information indicating selected pixels and/or positions.

Bilateral matching may always operate.

In contrast, bilateral matching may operate only when a pre-defined enabling condition is satisfied.

For example, bilateral matching may be performed when an inter prediction mode is used for a target block and at least two reference blocks are used.

For example, bilateral matching may be performed only when a first direction and a second direction are different from each other and a first POC interval and a second POC interval are the same. A first direction may be a direction from a target image to a reference image in a L0 direction. A second direction may be a direction from a target image to a reference image in a L1 direction. A first POC interval may be a difference between a POC of a target image and a POC of a reference image in a L0 direction. A second POC interval may be a difference between a POC of a target image and a POC of a reference image in a L1 direction.

For example, bilateral matching may be performed only when a first direction and a second direction are different from each other. A first direction may be a direction from a target image to a reference image in a L0 direction. A second direction may be a direction from a target image to a reference image in a L1 direction.

Here, when a first direction and a second direction are different from each other, it may mean that the following Equation is satisfied.

$$(POC_t\text{-}POC0)\times(POC_t\text{-}POC1)<0$$

Here, when a first direction and a second direction are the same, it may mean that the following Equation is satisfied.

$$(POC_t\text{-}POC0)\times(POC_t\text{-}POC1)>0$$

$POC_t$ may be a POC of a target image. POC0 may be a POC of a reference image in a L0 direction. POC1 may be a POC of a reference image in a L1 direction.

Search may be performed by using the calculation of a cost function for determining a similarity between two templates.

Search may include a process of determining at least one motion information satisfying a specific condition within a specific search range. Motion information of a target block may be determined and/or changed based on at least one motion information determined through search.

Motion information that satisfies a specific condition may refer to motion information with the lowest matching cost among motion information within a search range, but it is not limited thereto.

Alternatively, search may include a process of determining at least one block that satisfies a specific condition within a specific search range. Motion information indicating a block determined through search may be used as motion information of a target block.

A block that satisfies a specific condition may refer to motion information with the lowest matching cost among reference blocks within a search range, but it is not limited thereto.

A cost function may refer to a function that determines a similarity between at least one sample in a first template and at least one sample in a second template for two templates in bilateral matching.

A similarity between a first value and a second value may be determined by using at least one of an operation for comparing a specific value with a difference between two values, 2) a ratio between two values or 3) a difference between two values.

It may be a function that determines a similarity between at least one sample in a first template and a sample in a second template corresponding thereto.

A cost function may be at least one of a Sum of Absolute Differences (SAD), a Sum of Absolute Transformed Differences (SATD), a Mean-Removed Sum of Absolute Differences (MR-SAD), a Mean Squared Error (MSE) and a Sum of Squared Error (SSE). However, cost functions are not limited to items listed above.

A cost function used in bilateral matching may be predefined, or may be determined based on signaled/encoded/decoded information.

For example, if a size of a target block is smaller than a specific value, a SAD may be used as a cost function in bilateral matching, and otherwise, a MR-SAD may be used as a cost function in bilateral matching. A size of a block may include at least one of a width of a block, a height of a block, the sum of a width of a block and a height of a block or the product of a width of a block and a height of a block.

For example, if BCW is not performed in a target block or the same weight is used for a reference block in a L0 direction and in a L1 direction in BCW, a SAD may be used as a cost function in bilateral matching, and otherwise, a MR-SAD may be used as a cost function in bilateral matching.

For example, if a local illumination compensation mode is not performed in a target block, a SAD may be used as a cost function in bilateral matching, and otherwise, a MR-SAD may be used as a cost function in bilateral matching. A local illumination compensation mode may refer to a mode that calculates a correlation between a template of a target block and a template of a reference block to derive at least one of a weight or an offset and multiplies or adds or multiplies and adds it to all or part of a target block (or a reference block of a target block).

If initial motion information (e.g., an initial motion vector or an initial block vector) is not motion information in a unit of an integer pixel (i.e., in a unit of a fractional pixel), a result of rounding off (or, rounding down or rounding up) corresponding initial motion information may be used instead as initial motion information.

For example, in order to generate a template at a position indicated by motion information obtained by adding a specific offset to initial motion information in a unit of a fractional pixel in a search process, a sample at a position in a unit of a fractional pixel must be generated by applying an interpolation filter to samples at an integer pixel position. However, if initial motion information is limited in a unit of an integer pixel, complexity may be reduced because there is no need to interpolate a fractional pixel position in a search process.

Bilateral matching may include at least one search step.

For example, bilateral matching may be configured to sequentially include 1) a step of deriving motion information for the entire block and 2) a step of deriving motion information for sub-blocks of a block. However, a method for deriving motion information performed in each step and order between steps are not limited to the above-described configuration.

In each search step of bilateral matching, motion information in BM_NUM directions between motion information in a L0 direction and motion information in a L1 direction may be improved. BM_NUM may be 0, 1, 2, or a positive integer. BM_NUMs used in the steps of bilateral matching may be the same or different.

For example, if BM_NUM is 1 in a specific search step, motion information improvement may be performed only for motion information in a LXBM direction in the specific search step.

For example, if BM_NUM is 1 and XBM is 0 in a specific search step, in the specific search step, only search in a L0 direction may be performed while a template in a L1 direction and motion information in a L1 direction are fixed.

XBM may be 0, 1, or a positive integer.

XBM may be pre-defined.

For example, a XBM direction may be a direction with a larger POC interval between a L0 direction and a L1 direction. A POC may be a difference between a POC of a reference image (in a specific direction) and a POC of a target image.

For example, a XBM direction may be a direction with a higher template matching cost between a L0 direction and a L1 direction. Here, a template matching cost in a specific direction may be a template matching cost of motion information in a specific direction.

For example, information about XBM may be signaled/encoded/decoded.

For example, if a first POC difference is greater than a second POC difference, XBM may be 0 and otherwise, XBM may be 1. Alternatively, if a first POC difference is greater than a second POC difference, XBM may be 1 and otherwise, XBM may be 0. A first POC difference may be a difference between a POC of a target image and a POC of a reference image in a L0 direction. A second POC difference may be a difference between a POC of a target image and a POC of a reference image in a L1 direction.

For example, XBM may be determined based on a context model and/or a probability model used to entropy-encode and entropy-decode motion information and a coding parameter of a target block.

For example, XBM may be determined based on at least one of a context model and/or a probability model used when entropy-encoding and entropy-decoding an inter prediction indicator in a target block.

For example, from a context model and/or a probability model used when entropy-encoding and entropy-decoding an inter prediction indicator, a more potential direction in a target block between unidirectional prediction in a L0 direction and unidirectional prediction in a L1 direction may be selected as a LXBM direction. For example, from a context model and/or a probability model used when entropy-encoding and entropy-decoding an inter prediction indicator, a more potential direction in a target block between unidirectional prediction in a L0 direction and unidirectional prediction in a L1 direction may be selected as a LXBM direction.

Alternatively, for example, from a context model and/or a probability model used when entropy-encoding and entropy-decoding an inter prediction indicator, a more potential direction in a target block between unidirectional prediction in a L0 direction and unidirectional prediction in a L1 direction may be selected as a L(1-XBM) direction. For example, from a context model and/or a probability model used when entropy-encoding and entropy-decoding an inter prediction indicator, a more potential direction in a target block between unidirectional prediction in a L0 direction and unidirectional prediction in a L1 direction may be selected as a L(1-XBM) direction.

A more potential direction may refer to a direction in which fewer bits are used when entropy encoding is performed by using a context model and/or a probability model. Alternatively, a more potential direction may refer to a direction with a higher probability indicated by a context model and/or a probability model for a corresponding direction.

For example, LXBM may be determined based on an inter bi-prediction weight of a target block. For example, LXBM may be a direction with a higher inter bi-prediction weight in a target block between a L0 direction and a L1 direction. Alternatively, for example, LX may be a direction with a lower inter bi-prediction weight in a target block between a L0 direction and a L1 direction.

For example, XBM may be determined based on at least one of motion information or a coding parameter of neighbor blocks.

For example, X in a target block may be determined based on at least one of motion information or a coding parameter of neighbor blocks corresponding to at least one of A0, A1, B0, B1 or B2 in FIG. 19.

For example, XBM in a target block may be determined based on at least one of an inter prediction indicator or an inter bi-prediction weight in neighbor blocks.

For example, one or a plurality of context models and/or probability models may be used for entropy encoding and entropy decoding of XBM.

Among a plurality of context models and/or probability models, based on at least one of motion information or coding information of neighbor blocks, a context model and/or a probability model used for entropy encoding and entropy decoding of XBM in a target block may be determined.

For example, a context model and/or a probability model used for entropy encoding and entropy decoding of XBM in blocks may be the same. Alternatively, a context model and/or a probability model used for entropy encoding and entropy decoding of XBM in blocks may vary depending on at least one of an inter prediction direction or an inter bi-prediction weight of a neighbor block.

The same XBM may be used in search steps of bilateral matching. Alternatively, different XBMs may be used in search steps of bilateral matching, respectively.

For example, in performing bilateral matching, a cost function used to calculate a bilateral matching cost may be determined based on a weight of bi-prediction with weights and/or a weight index of bi-prediction with weights of a target block.

In embodiments, bi-prediction with weights may refer to Bi-prediction with CU-level Weights (BCW).

For example, if a first weight of a target block is the same as a second weight of a target block, a bilateral matching cost may be calculated by using a SAD or a SATD. If a first weight of a target block is different from a second weight of a target block, a bilateral matching cost may be calculated by using a MRSAD or a MRSATD. Here, a first weight may be a weight in bi-prediction with weights for a L0 direction. A second weight may be a weight in bi-prediction with weights for a L1 direction.

BM_NUM may be 0, 1, 2, or a positive integer.

BM_NUM may be pre-defined.

BM_NUM in each search step of bilateral matching may be determined based on a coding parameter. Alternatively, BM_NUM may be determined based on at least one of motion information, a search step of bilateral matching, a matching cost in a previous search step, a matching cost for initial motion information in a current search step or BM_NUM in a previous search step.

For example, in a first search step of bilateral matching, BM_NUM may be 1 or 2.

For example, BM_NUM in a current search step may be determined based on a matching cost in a previous search step.

For example, if a difference between a matching cost for initial motion information in a previous search step and a matching cost for improved motion information in a previous search step is smaller than COSTDIFF_FORBMNUM, BM_NUM in a current search step may be 0.

COSTDIFF_FORBMNUM may be 0, 1, 2, 4, 8, 16 or a positive integer.

For example, the COSTDIFF_FORBMNUM may be determined based on a size of a target block. COSTDIFF_FORBMNUM may be the product of the number of pixels in a target block and a specific value. A specific value may be 0, 1, 2, 4, 8 or a positive integer.

For example, if BM_NUM in a previous search step is 0, BM_NUM in a current search step may be 0.

For example, if a matching cost for initial motion information in a current search step is smaller than COSTDIFF_FORBMNUM_INIT, BM_NUM of a target block may be 0.

COSTDIFF_FORBMNUM may be 0, 1, 2, 4, 8, 16 or a positive integer.

For example, COSTDIFF_FORBMNUM_INIT may be determined based on a size of a target block. COSTDIFF_FORBMNUM_INIT may be the product of the number of pixels in a target block and a specific value. A specific value may be 0, 1, 2, 4, 8 or a positive integer.

For example, when motion improvement is performed in a search step of bilateral matching, motion information improvement for motion information in a L0 direction may be performed only when a matching cost for motion information in a L0 direction of initial motion information in a current search step is larger than COSTDIFF_FORBMNUM_INIT.

For example, when motion improvement is performed in a search step of bilateral matching, motion information improvement for motion information in a L1 direction may be performed only when a matching cost for motion information in a L1 direction of initial motion information in a current search step is larger than COSTDIFF_FORBMNUM_INIT.

COSTDIFF_FORBMNUM may be 0, 1, 2, 4, 8, 16 or a positive integer.

For example, COSTDIFF_FORBMNUM_INIT may be determined based on a size of a target block. COSTDIFF_FORBMNUM_INIT may be the product of the number of pixels in a target block and a specific value. A specific value may be 0, 1, 2, 4, 8 or a positive integer.

When BM_NUM in a specific search step of bilateral matching is 0, it may represent that motion information improvement is not performed in the specific search step. Alternatively, when BM_NUM in a specific search step of bilateral matching is 0, it may represent that the specific search step is not performed.

For example, when bilateral matching is performed, BM_NUM in a motion information derivation step for the entire block may be 1, and BM_NUM in a motion information derivation step for a sub-block may be 2. In this case, in a motion information derivation step for the entire block, only motion information in a LXBM direction may be improved, and in a motion information derivation step for a sub-block, both motion information in a L0 direction and motion information in a L1 direction may be improved.

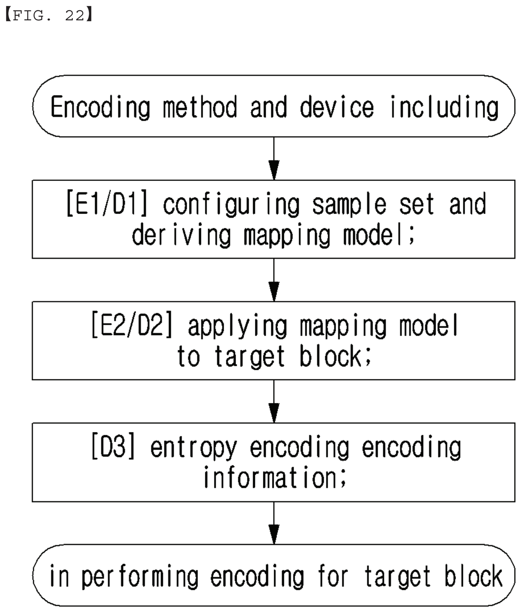

FIG. 22 shows bilateral matching according to an embodiment.

FIG. 22 shows a case in which BM_NUM is 2 in a motion information derivation step for the entire block of bilateral matching.

MV0 may be initial motion information for a L0 direction.

MV1 may be initial motion information for a L1 direction.

MVdiff may refer to a motion information improvement value derived through bilateral matching.

MV0' and MV1' may be motion information derived through bilateral matching.

In bilateral matching, a size of a motion information improvement value for a L0 direction may be the same as a size of a motion information improvement value for a L1 direction. A direction of a motion information improvement value for a L0 direction and a direction of a motion information improvement value for a L1 direction may be opposite to each other. In other words, the following Equations may be established.

$$MV0' = MV0 + MVdiff$$

$$MV1' = MV1 - Mvdiff$$

Subsampling in embodiments may be performed based on at least one of whether to perform template matching; an indicator indicating whether to perform template matching; whether to perform bilateral matching; an indicator indicating whether to perform bilateral matching; motion information of a target block; a coding parameter of a target block; or a search step in template matching and/or bilateral matching.

For example, a subsampling method may be determined based on at least one of whether to perform template matching; an indicator indicating whether to perform template matching; whether to perform bilateral matching; an indicator indicating whether to perform bilateral matching; motion information of a target block; a coding parameter of a target block; or a search step in template matching and/or bilateral matching.

For example, in performing template matching and/or bilateral matching, a subsampling method used may be the same for search steps.

Alternatively, for example, in performing template matching and/or bilateral matching, a subsampling method used may be different per search step.

Whether to perform subsampling in embodiments may be determined based on at least one of whether to perform template matching; an indicator indicating whether to perform template matching; whether to perform bilateral matching; an indicator indicating whether to perform bilateral matching; motion information of a target block; a coding parameter of a target block; or a search step in template matching and/or bilateral matching.

For example, whether to perform subsampling may be determined based on at least one of whether to perform template matching; an indicator indicating whether to perform template matching; whether to perform bilateral matching; an indicator indicating whether to perform bilateral matching; motion information of a target block; a coding parameter of a target block; or a search step in template matching and/or bilateral matching.

For example, in performing template matching and/or bilateral matching, whether to perform subsampling may be the same for search steps.

Alternatively, for example, in performing template matching and/or bilateral matching, whether to perform subsampling may be different per search step.

For example, whether to perform subsampling in a horizontal direction and whether to perform subsampling in a vertical direction may be the same.

For example, whether to perform subsampling in a horizontal direction and whether to perform subsampling in a vertical direction may be different.

A subsampling method in a search step that search is performed for the entire target block in template matching and/or bilateral matching and a subsampling method in a search step that search is performed for a sub-block within a target block in template matching and/or bilateral matching may be the same or different.

A decoder-side motion information derivation method may include the above-described template matching method, the above-described bilateral matching method, a method for improving motion information, a method for reordering a motion information list and a method for specifying a position in a search region.

In a method for improving motion information, second motion information may be derived by performing refinement on first motion information. In addition, a prediction block of a target block may be generated by performing prediction using second motion information. At least one of reference blocks of a target block may be specified by using second motion information.

In embodiments, refinement for specific information may refer to amending, correcting or updating specific information. In embodiments, terms "refinement", "amendment" and "correction" may be used interchangeably. Refinement for specific information may be performed to generate refined information.

Performing refinement for specific motion information may mean that at least one of the following methods is performed for corresponding motion information.

As an example, specific information included in corresponding motion information may be changed to a predetermined offset.

As an example, specific information included in corresponding motion information may be changed as a result of performing a specific operation on corresponding information and a predetermined offset.

The specific operation may include at least one of square, weighted average, weighted sum, four arithmetic operations or filtering.

The predetermined offset may include at least one of a motion vector, a reference picture index and an inter prediction indicator, reference picture list information, a reference image, a motion vector candidate, a motion vector candidate index, a merge candidate and a merge index, a block vector, a block vector candidate or a block vector candidate index.

For example, the predetermined offset may be specified from a predetermined offset candidate list.

Information for specifying the predetermined offset may be signaled/encoded/decoded.

An index for specifying at least one offset from the predetermined offset candidate list may be signaled/encoded/decoded.

For a list consisting of N motion information, based on a matching cost for each motion information in the list, a method for reordering a motion information list may be a method for performing reordering for at least one of motion information in the list.

For example, the order of motion information in a list consisting of the N motion information may be reordered in the ascending order of matching costs.

For example, the order of at least one motion information in a list consisting of the N motion information may be reordered in the ascending order of matching costs.

For example, after at least one motion information in a list consisting of the N motion information is reordered, the list may be reconfigured.

When a specific motion information list is reconfigured, it may mean at least of 1) configuring a list by using only some of motion information configuring a corresponding motion information list; 2) removing at least one of motion information configuring a corresponding motion information list from a list; or 3) inserting at least one new motion information into a corresponding motion information list.

For example, in 3) above, new motion information may be motion information determined based on at least one motion information in the motion information list. As an example, the new motion information may be an average or a weighted average of two motion information with the smallest index in the list.

Alternatively, for example, in 3) above, new motion information may be default motion information.

The N may be 2, 3, 4, 6, 8, 12 or a positive integer.

At least one motion information may be specified from the reordered list.

A prediction block of a target block may be generated by performing prediction using motion information specified from the reordered list.

At least one of reference blocks of a target block may be specified by using motion information specified from the reordered list.

For example, a list consisting of the N motion information may refer to a motion information merge candidate list of a target block. For example, a list consisting of the N motion information may refer to a list configured by a decoder-side motion information derivation method.

A method for specifying a position within a search region may be a method for specifying at least one position within a search region based on a matching cost or a method for specifying at least one position among some positions within a search region based on a matching cost.

In embodiments, position and motion information may be used interchangeably. In embodiments, a specific position may be used interchangeably with motion information indicating from a target block to a corresponding position. In embodiments, a specific position may refer to motion information indicating from a target block to a corresponding position. In embodiments, specific motion information may refer to a position indicated by corresponding motion information from a target block.

In embodiments, specifying a position may refer to specifying a sample at a corresponding position.

In embodiments, specifying a position may refer to specifying motion information indicating from a target block to a corresponding position.

For example, a decoder-side motion information derivation method may be to specify N positions with the lowest matching cost among positions in a search region.

A matching cost for a specific position may refer to a matching cost for motion information indicating from a target block to a corresponding position.

For example, N positions with the lowest matching cost within a search region may be specified. Alternatively, for example, N positions with the lowest matching cost among some positions in a search region may be specified.

The N may be 1, 2, 3, 4, 5, 6, 8, 12 or a positive integer.

A list may be configured by using the N specified positions. At least one position may be specified in the configured list, and prediction in a target block may be performed based on a corresponding position. Information for specifying a position from a list may be signaled/encoded/decoded.

A mapping model may be a model showing an association from a first variable set to a second variable set.

A first variable set may be referred to as an independent variable set (or, a set of independent variables). A set of independent variables may be a set of at least one variable that affects or is expected to be able to affect other variables (dependent variables).

A second variable set may be referred to as a dependent variable set (or, a set of dependent variables). A dependent variable set may be a set of at least one variable whose value is determined or is expected to be determined based on other variables (independent variables).

A mapping model may be a model that shows how a dependent variable changes as an independent variable changes.

An independent sample set may be a set of independent variables of a mapping model. Alternatively, a set of independent variables of a mapping model may be determined based on an independent sample set.

A dependent sample set may be a set of dependent variables of a mapping model. Alternatively, a set of dependent variables of a mapping model may be determined based on a dependent sample set.

A subject sample set may be a set of variables to which a mapping model is applied to predict at least one of samples of a target block and/or change at least one of sample values of a target block. Alternatively, a set of variables to which a mapping model is applied for prediction of at least one of samples of a target block and/or change of at least one of sample values of a target block may be determined based on a subject sample set.

As an embodiment, a variable may include a sample value, and when a variable is a sample value, an independent variable set and a dependent variable set may be expressed as an independent sample set and a dependent sample set. Here, a sample value may be any one of a sample value for one sample, a value obtained by modifying the sample value by using a neighbor sample and a representative value of a plurality of samples. Here, a representative value may be any one of an average value, a median value, the maximum value, and the minimum value.

Prediction for at least one of samples of a target block may be performed based on a subject sample set or a mapping model that calculates an association between an independent sample set and a dependent sample set.

Prediction for at least one of samples of a target block may be performed based on a result obtained by inputting a subject sample set to a mapping model or a set of obtained results.

At least one of sample values of a target block may be changed based on a subject sample set or a mapping model that calculates an association between an independent sample set and a dependent sample set.

At least one of sample values of a target block may be changed based on a result obtained by inputting a subject sample set to a mapping model or a set of obtained results.

FIG. 22 is a flowchart of an encoding method for a target block according to an embodiment.

A target block may be encoded by including at least one of configuring a sample set and derive a mapping model; applying a mapping model to a target block; or entropy-encoding encoding information.

An embodiment may be part of a video encoding method or an encoding method of a target block.

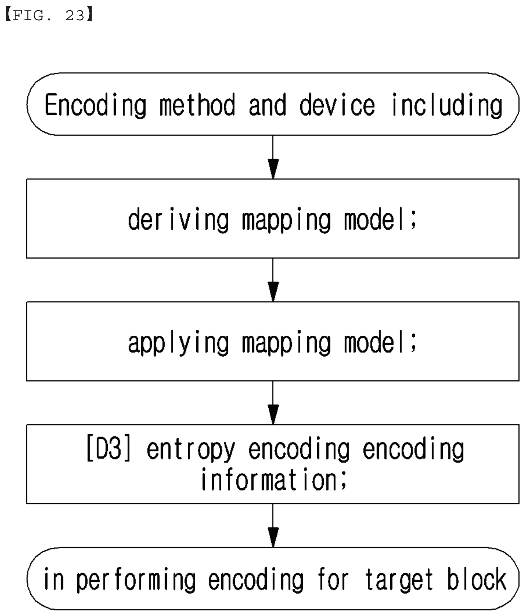

FIG. 23 is a flowchart of an encoding method for a target block according to an embodiment.

A target block may be encoded by including at least one of deriving a mapping model; applying a mapping model; or entropy-encoding encoding information.

An embodiment may be part of a video encoding method or an encoding method of a target block.

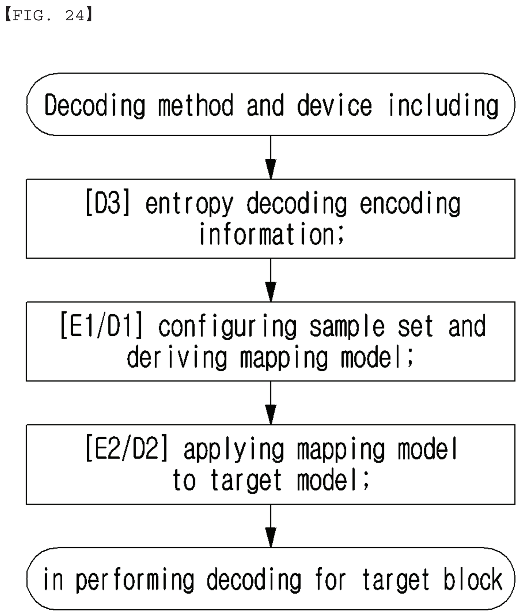

FIG. 24 is a flowchart of a decoding method for a target block according to an embodiment.

A target block may be decoded by including at least one of entropy-decoding encoding information; configuring a sample set and deriving a mapping model; or applying a mapping model to a target block.

An embodiment may be part of a video decoding method or a decoding method of a target block.

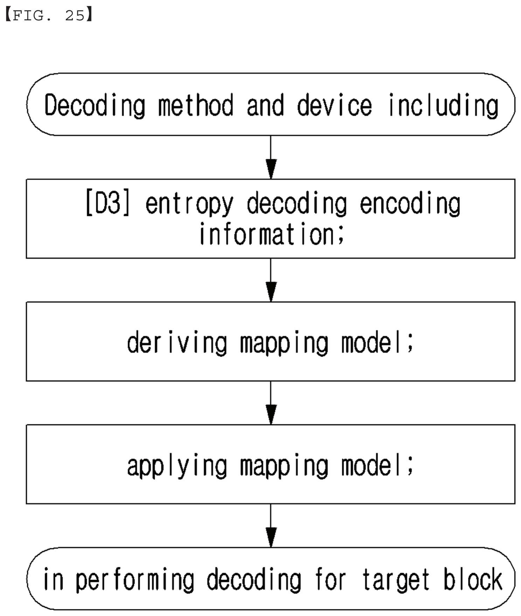

FIG. 25 is a flowchart of a decoding method for a target block according to an embodiment.

A target block may be decoded by including at least one of entropy-decoding encoding information; deriving a mapping model; or applying a mapping model.

An embodiment may be part of a video decoding method or a decoding method of a target block.

A model-based prediction method may include at least one of configuring at least one of an independent sample set, a dependent sample set or a subject sample set; configuring mapping model input for each sample/position within an independent sample set; configuring mapping model target output for a sample/a position within a dependent sample set corresponding to each sample/position within an independent sample; deriving a coefficient of a mapping model to minimize the sum (or, average) of differences between input and target output for all samples/positions within an independent sample set; configuring mapping model input for each sample/position within a subject sample set; or after inputting a mapping model for each sample/position within a subject sample set and outputting a result value from a mapping model, using it to perform (at least one of prediction, reconstruction or decoding) and/or (change in at least one value of prediction, reconstruction or decoding) in a target block.

An input structure may relate to how to configure an input when configuring an input for a predetermined sample (or, position). An output structure may relate to the form of an output for a predetermined input.

An input structure of a mapping model may be information including at least one of information about at least one input component of a mapping model (including gradient information of an input component), a relationship between at least two input components of a mapping model (e.g., a position relationship between a first input component and a second input component; e.g., a method for deriving a second input component from a first input component), a relationship between at least one input component of a mapping model and at least one output component of a mapping model or information about the number of input components of a mapping model (a size of an input).

An output structure of a mapping model may be information including at least one of information about each output component of a mapping model, a relationship between at least two output components of a mapping model, a relationship between at least one input component of a mapping model and at least one output component of a mapping model and information about the number of output components of a mapping model (a size of an output).

Information about a specific input (or, output) component may be information including at least one of a type of a corresponding input (or, output) component, a method for deriving a corresponding input (or, output) component, a method for determining a corresponding input (or, output) component, a relationship with another input (or, output) component (e.g., a position relationship, a derivation method) or a relationship with at least one output (or, input) component.

A type of a specific input (or, output) component may include at least one of a value of a sample and/or a value based thereon; a position of a sample and/or a value based thereon; or a bias.

The sample may be (at least one of a prediction, a reconstructed sample, a residual sample or a decoded sample) of

(at least one of a luma component or a chroma component) of (at least one of a target block, a neighbor block of a target block, a reference block of a target block or a neighbor block of a reference block of a target block).

A value based on a value of a specific sample may refer to a result of performing a specific operation on a value of a specific sample or values including a value of a specific sample.

A value based on a position of a specific sample may refer to a result of performing a specific operation on a position of a specific sample or values including a position of a specific sample.

As an example, an input structure may have four input components. When configuring input for a specific sample, each of four input components may be a corresponding sample, a left sample of a corresponding sample, a right sample of a corresponding sample and a bias.

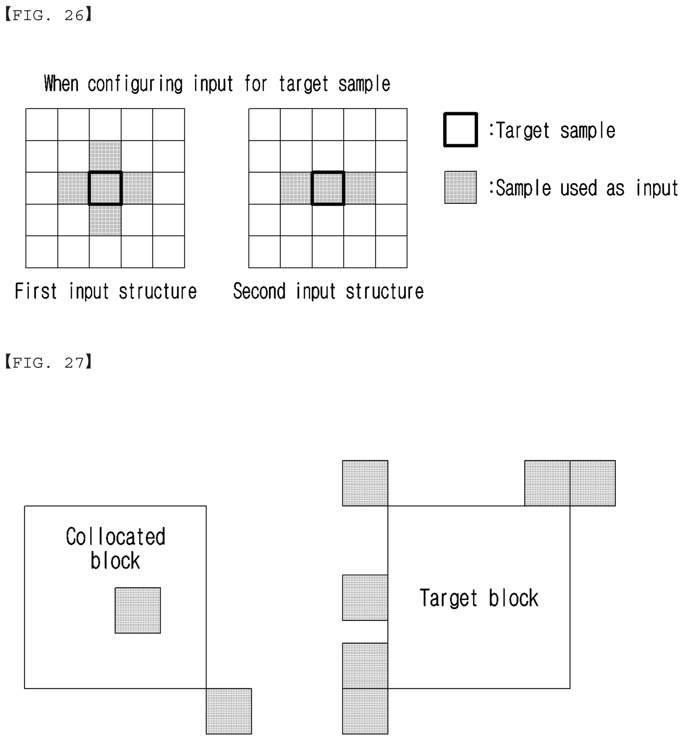

FIG. 26 shows an embodiment for a first input structure and a second input structure.

When a first input structure includes a second input structure, it may mean that when configuring an input for the same sample (or, position) by using a first input structure and a second input structure, an input using a first input structure includes all input components of an input using a second input structure.

Alternatively, when a first input structure includes a second input structure, it may mean that when configuring an input for the same sample (or, position) by using a first input structure and a second input structure, an input using a first input structure includes at least one input component of an input using a second input structure.

A Bias may be used with the same meaning, and may be replaced with each other. A bias may show motion information and/or a target of a target block.

Herein, each of a bias and a bias value may be a value determined based on at least one of a coding parameter of a block, a size of a target block, a range of values that a luma component of a target block may have, a range of values that a chroma component of a target block may have, a sample of a target block, a sample of a collocated block of a target block, availability of a neighbor block of a target block, a coding parameter of a neighbor block of a target block or a neighbor sample of a target block.

For example, at least one of bias values may be a value obtained by dividing a size of a range of values that a luma component (or, a chroma component) of a target block may have by a specific value. The specific value may be 2, 4 or a positive integer.

For example, at least one of bias values may be a median value of values that a luma component (or, a chroma component) of a target block may have.

For example, at least one of bias values may be a value of a sample existing at a specific position based on a target block or a value of a sample existing at a specific position based on a collocated block.

FIG. 27 is a diagram for describing a specific position.

Referring to FIG. 27, at least one of bias values may be a value of a sample existing in at least one of a shaded position based on a target block and a shaded position based on a collocated block in FIG. 27.

A size of a block may refer to at least one of a width of a block, a height of a block or the number of samples in a block.

Herein, a specific operation may include at least one of power, a weighted average, a weighted sum, four arithmetic operations or filtering.

For example, a specific operation may include at least one of a weighted average, a weighted sum or four arithmetic operations with a specific value.

The specific value may be determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

For example, the specific value may be a value of a sample present in at least one of shaded positions in FIG. 27.

For example, the specific value may be a median value of a range of values that a luma component (or, a chroma component) of a target block may have.

A position of a sample may refer to a relative position from a top-left sample of a target block or a relative position from a top-left sample of an image. A position in an image may refer to a relative position from a top-left sample of an image.

For example, the specific value may be a x component and/or a y component of a position of a top-left sample of a target block.

For example, a dynamic range of values calculated in a process of deriving a mapping model may be limited by using a second value that is a result of performing a specific operation (e.g., subtraction, multiplication, division) on a first value, instead of a first value. Accordingly, complexity of an operation may be reduced and a size of a memory storage required for an operation may be limited.

For example, a mapping mode may be allowed to express a more complicated relationship by using a second value that is a result of performing a specific operation (e.g., power) on a first value, instead of a first value.

Herein, a value based on a first value may refer to one of a first value and/or a result of performing a specific operation on a first value.

Configuring a sample set may include selecting at least one sample.

Alternatively, configuring a sample set may include determining a region of a sample, and determining a region of a sample by using at least one of a value of at least one sample within a corresponding region; position information of at least one sample; a value of at least one sample; motion information of at least one sample; or a value based on motion information and/or position information of at least one sample position for deriving a mapping model.

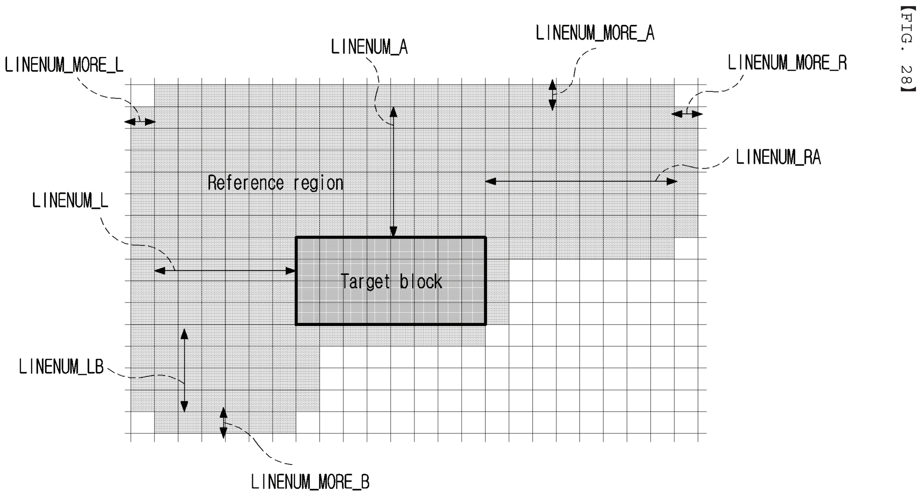

FIG. 28 shows a reference region used to derive a mapping model.

Configuring a sample set by using samples within a reference region may include determining a reference region of FIG. 28 and determining a reference region by using a value of at least one sample within a corresponding region to derive a mapping model. A sample set may refer to at least one of an independent sample set, a dependent sample set or a subject sample set.

Information for determining at least one of an independent sample set, a dependent sample set or a subject sample set may be predefined in an encoder and a decoder. According to rules that are predefined in an encoder and a decoder, a sample set for deriving a mapping model may be configured; and/or a sample set to which a mapping model will be applied may be configured.

An input of a mapping model may be configured for each sample (or, position) within (an independent sample set and/or a subject sample set).

If an input of a mapping model is configured for each sample (or, position) within an independent sample set, a target output for a corresponding input may be configured for a sample (or, position) within a dependent sample set corresponding to each sample (or, position) within the subject sample set.

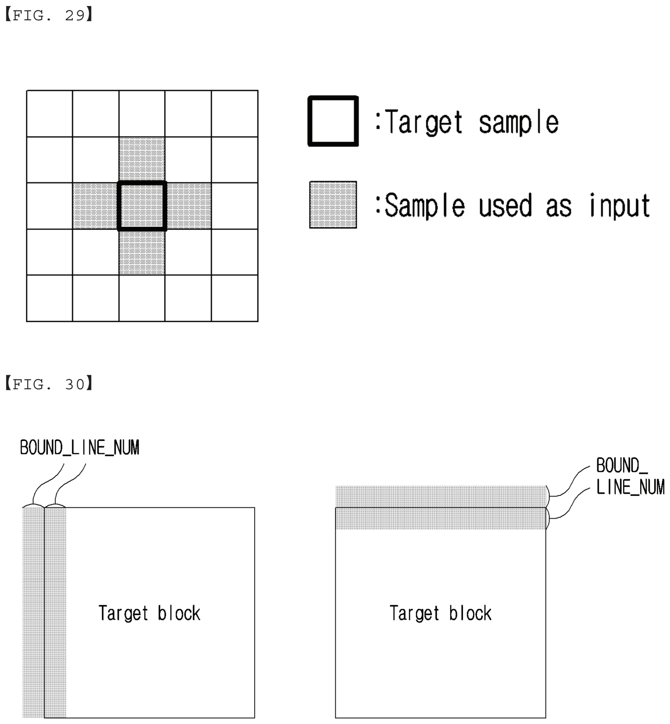

FIG. 29 shows samples of calculation of mapping model output.

Referring to FIG. 29, when configuring an input of a mapping model for a target sample and calculating an output of a mapping model by using a target sample and samples around a target sample, it may be considered the same as performing cross-shaped filtering centered on a target sample position.

Each of an independent sample set, a dependent sample set and a subject sample set may include at least one of a sample in a reference region, a sample in a target block or a sample in a block corresponding to a target block.

For example, a reference region may not include a sample within a reference region of a target block, or may include at least one sample within a reference region of a target block.

For example, a reference region may not include a sample within a reference region of a reference block or may include at least one sample within a reference region of a reference block.

For example, a reference region may be a region adjacent to at least one of a target block, a reference region or a block corresponding to a target block.

Herein, "adjacent" may not necessarily mean "bordering".

**EP 4 697 701 A1**

A reference region in FIG. 28 may represent a reference region in a model-based prediction method according to an embodiment.

As an example, LINENUM_L, LINENUM_LB, LINENUM_A and LINENUM_RA may be 0, 1, 2, or a positive integer, respectively.

As an example, LINENUM_L, LINENUM_LB, LINENUM_A and LINENUM_RA may be a predefined value, respectively.

As an example, LINENUM_MORE_X may be 0, 1, 2, or a positive integer. (X is A, B, L, R)

As an example, LINENUM_MORE_X may be a predefined value. Alternatively, information about LINENUM_MORE_X may be signaled/encoded/decoded.

As an example, in configuring an input of a mapping model for a specific sample within an independent sample set of a mapping model, if a sample at a position up to N away in a specific direction based on a position of a corresponding sample is used, a value of LINENUM_MORE_X for a corresponding direction may be determined as N. The N may be 0, 1, or a positive integer. The specific direction may include at least one of the top, the bottom, the left or the right.

A size and/or a position of a reference region may be determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block, a neighbor sample of a target block or a mapping model.

A size of a reference region may include at least one of LINENUM_L, LINENUM_LB, LINENUM_A, LINENUM_RA, or LINENUM_MORE_X.

For example, at least one of LINENUM_MORE_A, LINENUM_MORE_B, LINENUM_MORE_L, or LINENUM_MORE_R may be determined based on an input structure in a model-based prediction model.

A configuration of a reference region may be different from that shown. As an example, in FIG. 28, a reference region may be configured only with top adjacent regions, or a reference region may be configured only with left adjacent regions. According to a target to be predicted through a matching model, a configuration of a reference region may be different.

A reference region may be also configured so that it is not adjacent to a target block. In addition, after specifying a plurality of reference region candidates, one of a plurality of reference region candidates may be selected. The reference region candidate may be at least one of a region within a target image; a region within a reference image; or a region within a collocated image. As an example, the availability of a region spaced a predetermined distance away from a target block may be determined, and if a corresponding region is available, a corresponding region may be inserted into a list as a reference region candidate. Here, a region spaced by a predetermined distance may be a region of a specific size where a position obtained by spacing a horizontal distance and a vertical distance from one of a top boundary and a left boundary of a current block by a unit distance is considered as a central/top-left position. As another example, the availability of a region spaced a predetermined distance away from a collocated block may be determined, and if a corresponding region is available, a corresponding region may be inserted into a list as a reference region candidate. Here, a region spaced by a predetermined distance may be a region of a specific size where a position obtained by spacing a horizontal distance and a vertical distance from one of a top boundary and a left boundary of a collocated block by a unit distance is considered as a central/top-left position. Here, a unit distance may be N, 2N, 3N, 4N, etc., and N may be 4, 8, 16, etc. A region of a specific size may be 4x4, 8x8 or 16x16.

When a plurality of candidates are inserted into a list, information indicating one of a plurality of reference region candidates may be encoded and signaled.

Information representing a configuration of a reference region may be encoded and signaled. The information may represent whether at least one of a top adjacent region, a left adjacent region, a top-left adjacent region or a bottom-right adjacent region is included in a reference region. As an example, the information may be an index indicating one of configuration candidates of a reference region. The configuration candidates may include one of a candidate consisting of a top adjacent region and a left adjacent region, a candidate consisting of only a top adjacent region, a candidate consisting of only a left adjacent region, a candidate consisting of a top region and a top-right region and a candidate consisting of a left region and a bottom-left region.

A block corresponding to a target block may refer to at least one of a reference block of a target block; a chroma component block corresponding to a target block when a target block is a luma component block; or a luma component block corresponding to a target block when a target block is a chroma component block, but a type of a block corresponding to a target block is not limited thereto.

A reference region in a model-based prediction method may be the same as a reference region in other prediction methods. Alternatively, a reference region in a model-based prediction method may be different from a reference region in other prediction methods. The other prediction methods may include template matching.

Herein, "specific information is determined based on a mapping model" may mean that the specific information is determined based on at least one of MODEL_INPUT_NUM of a mapping model; MODEL_OUTPUT_NUM of a mapping model; at least one bias value in a mapping model; a method for configuring an input of a mapping model; an input structure of a mapping model; an output structure of a mapping model; a method for performing (at least one of prediction, reconstruction and decoding) of a sample within a target block from an output of a mapping model; or a method for changing a value of (at least one of prediction, reconstruction and decoding) of a sample within a target block from an output of a mapping model, but the meaning of "specific information is determined based on a mapping model" is not limited thereto.

Each of an independent sample set, a dependent sample set and a subject sample set may include at least one of a prediction sample, a reconstructed sample, a residual sample or a decoded sample of at least one of a target block, a neighbor block of a target block, a reference block of a target block and a neighbor block of a reference block of a target block. In addition, the sample may related to at least one of a luma component or a chroma component.

When a specific sample is included in a specific sample set, it may mean that at least one of motion information in a block including a sample value of a corresponding specific sample; motion information of a corresponding specific sample; a coding parameter of a corresponding specific sample; a prediction mode of a corresponding specific sample; a x-component of a position of a sample; a y-component of a position of a sample and a corresponding specific sample or motion information at a corresponding specific sample position is included in a specific sample set. Alternatively, when a specific sample is included in a specific sample set, it may mean that a value based on at least one of motion information in a block including a sample value of a corresponding specific sample; motion information of a corresponding specific sample; a coding parameter of a corresponding specific sample; a prediction mode of a corresponding specific sample; a x-component of a position of a sample; a y-component of a position of a sample and a corresponding specific sample and motion information at a corresponding specific sample position is included in a specific sample set.

"A specific sample is included in a specific sample set" and "a specific sample is used to configure a specific sample set" may be used with the same meaning, and may be used interchangeably in embodiments.

"A value based on a specific value" may refer to a result of performing a specific operation on a specific value.

A prediction sample may refer to a luma component prediction component and/or a chroma component prediction component. A reconstructed sample may refer to a luma component reconstructed component and/or a chroma component reconstructed component. A residual sample may refer to a luma component residual component and/or a chroma component residual component. A decoded sample may refer to a luma component decoded component and/or a chroma component decoded component.

A reference block may include at least one of a reference block in a L0 direction in inter prediction, a reference block in a L1 direction in inter prediction, a reference block in intra template matching or a reference block in intra block copy.

An intra template matching mode may refer to a template matching method in which each of a reference block, a reference template and a reference region includes at least one of a prediction sample, a reconstructed sample, a residual sample or a decoded sample of a target image.

Information on a method for configuring at least one of an independent sample set, a dependent sample set or a subject sample set may be signaled/encoded/decoded.

A method for configuring a specific sample set may refer to a method including at least one of 1) the number of samples used to configure a sample set and/or the maximum number of samples used to configure a sample set; 2) a size and/or a position of a region where samples used to configure a sample set exist; 3) a shape, a size and/or a position of a region where samples used to configure a sample set are selected; 4) a type of at least one of samples used to configure a sample set; 5) whether to include a bias value; 6) a method for determining a bias value; 7) a padding method in configuring a corresponding sample set; or 8) a size and/or a position of a reference region.

A method for configuring a specific sample set may be classified based on 1) the number of samples used to configure a sample set and/or the maximum number of samples used to configure a sample set; 2) a size and/or a position of a region where samples used to configure a sample set exist; 3) a shape, a size and/or a position of a region where samples used to configure a sample set are selected; 4) a type of at least one of samples used to configure a sample set; 5) whether to include a bias value; 6) a method for determining a bias value; 7) a padding method in configuring a corresponding sample set; or 8) a size and/or a position of a reference region.

Information about the method for configuring a sample set may be information including at least one of 1) the number of samples used to configure a sample set and/or the maximum number of samples used to configure a sample set; 2) a size and/or a position of a region where samples used to configure a sample set exist; 3) a shape, a size and/or a position of a region where samples used to configure a sample set are selected; 4) a type of at least one of samples used to configure a sample set; 5) whether to include a bias value; 6) a method for determining a bias value; 7) a padding method in configuring a corresponding sample set; or 8) a size and/or a position of a reference region.

Information about a method for configuring at least one of an independent sample set, a dependent sample set or a subject sample set may be determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

For example, information about a method for configuring at least one of an independent sample set, a dependent sample set or a subject sample set may be determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block, a neighbor sample of a target block or a mapping model.

For example, a method for configuring at least one sample set of an independent sample set, a dependent sample set or a subject sample set may be determined based on whether a neighbor block in a specific direction is available for a target block.

Whether it is available may include whether it exists. The specific direction may be one of left-above, above, right-above, left, right, left-below, below or right-below.

In configuring at least one of an independent sample set, a dependent sample set or a subject sample set, based on whether at least one neighbor block positioned at a specific direction is available for a target block, whether to include at least one of samples in a corresponding specific direction in a corresponding sample set may be determined.

For example, based on a ratio of a width and a height of a target block, a method for configuring at least one sample set of an independent sample set, a dependent sample set or a subject sample set may be determined.

In configuring at least one of an independent sample set, a dependent sample set or a subject sample set, whether to include at least one of samples in a specific direction in a corresponding sample set may be determined based on a ratio of a width and a height of a target block.

The specific direction may be one of left-above, above, right-above, left, right, left-below, below and right-below.

In configuring at least one of an independent sample set, a dependent sample set or a subject sample set, a size and/or a position of a reference region may be determined based on a ratio of a width and a height of a target block.

For example, based on at least one of a prediction mode, motion information or a coding parameter of a target block, a method for configuring at least one sample set of an independent sample set, a dependent sample set or a subject sample set may be determined.

In configuring at least one of an independent sample set, a dependent sample set or a subject sample set, a type of at least one of samples used to configure a sample set may be determined based on at least one of a prediction mode, motion information or a coding parameter of a target block.

The type of a sample may include at least one of at least one bias value or at least one of a prediction sample, a reconstructed sample, a residual sample or a decoded sample of at least one of a luma component and a chroma component of at least one of a target block, a neighbor block of a target block, a reference block of a target block or a neighbor block of a reference block of a target block.

For example, when a target block is in a geometric partitioning mode, a method for configuring at least one sample set of an independent sample set, a dependent sample set or a subject sample set may be determined.

For example, when a target block is in a geometric partitioning mode, at least one of an independent sample set, a dependent sample set or a subject sample set may be determined based on at least one of information about a geometric partitioning mode.

The information about a geometric partitioning mode may refer to at least one of a division boundary, a division mode, a division angle or a division offset of a geometric partitioning mode, but information about a geometric partitioning mode is not limited thereto.

For example, for a boundary in a specific direction of a target block, whether to use a neighbor sample in the specific direction to configure at least one of an independent sample set, a dependent sample set or a subject sample set may be determined based on a sample value of at least one of adjacent neighbor samples in BOUND_LINE_NUM rows/columns and/or at least one of samples in BOUND_LINE_NUM rows/columns in a target block.

BOUND_LINE_NUM can be 1, 2 or a positive integer. BOUND_LINE_NUM may be determined based on at least one of motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

FIG. 30 is a diagram for describing a neighbor sample within a target block and BOUND_LINE_NUM rows/-columns and a sample within BOUND_LINE_NUM rows/columns within a target block.

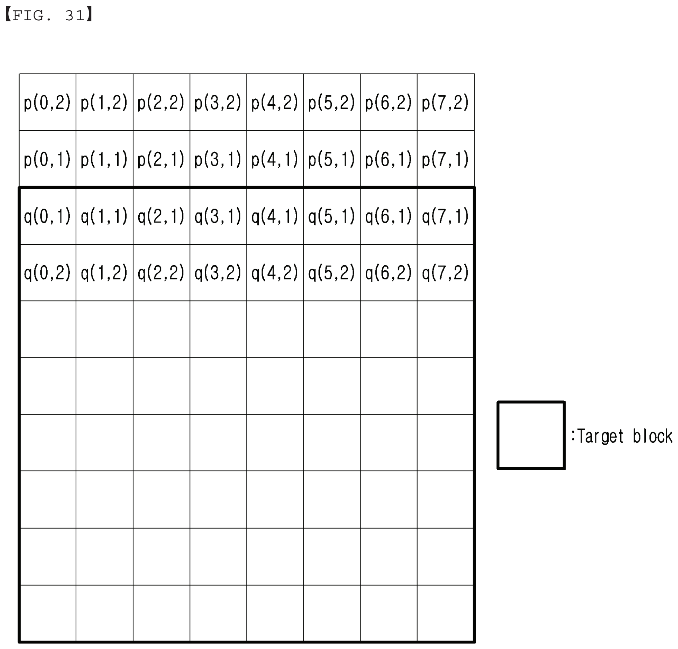

FIG. 31 shows an embodiment determining whether to use top neighbor samples in configuring various sample sets based on at least one of a neighbor sample within two top rows/columns of a target block or a sample within two rows/columns within a target block.

Referring to FIG. 31, for a boundary in a top direction of a target block, whether to use a neighbor sample in a top direction to configure at least one of an independent sample set, a dependent sample set or a subject sample set may be determined based on a sample value of at least one of neighbor samples within two adjacent rows/columns and/or at least one of samples within two rows/columns within a target block.

In FIG. 31, if a value of $\sum_{x=0}^{7}(w_0 \times p(x,2)+w_1 \times p(x,1)+w_2 \times q(x,1)+w_3 \times q(x,2))$ is equal to or greater than a specific threshold value, a neighbor sample in a top direction of a target block may not be used to configure an independent sample set, a dependent sample set and a subject sample set. For example, if a value of

$\sum_{x=0}^{7}(w_0 \times p(x,2)+w_1 \times p(x,1)+w_2 \times q(x,1)+w_3 \times q(x,2))$ is less than a specific threshold value, at least one of neighbor samples in a top direction of a target block may be used to configure at least one of an independent sample set, a dependent sample set or a subject sample set.

In the embodiment, x has a value from 0 to 7 because a block size is 8x8, but even when a block size is 8x8, x may have a value in a different range and may have values determined at an interval greater than 1 (e.g., 0,2,4,6).

A mapping model may be a regression model. For example, a mapping model may be a filter.

For example, a mapping model may be derived through regression analysis.

For example, in order to reduce complexity in deriving a mapping model, at least one of LU decomposition, LDL decomposition or Gaussian elimination may be used.

A mapping model may be a model that outputs a result value having MODEL_OUTPUT_NUM components from an input consisting of MODEL_INPUT_NUM components.

When a specific sample is included in an input of a mapping model, it may mean that at least one of a sample value of a corresponding specific sample; motion information of a corresponding specific sample; a coding parameter of a corresponding specific sample; a prediction mode of a corresponding specific sample; a x-component of a position of a sample; a y-component of a position of a sample; motion information in a block including a corresponding specific sample or motion information at a corresponding specific sample position is included in a specific sample set. Alternatively, when a specific sample is included in a specific sample set, it may mean that a value based on at least one of a sample value of a corresponding specific sample; motion information of a corresponding specific sample; a coding parameter of a corresponding specific sample; a prediction mode of a corresponding specific sample; a x-component of a position of a sample; a y-component of a position of a sample; motion information in a block including a corresponding specific sample or motion information at a corresponding specific sample position is included in an input.

"A specific sample is included in an input" and "a specific sample is used in configuring an input" may be used with the same meaning, and may be used interchangeably in embodiments.

"A result of a mapping model" and "an output of a mapping model" may be used with the same meaning, and may be used interchangeably in embodiments.

MODEL_INPUT_NUM and MODEL_OUTPUT_NUM may be a positive integer, respectively.

MODEL_INPUT_NUM and MODEL_OUTPUT_NUM may be a predefined value, respectively. Alternatively, information about at least one of MODEL_INPUT_NUM or MODEL_OUTPUT_NUM may be signaled/encoded/decoded.

A mapping model may be a linear model. Alternatively, a mapping model may be a non-linear model.

A relationship among mapping model f, input $X= \{x_1,x_2,...,x_{MODEL\_INPUT\_NUM}\}$ and result value $Y= \{y_1,y_2,..., y_{MODEL\_OUTPUT\_NUM}\}$ may be expressed as in the following embodiments.

$$Y=f(X)$$

$$y_1=a_{1,1} \times x_1+a_{2,1} \times x_2+...+a_{(MODEL\_INPUT\_NUM),1} \times x_{MODEL\_INPUT\_NUM}$$

$$y_2=a_{1,2} \times x_1+a_{2,2} \times x_2+...+a_{(MODEL\_INPUT\_NUM),2} \times x_{MODEL\_INPUT\_NUM}$$

...

$$y_{MODEL\_OUTPUT\_NUM}=a_{1,MODEL\_OUTPUT\_NUM} \times x_1+a_{2,MODEL\_OUTPUT\_NUM} \times x_2$$

$$+...+a_{MODEL\_INPUT\_NUM, MODEL\_OUTPUT\_NUM} \times x_{MODEL\_INPUT\_NUM}$$

$a_{i,j}$ may refer to a coefficient of mapping model f.

i may have a value from 1 to MODEL_INPUT_NUM.

j may have a value from 1 to MODEL_OUTPUT_NUM.

When mapping model f is derived, it may mean that at least one of coefficients of mapping model f is derived.

For a specific sample within an independent sample set, an input consisting of MODEL_INPUT_NUM components may be determined, including at least one of a corresponding sample; a neighbor sample adjacent to a corresponding sample; a neighbor sample non-adjacent to (not bordering) a corresponding sample; a bias value; or a result of performing a specific operation on at least one of elements described above.

For example, at least one of adjacent neighbor samples and/or at least one of bias values used to configure an input for a specific sample in an independent sample set may not be included in an independent sample set.

For example, an input may include a bias value that is independent of the specific sample.

For a particular sample in an independent sample set, a target output consisting of MODEL_OUTPUT_NUM components may be determined, including at least one of a sample within a dependent sample set corresponding to a corresponding sample; a neighbor sample adjacent to a sample within a dependent sample set corresponding to a corresponding sample; a neighbor sample non-adjacent to (not bordering) a sample within a dependent sample set corresponding to a corresponding sample; or a bias value.

A mapping model may be a model that calculates an association between an input and a target output for each sample in an independent sample set.

When an input and a target output are determined for each sample in an independent sample set, a mapping model may be derived to ensure that a result value of a mapping model for an input for all samples is similar to a target output on average.

For a specific sample in an independent sample set, in using a neighbor sample of a corresponding sample as an input, if a specific neighbor sample is not available, a sample determined based on at least one of available sample(s) that are most adjacent to a position of a corresponding neighbor sample may be used as an input instead of the specific neighbor sample. This processing may be expressed as padding for a corresponding neighbor sample being performed.

A sample in a dependent sample set that corresponds to a specific sample in an independent sample set may refer to at least one of a sample in a dependent sample set that corresponds to a position of a corresponding sample; and/or at least one of target outputs determined for a corresponding sample.

For example, in configuring an independent sample set and/or a dependent sample set, NUM_SAMPLE_TO_REF samples may be used.

The NUM_SAMPLE_TO_REF may be a fixed constant value. Alternatively, the NUM_SAMPLE_TO_REF may be a value which is adaptively determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

For example, if a size of a target block is less than or equal to a specific value, it may have a value of NUM_SAMPLE_TO_REF=(H+W), and otherwise, it may have a value of NUM_SAMPLE_TO_REF= (H+W)/STEP_TO_REF.

STEP_TO_REF may be 2, 4, 8 or a positive integer.

Alternatively, for example, if a size of a target block is less than or equal to a specific value, it may have a value of NUM_SAMPLE_TO_REF=(H+W), and otherwise, it may have a value of NUM_SAMPLE_TO_REF= NUM_SAMPLE_TO_REF_CONST.

NUM_SAMPLE_TO_REF_CONST may be 8, 16, 32, 64, 128 or a positive integer.

A size of a target block may refer to at least one of a height, a width, a product of a height and a width, a sum of a height and a width, a larger value of a height and a width, a smaller value of a height and a width or a diagonal length of a target block.

For a specific sample within a dependent sample set, a target output consisting of MODEL_OUTPUT_NUM components may be determined, including at least one of a corresponding sample; a neighbor sample adjacent to a corresponding sample; a neighbor sample non-adjacent to (not bordering) a corresponding sample; a bias value; or a result of performing a specific operation on at least one of the above-described elements.

For example, at least one of bias values and/or at least one of adjacent neighbor samples used to configure an input for a specific sample in a dependent sample set may not be included in an independent sample set.

For a specific sample in a dependent sample set, an input consisting of MODEL_INPUT_NUM components may be determined, including at least one of a sample within an independent sample set corresponding to a corresponding sample; a neighbor sample adjacent to a sample within an independent sample set corresponding to a corresponding sample; a neighbor sample non-adjacent to (not bordering) a sample within a dependent sample set corresponding to a corresponding sample; a bias value; or a result of performing a specific operation on at least one of the above-described elements.

A mapping model may be a model that calculates an association between an input and a target output for each sample in a dependent sample set.

A mapping model may be derived to ensure that when an input and a target output are determined for each sample in a dependent sample set, a result value of a mapping model for an input for all samples is similar to a target output on average.

For a specific sample in a dependent sample set, in using a neighbor sample of a corresponding sample as a target output, if a specific neighbor sample is not available, a sample determined based on at least one of available sample(s) that are most adjacent to a position of a corresponding neighbor sample may be used as a target output instead of the specific neighbor sample. This processing may be expressed as padding for a corresponding neighbor sample being performed.

A sample in an independent sample set that corresponds to a specific sample in a dependent sample set may refer to at least one of a sample in an independent sample set that corresponds to a position of a corresponding sample; and/or at least one of inputs determined for a corresponding sample.

A relationship among mapping model f, input $X=\{x_1,x_2,...,x_{MODEL\_INPUT\_NUM}\}$ and target output $Y_{target}=\{y_{target\_1},y_{target\_2},...,y_{taget\_(MODEL\_OUTPUT\_NUM)}\}$ may be expressed as in the following embodiments. $\varepsilon$ may refer to an error between a target output and an output value of a mapping model for an input.

$$Y_{target}=f(X)+\varepsilon$$

Mapping model f may be derived to minimize the sum or an average of $\varepsilon$ for all samples in a dependent sample set or for some samples in a dependent sample set.

For example, in deriving a mapping model, at least one coefficient of a mapping model may be determined as one value selected from a candidate list consisting of predefined DEFAULT_COEF_NUM values. The DEFAULT_COEF_NUM may be 1, 2, 3 or a positive integer. A value of DEFAULT_COEF_NUM may be predefined, or information about DEFAULT_COEF_NUM may be signaled/encoded/decoded. For example, information about which candidate value among DEFAULT_COEF_NUM candidate values will be used to determine a coefficient of a mapping model may be signaled/encoded/decoded.

An input of a mapping model may include at least one of 1) a value of at least one sample in an independent sample set and/or a value based thereon; 2) a position of at least one sample in an independent sample set and/or a value based thereon; 3) a value of at least one sample in a target sample set and/or a value based thereon; 4) a position of at least one sample in a target sample set and/or a value based thereon; or 5) a bias.

Information about a model-based prediction method in a target block may be stored. A model-based prediction method may be performed based on information about a model-based prediction **method stored** in the target block in a block encoded/decoded after a target block. A model-based prediction method may be performed in a target block based on information about a model-based prediction method in a block encoded/decoded before a target block.

It may be information including at least one of whether to perform and/or an indicator indicating whether to perform a model-based prediction method in a target block; a method for configuring at least one of an independent sample set, a dependent sample set or a subject sample set in a target block; at least one of a sample, a position or a sample value included in an independent/dependent/subject sample set in a target block; a method for determining a reference region in a target block; mapping model information in a target block; whether to use and/or an indicator indicating whether to use a multi-mapping model in a target block; or the number and/or the maximum number of mapping models in a target block.

Mapping model information may be information including at least one of MODEL_INPUT_NUM of a mapping model; MODEL_OUTPUT_NUM of a mapping model; at least one coefficient of a mapping model; an input structure of a mapping model; or an output structure of a mapping model.

A type of a specific variable may be about a component of a corresponding variable. For example, a type of a specific variable may be classified based on at least one of whether to perform an operation, a type of an operation performed or a type of a component.

A type of a component may include at least one of at least one bias value or at least one of a prediction sample, a reconstructed sample, a residual sample or a decoded sample of at least one of a luma component and a chroma component of at least one of a target block, a neighbor block of a target block, a reference block of a target block or a neighbor block of a reference block of a target block.

Based on information about a model-based prediction method stored in a second block that is encoded/decoded before a first block, a model-based prediction method in a first block may be performed. Alternatively, based on information about a model-based prediction method stored in a second block that is encoded/decoded before a first block, information about a model-based prediction method in a first block may be performed.

Herein, "inherit information about a model-based prediction method in a second block from a first block" may mean that based on information about a model-based prediction method stored in a second block that is encoded/decoded before a first block, a model-based prediction method in a first block is performed. Alternatively, herein, "inherit information about a model-based prediction method in a second block a first block" may mean that based on information about a model-based prediction method stored in a second block that is encoded/decoded before a first block, information about a model-based prediction method in a first block is performed.

For example, at least one coefficient of at least one mapping model included in information about a model-based prediction method stored in a second block may be determined as one of coefficients of a mapping model in a first block.

Inheriting information about a model-based prediction method in a second block from a first block may be considered as deriving mapping model f in a first block.

For example, part of coefficients of at least one mapping model included in information about a model-based prediction method stored in a second block may be determined as part of coefficients of a mapping model in a first block. Afterwards, the remaining coefficients of a mapping model in a first block may be derived through regression analysis.

Information about a model-based prediction method of a current block may be inherited from at least one candidate block. A candidate block may include at least one of a neighbor block adjacent to a current block or a non-adjacent block not adjacent to a current block.

As an example, an adjacent block may include at least one of blocks adjacent to the top, top-left, top-right, left or bottom-left of a current block, as shown in FIG. 27.

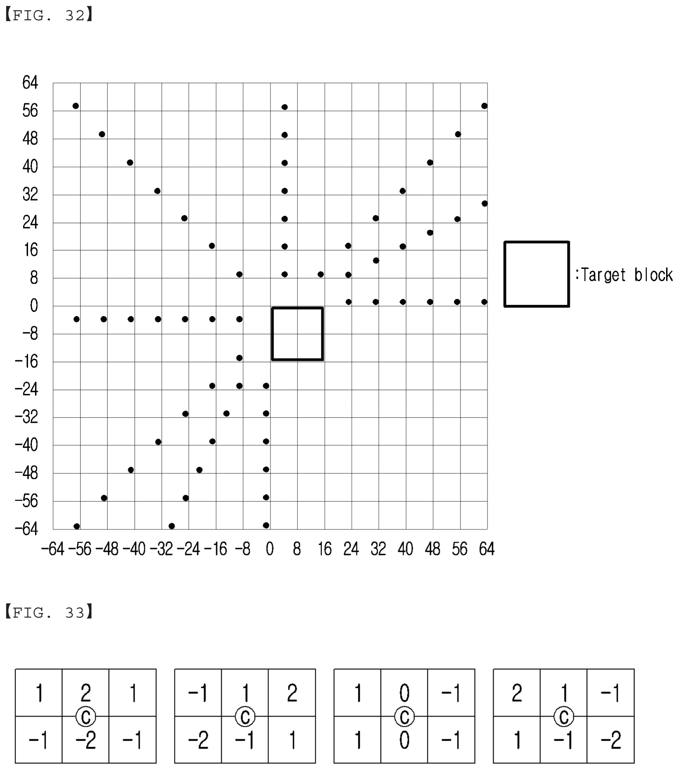

FIG. 32 is a diagram showing a non-adjacent block of a current block. A non-adjacent block may include a block whose distance from at least one of a top boundary or a left boundary of a current block is N, as in an example shown in FIG. 32. N may be an integer such as 4, 8 or 16. After deriving merge candidates from adjacent blocks, a merge candidate may be derived by using a non-adjacent block.

Alternatively, a non-adjacent block may be a block indicated by at least one of a block vector of a target block, a motion vector of a target block, a block vector of a luma component block corresponding to a target block if a target block is a chroma component block, a motion vector of a luma component block corresponding to a target block if a target block is a chroma component block, a block vector of a neighbor block, a motion vector of a neighbor block, a block vector around a target block or a motion vector around a target block. For example, a neighbor block may be an adjacent block.

For example, for at least two blocks of blocks indicated by a block vector of a target block, a motion vector of a target block, a block vector of a luma component block corresponding to a target block if a target block is a chroma component block, a motion vector of a luma component block corresponding to a target block if a target block is a chroma component block, a block vector of a neighbor block, a motion vector of a neighbor block, a block vector around a target block or a motion vector around a target block, a merge candidate may be derived from N blocks with the lowest template matching cost among them.

A merge candidate may also be derived from a temporal adjacent block. As in an example shown in FIG. 27, a temporal adjacent block may be a block (a collocated block) corresponding to a position of a current block in a collocated picture or may be an adjacent block of the collocated block.

For example, deriving a merge candidate by using a specific candidate block may mean that the specific candidate block is used as a merge candidate. Alternatively, for example, deriving a merge candidate by using a specific candidate block may mean that mapping models used in the specific candidate block or a part thereof are used as a merge candidate.

A merge candidate may also be derived from a temporal adjacent block. As in an example shown in FIG. 27, a temporal adjacent block may be a block (a collocated block) corresponding to a position of a current block in a collocated picture or may be an adjacent block of the collocated block.

As an example, a temporal adjacent block may be a block at a right, bottom, bottom-right, top-left or bottom-left position of a collocated block.

There may be N temporal adjacent blocks for deriving a merge candidate of a target block. N may be 0, 1, 2, 3, 6, 12 or a positive integer. In addition, there may be M merge candidates derived from a temporal adjacent block in a target block. M may be 0, 1, 2, 3, 6, 12 or a positive integer.

The number of temporal adjacent blocks may be adaptively determined according to the number of available spatial adjacent blocks.

A merge candidate may also be derived from a non-adjacent block of a collocated block. As an example, a merge candidate may be derived based on a temporal block in which at least one of a horizontal distance or a vertical distance is spaced by a unit distance or N times a unit distance from a top-left position of a collocated block. As an example, if a top-left position of a collocated block is (x, y), a merge candidate may be derived from a temporal block at a top-left position of (x + (N*horizontal), y), (x, y +((N*vertical)) or (x + (N* horizontal), y + (N*vertical)).

Here, horizontal represents a unit distance for a horizontal direction, and vertical represents a unit distance for a vertical direction. A unit distance may be determined according to a size of a target block. As example, a unit distance in a horizontal direction and a unit distance in a vertical direction may be set to be the same as a width and a height of a target block, respectively.

N may be a natural number greater than or equal to **1.** If a temporal block derived when a first value is applied to N is unavailable, a temporal block may be searched by increasing N by 1.

A merge candidate may be derived from a block at a shifted position of a temporal block (hereinafter, referred to as a shifted temporal block). Here, a shifted temporal block may be positioned at a position spaced by a motion vector from a position of a temporal block. Here, a motion vector may be a motion vector of a spatial adjacent block of a target block. As an example, a shifted temporal block may be determined based on a motion vector of a left neighbor block or a top neighbor block of a target block. Alternatively, when spatial neighbor blocks of a target block are searched according to predefined order, a shifted temporal block may be determined based on a motion vector of an available block searched first. If there is no available block among spatial neighbor blocks, a temporal block at an original position may be used without performing shifting.

Whether a temporal adjacent block is available may be determined based on at least one of a picture/slice type (e.g., whether it is an I picture/an I slice) or a type of a matching model.

Based on information about a prediction method of at least one candidate block, a prediction method information merge list may be configured. On a prediction method information merge list, information about a candidate block or a prediction method of a candidate block may be inserted as a merge candidate.

Default prediction method information may be inserted into a prediction method information merge list. As an example, default prediction method information may be a default scaling parameter set predefined in an encoder/a decoder. Alternatively, default prediction method information may be derived by adding/subtracting a predefined offset to/from a merge candidate that is pre-inserted into a prediction method information merge candidate list. Here, a pre-inserted merge candidate may be a merge candidate with the smallest index or a merge candidate with the largest index among the merge candidates inserted into a prediction method information merge candidate list. A default prediction method may be inserted when the number of merge candidates included in a prediction method information merge list is smaller than a threshold value. A threshold value may be the maximum value of merge candidates that may be included in a prediction method information merge list or a value that is smaller than the maximum value by M. M may be an integer such as 1, 2, etc.

As an example, even though merge candidates are inserted into a prediction method information merge list according to predefined order, if the number of merge candidates is less than a threshold value, default prediction method information may be inserted into a prediction method information merge list. As an example, predefined order may be the order of a spatially adjacent block, a spatially non-adjacent blocks and prediction method information stored in an accumulated prediction method information table described later.

Here, a non-adjacent block may refer to a block that at least one of a horizontal distance or a vertical distance is spaced from a specific position of a target block or a specific position around a target block by a unit distance or N times a unit distance. As an example, as in an example shown in FIG. 40, if a top-left position of a target block is (x, y), a merge candidate may derived from a spatially non-adjacent block at a top-left position of (x - (N * horizontal), y), (x, y-(N * vertical)) or (x - (N * horizontal), y-(N * vertical)).

Here, horizontal represents a unit distance for a horizontal direction, and vertical represents a unit distance for a vertical direction. A unit distance may be determined according to a size of a target block. As example, a unit distance in a horizontal direction and a unit distance in a vertical direction may be set to be the same as a width and a height of a target block, respectively.

N may be a natural number greater than or equal to 1. If a spatially non-adjacent block is unavailable when a first value is applied to a N, a spatially non-adjacent block may be searched by increasing N by 1.

Prediction method information of a block predicted based on a mapping model may be accumulated and stored in a prediction method information table. As an example, if a block is predicted based on a mapping model, a prediction method information table may be updated with prediction method information of a corresponding block. The number of candidates included in a prediction method information table may be predefined in an encoder and a decoder. A prediction method information table may be initialized in a predefined unit. Here, a predefined unit may be a CTU, a tile, a slice, a CTU row or a sub-picture.

Alternatively, what is stored in the prediction method information table may be not prediction method information of a block predicted based on a mapping model, but a block predicted based on a mapping model.

In configuring a prediction method information merge list, a prediction method information table may be used. As an example, if the number of merge candidates included in a prediction method information table is less than a threshold value, prediction method information stored in a prediction method information table may be inserted into a prediction method information merge list as a new merge candidate.

If a prediction method information merge list includes a plurality of merge candidates, information specifying one of a plurality of merge candidates may be encoded and signaled.

Alternatively, a prediction method information table itself may be also used as a prediction method information merge list. When a plurality of candidates are included in a prediction method information merge list, information specifying one of a plurality of candidates may be encoded and signaled. As an example, information indicating whether to use a prediction method information table itself as a prediction method information merge list may be signaled/encoded/decoded.

In a target block, information showing whether a prediction method information merge list is used may be encoded and signaled. The information may be a 1-bit flag. If the information indicates that a prediction method information merge list is used, prediction method information of a current block may be inherited from a merge candidate. If the information indicates that a prediction method information merge list is not used, prediction method information of a current block may be derived from a reference region.

After a target block is reconstructed, a mapping model for a target block may be derived based on a sample of a reconstructed target block.

In a block that is encoded/decoded after a target block, a mapping model of the derived target block may be referred to.

In a block that is encoded/decoded after a target block, information about a model-based prediction method may be inherited from a mapping model of the derived target block.

As an example, a mapping model for the target block may be a mapping model representing a relationship from an independent sample set including at least one of luma component prediction samples of a target block to a dependent sample set including at least one of luma component reconstructed samples of a target block. As another example, a mapping model for the target block may be a mapping model representing a relationship from an independent sample set including at least one of luma component reconstructed samples of a target block to a dependent sample set including at least one of chroma component reconstructed samples of a target block. As another example, a mapping model for the target block may be a mapping model representing a relationship from an independent sample set including at least one of chroma component prediction samples of a target block to a dependent sample set including at least one of chroma component reconstructed samples of a target block.

In this case, only when a model-based prediction method is performed in a target block, a mapping model may be derived in the same manner as above. Alternatively, a mapping model may be derived in the same manner as above in all blocks regardless of whether a model-based prediction method is performed in a target block. Alternatively, if a target block satisfies a specific condition, a mapping model may be derived from a target block in the same manner as above.

The specific condition may relate to at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block, a neighbor sample of a target block or a mapping model. As an example, the specific condition may relate to whether a prediction mode of a target block is inter prediction. As an example, the specific condition may relate to whether a target block is a luma component block.

Herein, "a mapping model for a specific block is derived" may mean at least one of 1) that at least one mapping model for the entire corresponding block is derived; 2) that a corresponding block is divided in a specific unit and at least one mapping model is derived for each divided block; or 3) that a corresponding block is divided in a specific unit and at least one mapping model is derived for at least one of divided blocks. In this case, the specific unit may include at least one of a TU unit and a NxM-sized sub-block unit. N and M above may be 1, 2, 4, 8, 16, 32 or a positive integer, respectively.

Prediction using a first mapping model may be performed in a target block. Afterwards, a second mapping model for a target block may be derived from an independent sample set and/or a dependent sample set including a reconstructed sample of a target block, and a first mapping model may be replaced (or, updated) with a second mapping model.

As an example, the second mapping model may be a mapping model representing a relationship from an independent sample set including at least one of luma component prediction samples of a target block to a dependent sample set including at least one of luma component reconstructed samples of a target block. As another example, the second mapping model may be a mapping model representing a relationship from an independent sample set including at least one of luma component reconstructed samples of a target block to a dependent sample set including at least one of chroma component reconstructed samples of a target block. As another example, the second mapping model may be a mapping model representing a relationship from an independent sample set including at least one of chroma component prediction samples of a target block to a dependent sample set including at least one of chroma component reconstructed samples of a target block.

In a block that is encoded/decoded after a target block, a second mapping model of a target block may be referred to.

In a block that is encoded/decoded after a target block, information about a model-based prediction method may be inherited from a second mapping model of a target block.

A mapping model for a target block may be derived and stored from an independent sample set and/or a dependent sample set including a reconstructed sample of a target block.

A mapping model related to luma component prediction and luma component reconstruction may be stored.

For example, after a luma component sample of a target block is reconstructed (or, a target block that is a luma component block is reconstructed), a mapping model for a target block may be derived and stored from an independent sample set including a luma component prediction sample of a target block and a dependent sample set including a luma component reconstructed sample of a target block.

Information about a model-based prediction method may be inherited from a mapping model of a target block derived by the method from a first block that is encoded/decoded after a target block. Afterwards, in a first block, a value of at least one of luma component prediction samples of a first block may be changed based on a subject sample set including at least one of luma component prediction samples of a first block.

In this case, there is an effect of predicting a residual signal of a first block luma component and adding it to a luma component prediction component of a first block, thereby improving encoding efficiency.

A mapping model related to chroma component prediction and chroma component reconstruction may be stored.

For example, after a chroma component sample of a target block is reconstructed (or, a target block that is a chroma component block is reconstructed), a mapping model for a target block may be derived and stored from an independent sample set including a chroma component prediction sample of a target block and a dependent sample set including a chroma component reconstructed sample of a target block.

Information about a model-based prediction method may be inherited from a mapping model of a target block derived by the method from a first block that is encoded/decoded after a target block. Afterwards, in a first block, a value of at least one of chroma component prediction samples of a first block may be changed based on a subject sample set including at least one of chroma component prediction samples of a first block.

In this case, there is an effect of predicting a residual signal of a first block chroma component and adding it to a chroma component prediction component of a first block, thereby improving encoding efficiency.

Luma component reconstruction and chroma component reconstruction may be stored.

For example, after a chroma component sample of a target block is reconstructed (or, a target block that is a chroma component block is reconstructed), a mapping model for a target block may be derived and stored from an independent sample set including a chroma component reconstructed sample of a target block (or, a reconstructed sample of a luma component block corresponding to a target block) and a dependent sample set including a chroma component reconstructed sample of a target block.

Information about a model-based prediction method may be inherited from a mapping model of a target block derived by the method from a first block that is encoded/decoded after a target block. Afterwards, in a first block, a value of at least one of luma component prediction samples of a first block may be changed based on a subject sample set including at least one of luma component reconstructed samples of a first block (or, a reconstructed sample of a luma component block corresponding to a target block).

In this case, encoding efficiency may be improved by utilizing information redundancy between a luma component and a chroma component.

When a prediction method information merge list is used in a target block, information for specifying a merge candidate for inheriting mapping model information which will be used in a target block may be signaled/encoded/decoded.

For example, information for specifying a merge candidate for inheriting mapping model information which will be used in the target block may be an index of a corresponding merge candidate in a prediction method information merge list.

When a prediction method information merge list is used in a target block, a merge candidate for inheriting mapping model information which will be used in a target block may be determined based on at least one of a size of a target block, whether a target block is a luma component block, whether a target block is a chroma component block, a type of a target slice, a neighbor block of a target block, availability of a neighbor block of a target block, a neighbor sample of a target block, a luma component sample of a target block, a chroma component sample of a target block, availability of a neighbor sample of a target block or a coding parameter of a target block.

There may be one or a plurality of merge candidates that inherit mapping model information from the target block. As an example, there may be 6 merge candidates.

Meanwhile, depending on a prediction mode of a target block and/or a luma/chroma component block corresponding to a target block, whether it is allowed to perform a mapping-based prediction method in a target block may be determined.

As an example, a model-based prediction method in a target block may be performed only when a target block and/or a luma/chroma component block corresponding to a target block are encoded/decoded by intra prediction.

As another example, even if a target block and/or a luma/chroma component block corresponding to a target block are predicted through inter prediction, IBC or template-based intra prediction (intraTMP), a model-based prediction method may be performed in a target block.

According to an encoding/decoding mode of a target block and/or a luma/chroma component block corresponding to a target block, at least one of information about a model-based prediction method may be different.

For example, the information about a model-based prediction method may refer to at least one of a method for configuring at least one of an independent/dependent/subject sample set, a coefficient of a mapping model, an input structure of a mapping model, an output structure of a mapping model, a type of a mapping model, a method for deriving a mapping model coefficient or a method for deriving a mapping model.

As an example, if a target block and/or a luma/chroma component block corresponding to a target block are predicted by inter prediction, IBC or intraTMP, a non-linear model may be used as a mapping model in a target block, but a linear model may not be used.

As an example, if a target block and/or a luma/chroma component block corresponding to a target block are predicted by inter prediction, IBC or intraTMP, a non-linear model may be used fixedly.

As an example, if a target block and/or a luma/chroma component block corresponding to a target block are predicted by inter prediction, IBC or intraTMP, a method for selecting a mapping model by using a merge candidate list may not be used.

At least one of information about a model-based prediction method may be different between a case in which a target block and/or a luma/chroma component block corresponding to a target block are predicted by intra prediction and a case in which a target block and/or a luma/chroma component block corresponding to a target block are predicted by other prediction modes (i.e., inter prediction, IBC or intraTMP).

As an example, at least one of the number of coefficients used for a mapping model or a method for deriving coefficients may be different between a case in which a target block and/or a luma/chroma component block corresponding to a target block are predicted by intra prediction and a case in which a target block and/or a luma/chroma component block corresponding to a target block are predicted by other prediction modes (i.e., inter prediction, IBC or intraTMP).

Herein, a target block and a current block may be used with the same meaning, and may be used interchangeably.

In configuring a merge candidate list, available blocks may be limited according to a prediction mode of an independent sample set.

As an example, when an independent sample set for a current block is encoded/decoded by intra prediction, only a temporal/spatial block encoded/decoded by intra prediction among the temporal/spatial blocks may be used to derive a merge candidate.

As an example, if an independent sample set for a current block is predicted by inter prediction, IBC or intraTMP, only a temporal/spatial block predicted by inter prediction, IBC or intraTMP among the temporal/spatial blocks may be used to derive a merge candidate.

In configuring a merge candidate list, available blocks may be limited according to a prediction mode of a target block and/or a luma/chroma component block corresponding to a target block.

As an example, when a target block and/or a luma/chroma component block corresponding to a target block are encoded/decoded by intra prediction, only a temporal/spatial block that a corresponding block or a luma/chroma component block corresponding to a corresponding block is encoded/decoded by intra prediction among the temporal/spatial blocks may be used to derive a merge candidate.

As an example, when a target block and/or a luma/chroma component block corresponding to a target block are encoded/decoded by at least one of inter prediction, IBC or intraTMP, only a temporal/spatial block that a corresponding block or a luma/chroma component block corresponding to a corresponding block is encoded/decoded by at least one of inter prediction, IBC or intraTMP among the temporal/spatial blocks may be used to derive a merge candidate.

As an example, when a target block and/or a luma/chroma component block corresponding to a target block are encoded/decoded by intra prediction, only a block included in a prediction method information table that a corresponding block or a luma/chroma component block corresponding to a corresponding block is encoded/decoded by intra prediction among the blocks included in a prediction method information table may be used to derive a merge candidate.

As an example, when a target block and/or a luma/chroma component block corresponding to a target block are encoded/decoded by at least one of inter prediction, IBC or intraTMP, only a block included in a prediction method information table that a corresponding block or a luma/chroma component block corresponding to a corresponding block is encoded/decoded by at least one of inter prediction, IBC or intraTMP among the blocks included in a prediction method information table may be used to derive a merge candidate.

As an example, when a target block and/or a luma/chroma component block corresponding to a target block are encoded/decoded by intra prediction, only prediction method information included in a prediction method information table that a block in which corresponding prediction method information is used or a luma/chroma component block corresponding to a block in which corresponding prediction method information is used is encoded/decoded by intra prediction among prediction method information included in a prediction method information table may be used to derive a merge candidate.

As an example, when a target block and/or a luma/chroma component block corresponding to a target block are encoded/decoded by at least one of inter prediction, IBC or intraTMP, only prediction method information included in a prediction method information table that a block in which corresponding prediction method information is used or a luma/chroma component block corresponding to a block in which corresponding prediction method information is used is encoded/decoded by at least one of inter prediction, IBC or intraTMP among prediction method information included in a prediction method information table may be used to derive a merge candidate.

Alternatively, even when a target block and/or a luma/chroma component block corresponding to a target block are encoded/decoded by intra prediction, not only a temporal/spatial block that a corresponding block or a luma/chroma component block corresponding to a corresponding block is encoded/decoded by intra prediction among the temporal/spatial blocks, but also a temporal/spatial block that a corresponding block or a luma/chroma component block corresponding to a corresponding block is predicted by at least one of inter prediction, IBC or intraTMP among the temporal/spatial blocks may be used to derive a merge candidate.

Alternatively, even when a target block and/or a luma/chroma component block corresponding to a target block are encoded/decoded by at least one of inter prediction, IBC or intraTMP, not only a temporal/spatial block that a corresponding block or a luma/chroma component block corresponding to a corresponding block is predicted by at least one of inter prediction, IBC or intraTMP among the temporal/spatial blocks, but also a temporal/spatial block that a corresponding block or a luma/chroma component block corresponding to a corresponding block is encoded/decoded by intra prediction among the temporal/spatial blocks may be used to derive a merge candidate.

Alternatively, for example, even when a target block and/or a luma/chroma component block corresponding to a target block are encoded/decoded by intra prediction, not only a temporal/spatial block or a block included in a prediction method information table that a corresponding block or a luma/chroma component block corresponding to a corresponding block is encoded/decoded by intra prediction among the temporal/spatial blocks and the blocks included in a prediction method information table, but also a temporal/spatial block or a block included in a prediction method information table that a corresponding block or a luma/chroma component block corresponding to a corresponding block is predicted by at least one of inter prediction, IBC or intraTMP among the temporal/spatial blocks and the blocks included in a prediction method information table may be used to derive a merge candidate.

Alternatively, for example, even when a target block and/or a luma/chroma component block corresponding to a target block are encoded/decoded by at least one of inter prediction, IBC or intraTMP, not only a temporal/spatial block or a block included in a prediction method information table that a corresponding block or a luma/chroma component block corresponding to a corresponding block is predicted by at least one of inter prediction, IBC or intraTMP among the temporal/spatial blocks and the blocks included in a prediction method information table, but also a temporal/spatial block or a block included in a prediction method information table that a corresponding block or a luma/chroma component block corresponding to a corresponding block is encoded/decoded by intra prediction among the temporal/spatial blocks and the blocks included in a prediction method information table may be used to derive a merge candidate.

Alternatively, for example, even when a target block and/or a luma/chroma component block corresponding to a target block are encoded/decoded by intra prediction, not only a temporal/spatial block or a block included in a prediction method information table that a block in which corresponding prediction method information is used or a luma/chroma component block corresponding to a block in which corresponding prediction method information is used is encoded/decoded by intra prediction among prediction method information included in a prediction method information table, but also prediction method information included in a prediction method information table that a block in which corresponding prediction method information is used or a luma/chroma component block corresponding to a block in which corresponding prediction method information is used is predicted by at least one of inter prediction, IBC or intraTMP among prediction method information included in a prediction method information table may be used to derive a merge candidate.

Alternatively, for example, even when a target block and/or a luma/chroma component block corresponding to a target block are encoded/decoded by at least one of inter prediction, IBC or intraTMP, not only a temporal/spatial block or a block included in a prediction method information table that a block in which corresponding prediction method information is used or a luma/chroma component block corresponding to a block in which corresponding prediction method information is used is predicted by at least one of inter prediction, IBC or intraTMP among prediction method information included in a prediction method information table, but also prediction method information included in a prediction method information table that a block in which corresponding prediction method information is used or a luma/chroma component block corresponding to a block in which corresponding prediction method information is used is encoded/decoded by intra prediction among prediction method information included in a prediction method information table may be used to derive a merge candidate.

Herein, a temporal/spatial block may include a temporal/spatial block adjacent to a target block and a temporal/spatial block non-adjacent to a target block.

When configuring a merge candidate list for a model-based prediction mode, a merge candidate list may be configured to ensure that at least one of information about a model-based prediction method used in all candidate blocks of the merge candidate list is the same. Alternatively, when configuring a merge candidate list for a model-based prediction mode, a merge candidate list may be configured by using only a block that at least one of information about a used model-based prediction method is the same as information about a specific model-based prediction method as a candidate block.

For example, when configuring a merge candidate list for a model-based prediction mode, a merge candidate list may be configured to ensure that all input structures of a mapping model used in all candidate blocks of the merge candidate list are the same.

For example, when configuring a merge candidate list for a model-based prediction mode, a merge candidate list

45

may be configured by using only a block that a mapping mode having a specific input structure or having an input structure including it is used as a candidate block.

The specific model-based prediction method may be a predefined model-based prediction method. Alternatively, the specific model-based prediction method may be determined adaptively based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

Alternatively, for all candidate blocks in a merge candidate list of a model-based prediction mode, information about a common model-based prediction method may not exist. In other words, information about a model-based prediction method of each candidate block in a merge candidate list of a model-based prediction mode may be different from each other.

For example, at least one of input structures used in each candidate block in a merge candidate list of a model-based prediction mode may be different from each other.

Each merge candidate in a merge candidate list of a model-based prediction mode may include at least one of mapping model information about a luma component, a Cb component and a Cr component.

Alternatively, each merge candidate in a merge candidate list of a model-based prediction mode may include only a mapping model for one component among mapping model information about a luma component, a Cb component and a Cr component.

For example, a first merge candidate list of a model-based prediction mode may be configured by using only mapping model information about a Cb component, and a second merge candidate list of a model-based prediction mode may be configured by using only mapping model information about a Cr component.

In specifying a merge candidate for inheriting mapping model information from a target block from a merge candidate list of a model-based prediction mode, a merge candidate for inheriting mapping model information about at least two of a luma component, a Cb component or a Cr component may be always the same.

For example, both mapping model information about a Cb component and mapping model information about a Cr component of a specified merge candidate may be inherited from a merge candidate list of a model-based prediction mode.

Alternatively, in specifying a merge candidate for inheriting mapping model information from a target block from a merge candidate list of a model-based prediction mode, for at least two of a luma component, a Cb component or a Cr component, a merge candidate for inheriting mapping model information may be the same or different from each other.

For example, mapping model information about a Cb component of a first merge candidate specified from a merge candidate list of a model-based prediction mode may be inherited, and mapping model information about a Cr component of a second merge candidate specified from a merge candidate list of a model-based prediction mode may be inherited. In this case, a first merge candidate and a second merge candidate may be the same or different from each other.

Mapping model information about a specific component may refer to information of a mapping model used to perform at least one of prediction, reconstruction or change of a sample value of a corresponding component.

Alternatively, regardless of a prediction mode of a target block and/or a luma/chroma component block corresponding to a target block, temporal/spatial blocks to which a mapping model is applied may be set as a merge candidate.

Meanwhile, as described above, according to a prediction mode of a target block and/or a luma/chroma component block corresponding to a target block, at least one of methods for deriving a mapping model and/or a mapping model coefficient may be different.

As an example, when a target block and/or a luma/chroma component block corresponding to a target block are encoded by intra prediction, a mapping model based on a linear model or a first non-linear model may be applied to a current block. On the other hand, if a luma/chroma component block of a candidate block is predicted by inter prediction, IBC or intraTMP, a merge candidate derived from a corresponding candidate block may be a second non-linear model. When a merge candidate derived from the candidate block is selected from a merge candidate list, only common information between a mapping model that may be applied to a current block (e.g., a linear model or a first non-linear model) and a mapping model indicated by a corresponding merge candidate (e.g., a second non-linear model) may be inherited.

For example, if an input structure of a mapping model used in a first model-based prediction mode includes an input structure of a mapping model used in a second model-based prediction mode, in a first model-based prediction mode, at least one of information about a model-based prediction method used in a second model-based prediction mode may be inherited.

For example, if an input structure of a mapping model used in a first model-based prediction mode includes an input structure of a mapping model used in a second model-based prediction mode, in a first model-based prediction mode, a block in which a second model-based prediction mode is performed may be used as a candidate block.

For example, when a first model-based prediction mode inherits at least one of information about a model-based prediction method used in a second model-based prediction mode, there may be information about a model-based prediction method that is used in a first model-based prediction mode, but is not used in a second model-based prediction mode. In this case, corresponding information may be determined as a predetermined value.

For example, when a first model-based prediction mode inherits at least one of information about a model-based prediction method used in a second model-based prediction mode, there may be at least one input component that is used in a first model-based prediction mode, but is not used in a second model-based prediction mode. In this case, a coefficient of a mapping model for a corresponding input type may be determined and/or changed as a predetermined value in a first model-based prediction mode.

Alternatively, for example, when a first model-based prediction mode inherits at least one of information about a model-based prediction method used in a second model-based prediction mode, there may be at least one input component that is used in a first model-based prediction mode, but is not used in a second model-based prediction mode. In this case, an input structure in a mapping model in a first model-based prediction mode may be determined and/or changed as an input structure that does not use a corresponding input type.

Alternatively, for example, when a first model-based prediction mode inherits at least one of information about a model-based prediction method used in a second model-based prediction mode, there may be at least one input component that is used in a first model-based prediction mode, but is not used in a second model-based prediction mode. In this case, in an input of a mapping model in a first model-based prediction mode, a value corresponding to a corresponding input component may be always determined as a predetermined value (as an example, it may be replaced with a bias).

In the above-described embodiments, the predetermined value may be 0, 1, 2, 256, 512, 1024 or an integer.

For example, when performing prediction on a target chroma component block, each of a first model-based prediction mode and a second model-based prediction mode may be a model-based prediction mode that generates a prediction value of CHROMA_PIX by using as an input at least one of component 1) position or gradient information of specific sample CHROMA_PIX within a target chroma component; component 2) information of luma component sample LUMA_PIX corresponding to CHROMA_PIX; component 3) a neighbor luma sample of LUMA_PIX; component 4) a result value of applying a predetermined filter centered on a luma component position corresponding to CHROMA_PIX; component 5) a bias value; or component 6) a result value of performing a specific operation on at least one of component 1, component 2, component 3, component 4 or component 5.

In component 1 to component 4, LUMA_PIX may be a subsampled luma component sample corresponding to CHROMA_PIX. Alternatively, in component 1 to component 4, LUMA_PIX may be a non-subsampled luma component sample corresponding to CHROMA_PIX.

FIG. 33 shows a filter based on a luma component position.

For example, a predetermined filter in component 4 above may be a filter for calculating a gradient. For example, a predetermined filter in component 4 above may be one of the filters in FIG. 33. In FIG. 33, C may refer to a luma component position corresponding to CHROMA_PIX.

When an input structure in a first model-based prediction mode includes an input structure in a second model-based prediction mode (or, when an input structure in a first model-based prediction mode includes an input structure in a second model-based prediction mode and an input structure in a first model-based prediction mode is different from an input structure in a second model-based prediction mode), the embodiments may be applied.

For example, a first model-based prediction mode may be a model-based prediction mode that generates a prediction value of CHROMA_PIX by using component 1 to component 6 as an input. On the other hand, a second model-based prediction mode may be a model-based prediction mode that generates a prediction value of CHROMA_PIX by using only component 1 and component 5 as an input.

As another example, a first model-based prediction mode may be a model-based prediction mode that always uses component 2 and component 5 as an input and that may also use at least one of component 1, component 3, component 4 or component 6 as an input. On the other hand, a second model-based prediction mode may be a model-based prediction mode that uses only component 1, component 2 and component 5 as an input to generate a prediction value of CHROMA_PIX.

A prediction method information merge list may be configured by considering a component of a target block

The component may include at least one of a luma component or a chroma component.

A chroma component may include at least one of a Cb component, a Cr component, a R component, a G component or a B component.

A prediction method information merge list may be configured individually for each component. For example, if a target block is a Cb component block, a prediction method information merge list may be configured by using only a mapping model used for prediction of a Cb component.

Alternatively, for a plurality of chroma components, an integrated prediction method information merge list may be configured. For example, for a Cb component block and a Cr component block, a single prediction method information merge list may be configured.

Information representing whether a prediction method information merge list is used in a matching model may be signaled/encoded/decoded. In this case, whether a prediction method information merge list is used in a luma component and whether a prediction method information merge list is used in a chroma component may be determined from the same indicator.

Alternatively, in this case, whether a prediction method information merge list is used in a luma component and whether a prediction method information merge list is used in a chroma component may be determined from a separate indicator. In this case, whether a prediction method information merge list is used in a Cb component and whether a prediction method information merge list is used in a Cr component may be determined from a separate indicator.

In a matching model, information for specifying a merge candidate from a prediction method information merge list may be signaled/encoded/decoded. In this case, a merge candidate of a model-based prediction method in a luma component and a merge candidate of a model-based prediction method in a chroma component may be determined from the same index.

Alternatively, in this case, a merge candidate of a model-based prediction method in a luma component and a merge candidate of a model-based prediction method in a chroma component may be determined from a separate index. In this case, a merge candidate of a model-based prediction method in a Cb component and a merge candidate of a model-based prediction method in a Cr component may be determined from a separate index.

A prediction block of a current block may be obtained by performing a weighted sum for a plurality of blocks. In this case, a plurality of blocks may be generated based on a plurality of mapping models. Each block may be generated by a different mapping model. As an example, a prediction block of a current block may be obtained by the average/weighted sum operation of a first prediction block obtained based on a first mapping model and a second prediction block obtained based on a second mapping model.

As an example, a first mapping model may be any one of a linear model, a non-linear model, a regression model and a filter, and a second mapping model may be another one.

Information about at least one of whether a plurality of models are used or the number of used models may be signaled/encoded/decoded.

As an example, a prediction block of a target block may be generated by performing a weighted sum of blocks generated by applying each mapping model to a target block.

A weighted sum may include an average. A weight applied to each block may be 0, a real number greater than 0 or a negative real number smaller than 0.

For example, a plurality of mapping models may be determined as N merge candidates having the lowest index in a prediction method information merge list. Alternatively, for example, a plurality of mapping models may be determined as N merge candidates having the lowest mapping cost in a prediction method information merge list. The N may be 2, 3 or a positive integer.

A new mapping model may be derived from a plurality of mapping models. For example, a new mapping model may be derived by performing a weighted sum for a plurality of mapping models. For example, prediction for a target block may be performed based on a derived mapping model. For example, a derived mapping model may be added to a prediction method information merge list.

Alternatively, a final prediction block may be obtained by performing a weighted sum for a prediction block derived by using a mapping model and a prediction block derived by using another prediction method other than a mapping model (e.g., intra prediction, inter prediction, IBC or intraTMP).

Meanwhile, a merge candidate composed of a combination of a plurality of prediction models may be included in a merge candidate list. When the merge candidate is selected, a prediction block may be derived according to the embodiment.

Alternatively, when selecting a plurality of mapping models, a first mapping model may be selected from a merge candidate list, and a second mapping model may be determined by using a predefined model or based on signaled information.

When performing a weighted sum for at least two blocks, a weight for the weighted sum may be determined in a unit of a block, in a unit of a predetermined region in a block or in a unit of a sample in a block.

As an example, a weight for a block may be determined based on a mapping model. Alternatively, a weight for a sample belonging to a block may be determined based on a mapping model.

Alternatively, based on a cost for a template region of a target block for each mapping model, a weight for each block may be determined. As an example, a first mapping model may be applied to a template region of a target block to obtain a first prediction signal and obtain a first cost for a template region. As an example, a first cost may be a SAD between a first prediction signal and a reconstructed signal in a template region. In addition, a second mapping model may be applied to a template region of a target block to obtain a second prediction signal and obtain a second cost for a template region. As an example, a first cost may be a SAD between a first prediction signal and a reconstructed signal in a template region. Afterwards, a first cost and a second cost may be compared to determine a weight for each of a first block obtained by a first mapping model and a second block obtained by a second mapping model.

As an example, if a first cost is smaller than a second cost, a weight assigned to a first block may have a larger value than a weight assigned to a second block. Conversely, if a first cost is greater than a second cost, a weight assigned to a second block may have a greater value than a weight assigned to a first block.

A weight for blocks and/or a weight for samples within blocks may be determined simultaneously. Alternatively, a weight for blocks and/or a weight for samples within blocks may be determined sequentially. Here, order may include scan order.

In this case, a dependent sample set may include a sample value determined based on at least one of a neighbor sample of a target block; at least one neighbor sample among blocks whose weight was already determined; or a weight of a block whose weight was already determined. For example, a weight for the same block may be determined at least two times.

The order of blocks for which a weight is determined may be determined based on at least one of a POC of an image to which each block belongs; a direction of a reference image to which each reference block belongs; an index of motion information indicating each block; or a matching cost for each block.

An independent sample set may include at least one neighbor sample among the reference blocks of a target block. A dependent sample set may include a neighbor sample of a target block. A subject sample set may include at least one sample among the reference blocks of a target block.

A filter may be applied to a prediction block derived based on at least one mapping model to modify a prediction block.

Information representing whether to modify a prediction block may be encoded and signaled. The information may be a 1-bit flag. Alternatively, whether to modify a prediction block may be adaptively determined according to a size/a shape of a current block or a type of a mapping model used.

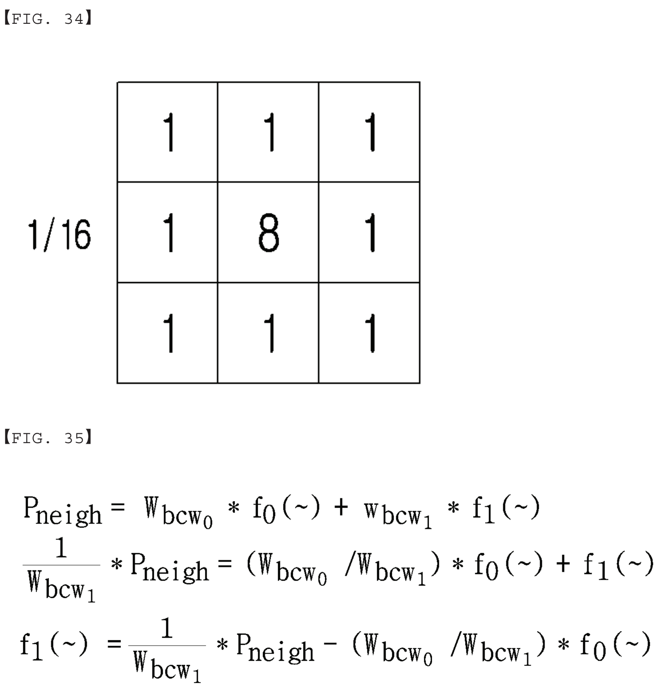

FIG. 34 shows an example of a 3x3-sized low-band filter for prediction sample correction.

Prediction samples may be corrected by applying a filter of a predetermined size/shape to a prediction block. A size/a shape/a type of the filter may be predefined in an decoder/a decoder. For example, a 3x3-sized low-band filter may be used.

Alternatively, a size/a shape/a type of a filter may be adaptively determined based on at least one of a size/a shape of a current block, a type of a used mapping model or a prediction mode/a intra prediction mode of an independent sample set.

Alternatively, a plurality of filter type candidates may be defined, and an index identifying one of a plurality of filter type candidates may be encoded and signaled.

When applying a filter to a left/top boundary of a block, filtering may be performed by using a pre-reconstructed neighbor sample. When applying a filter to a right/bottom boundary, filtering may be performed by padding a prediction sample of a right/top boundary.

Alternatively, a size/a shape of a filter may be set differently according to a position of a prediction sample. Alternatively, if a prediction sample is positioned at a block boundary, application of a filter may be omitted.

When performing a weighted sum for a prediction block derived from each of a plurality of mapping models, a filter may be applied to a weighted prediction block. Alternatively, after applying a filter to a prediction block derived from each of a plurality of mapping models, a final prediction block may be obtained by performing a weighted sum for prediction blocks to which a filter is applied.

The order of merge candidates in a prediction method information merge list may be rearranged.

The rearrangement of order of merge candidates in a prediction method information merge list may be performed based on at least one of a type of a merge candidate; mapping model information of a merge candidate; a target block; a neighbor sample of a target block; a reference block of a target block; or a reference sample of a target block.

A type of a merge candidate may be classified based on a method by which a merge candidate is derived. For example, a type of a merge candidate may include at least one of a merge candidate derived from an adjacent block; a merge candidate derived from a non-adjacent block; a merge candidate derived from a spatially adjacent block; a merge candidate derived from a temporally adjacent block; a merge candidate derived from a prediction method information table; or a merge candidate derived by using default prediction method information.

The rearrangement order of merge candidates in a prediction method information merge list may be determined based on a matching cost of each merge candidate.

For example, the rearrangement order of merge candidates in a prediction method information merge list may follow the ascending order of matching costs of each merge candidate.

A matching cost of a specific merge candidate may be determined based on a second sample set and a third sample set obtained by applying a corresponding merge candidate to a first sample set.

For example, a matching cost of a specific merge candidate may be determined based on a second sample set and a third sample set obtained by applying a corresponding merge candidate to a first sample set.

For example, a coefficient to be corrected may be determined based on a difference between a second sample set and a third sample set.

For example, a first sample set may include a neighbor luma prediction/reconstructed sample of a target block, and a third sample set may include a neighbor chroma prediction/reconstructed sample of a target block.

For example, a first sample set may include a neighbor luma/chroma prediction samples of a target block, and a third sample set may include a neighbor luma/chroma reconstructed sample of a target block.

In order to perform a model-based prediction method in a target block, information for specifying at least one mapping model from a prediction method information merge list may be signaled/encoded/decoded. A model-based prediction method in a target block may be performed by using at least one specified mapping model.

Alternatively, for example, in order to perform a model-based prediction method in a target block, N mapping models having the lowest index in a prediction method information merge list may be used. In other words, a model-based prediction method in a target block may be performed by using N mapping models having the lowest index in a prediction method information merge list.

Alternatively, for example, in order to perform a model-based prediction method in a target block, N mapping models having the lowest matching cost in a prediction method information merge list may be used. In other words, a model-based prediction method in a target block may be performed by using N mapping models having the lowest matching cost in a prediction method information merge list.

A model-based prediction merge mode may refer to a mode that determines information on a model-based prediction method

used in a target block based on at least one of 1) a model-based prediction method of a block determined by a predefined rule; or 2) information on a model-based prediction method specified from a prediction method information merge list.

For example, a model-based prediction merge mode may refer to a model-based prediction mode that inherits and uses at least one of 1) a model-based prediction method of a block determined by a predefined rule; or 2) information on a model-based prediction method specified from a prediction method information merge list.

An indicator indicating whether a target block is in a model-based prediction merge mode may be signaled/encoded/decoded based on at least one of a size of a target block, whether a target block is a luma component block, whether a target block is a chroma component block, a type of a target slice, a neighbor block of a target block, availability of a neighbor block of a target block, a neighbor sample of a target block, a luma component sample of a target block, a chroma component sample of a target block, availability of a neighbor sample of a target block or a coding parameter of a target block.

If an indicator indicating whether it is a model-based prediction merge mode has a first value, a target block may be determined to be in a model-based prediction merge mode. For example, the first value may be 1 or true.

If an indicator indicating whether it is a model-based prediction merge mode has a second value, a target block may be determined not to be in a model-based prediction merge mode. For example, the second value may be 0 or false.

For example, an indicator indicating whether a target block is in a model-based prediction merge mode may be signaled/encoded/decoded based on at least one of availability of a neighbor sample (or, a neighbor block) adjacent to a top boundary of a target block or availability of a neighbor sample (or, a neighbor block) adjacent to a left boundary of a target block.

As an example, an indicator indicating whether a target block is in a model-based prediction merge mode may be signaled/encoded/decoded only when both a neighbor sample (or, a neighbor block) adjacent to a top boundary of a target block and a neighbor sample (or, a neighbor block) adjacent to a left boundary of a target block are available.

For example, if an indicator indicating whether to perform model-based prediction in a target block is true, an indicator indicating whether a target block is in a model-based prediction merge mode may be signaled/encoded/decoded.

If a target block is in a model-based prediction merge mode, information for specifying at least one of a block, mapping model information and/or a merge candidate in a merge candidate list of a model-based prediction mode for inheriting at least one of mapping model information in a target block may be signaled/encoded/decoded. The information may include an indicator and/or an index for specifying a merge candidate in a merge candidate list.

For example, in a target block, both mapping model information for a Cb component and mapping model information for a Cr component may be inherited from a merge candidate specified by an index for specifying a merge candidate in a merge candidate list.

Alternatively, for example, in a target block, mapping model information for a Cb component may be inherited from a first merge candidate specified by a first index for specifying a merge candidate in a merge candidate list, and mapping model information for a Cr component may be inherited from a second merge candidate specified by a second index.

The first index and the second index may be the same or different from each other. Both the first index and the second index may be signaled/encoded/decoded. A first merge candidate and a second merge candidate may be the same or different from each other.

When model-based prediction is performed in a target block, a mapping model adjustment-offset may be applied to a mapping model in a target block.

For example, when a model-based prediction method is performed in a target block, instead of performing a model-based prediction method using a first mapping model, a model-based prediction method using a second mapping model that is a result of applying a mapping model adjustment-offset to a first mapping model may be performed.

In other words, when a mapping model adjustment-offset is applied in a target block, at least one of a first mapping model used as a predictor, a mapping model adjustment-offset for a first mapping model or a second mapping model that a mapping model adjustment-offset is applied to a first mapping model may be (used, derived, or determined) in a target block.

In one or a plurality of mapping models, a mapping model adjustment-offset will be applied in a target block. A mapping model to which a mapping model adjustment-offset will be applied in a target block may be a mapping model determined based on an independent sample set and a dependent sample set configured for a target block. Alternatively, a mapping model to which a mapping model adjustment-offset will be applied in a target block may be a mapping model determined in a model-based prediction merge mode.

If a mapping model adjustment-offset is applied to a plurality of mapping models in a target block, the same mapping model adjustment-offset may be applied to all mapping models. Alternatively, when a mapping model adjustment-offset is applied to a plurality of mapping models in a target block, the same mapping model adjustment-offset may be applied to all mapping models, or a different mapping model adjustment-offset may be applied to at least two mapping models of them.

In a target block, information related to a mapping model adjustment-offset may be signaled/encoded/decoded based on at least one of a size of a target block, whether a target block is a luma component block, whether a target block is a chroma component block, a type of a target slice, a neighbor block of a target block, availability of a neighbor block of a target block, a neighbor sample of a target block, a luma component sample of a target block, a chroma component sample of a target block, availability of a neighbor sample of a target block or a coding parameter of a target block.

For example, mapping model adjustment-offset related information may be signaled/encoded/decoded based on whether a target block is in a model-based prediction merge mode.

For example, mapping model adjustment-offset related information may be signaled/encoded/decoded based on an indicator indicating whether a model-based prediction merge mode is performed in a target block.

Mapping model adjustment-offset related information may be information including at least one of a plurality of elements. Here, a plurality of elements may include 1) an indicator indicating whether a mapping model adjustment-offset is applied to at least one mapping model in a target block; 2) an indicator indicating whether a mapping model adjustment-offset is applied to a mapping model for a specific component of a target block; 3) an indicator indicating whether a mapping model adjustment-offset is applied to both a mapping model for a Cb component of a target block and a mapping model for a Cr component; 4) a size of at least one mapping model adjustment-offset applied to a mapping model in a target block; 5) a sign of at least one mapping model adjustment-offset applied to a mapping model in a target block; 6) at least one mapping model adjustment-offset applied to a mapping model in a target block; 7) an index of at least one mapping model adjustment-offset applied to a mapping model in a target block; or 8) the number of mapping model adjustment-offsets applied to a mapping model in a target block.

In addition, when a multi-mapping model is used in a target block (or, when an indicator indicating whether to use a multi-mapping model has a value of true or 1), a plurality of elements may further include information for specifying 9) a mapping model to which a mapping model adjustment-offset will be applied.

In addition, when a multi-mapping model is used in a target block (or, when an indicator indicating whether to use a multi-mapping model has a value of true or 1), a plurality of elements may further include an indicator indicating whether a mapping model adjustment-offset is applied to a mapping model for a specific component in a N-th mapping model (N is 1,2, ..). The specific component may refer to one of a luma component, a Cb component and a Cr component.

As an example, when a single mapping model is used in a target block, an indicator (OFFSET_BOTH0_FLAG) indicating whether a mapping model adjustment-offset is applied to a first mapping model for a Cb component and a first mapping model for a Cr component may be signaled/encoded/decoded.

As an example, when a single mapping model is used in a target block, at least one of an indicator (OFFSET_Cr0_FLAG) indicating whether a mapping model adjustment-offset is applied to a first mapping model for a Cb component or an indicator (OFFSET_Cb0_FLAG) indicating whether a mapping model adjustment-offset is applied to a first mapping model for a Cr component may be signaled/encoded/decoded. Whether to perform signaling/encoding/decoding of OFFSET_Cr0_FLAG and OFFSET_Cb0_FLAG may be determined based on OFFSET_BOTH0_FLAG. As an example, only when OFFSET_BOTH0_FLAG has a value of false or 0, signaling/encoding/decoding of at least one of OFFSET_Cr0_FLAG or OFFSET_Cb0_FLAG may be performed. Whether to perform signaling/encoding/decoding of OFFSET_Cr0_FLAG may be determined based on OFFSET_Cb0_FLAG. For example, only when OFFSET_Cb0_FLAG has a value of false or 0, signaling/encoding/decoding of OFFSET_Cr0_FLAG may be performed.

As an example, if a single mapping model is used in a target block, OFFSET_BOTH0_FLAG may be signaled/encoded/decoded. If OFFSET_BOTH0_FLAG has a value of true or 1, a mapping model adjustment-offset may be applied to both a first mapping model for a Cb component and a first mapping model for a Cr component. If OFFSET_BOTH0_FLAG has a value of false or 0, OFFSET_Cb0_FLAG may be signaled/encoded/decoded. If OFFSET_Cb0_FLAG has a value of true or 1, a mapping model adjustment-offset may be applied to a first mapping model for a Cb component, and a mapping model adjustment-offset may not be applied to a first mapping model for a Cr component. If OFFSET_Cb0_FLAG has a value of false or 0, a mapping model adjustment-offset may not be applied to a first mapping model for a Cb component, a mapping model adjustment-offset may be applied to a first mapping model for a Cr component and a mapping model adjustment-offset may not be applied to a first mapping model for a Cb component.

As an example, if two mapping models for a Cb component and two mapping models for a Cr component are used in a target block, an indicator (OFFSET_BOTH0_FLAG) indicating whether a mapping model adjustment-offset is applied to a first mapping model for a Cb component and a first mapping model for a Cr component may be signaled/encoded/decoded.

As an example, if two mapping models for a Cb component and two mapping models for a Cr component are used in a target block, at least one of an indicator (OFFSET_Cr0_FLAG) indicating whether a mapping model adjustment-offset is applied to a first mapping model for a Cb component or an indicator (OFFSET_Cb0_FLAG) indicating whether a mapping model adjustment-offset is applied to a first mapping model for a Cr component may be signaled/encoded/decoded. Whether to perform signaling/encoding/decoding of OFFSET_Cr0_FLAG and OFFSET_Cb0_FLAG may be determined based on OFFSET_BOTH0_FLAG. As an example, only when OFFSET_BOTH0_FLAG has a value of false or 0, signaling/encoding/decoding of at least one of OFFSET_Cr0_FLAG or OFFSET_Cb0_FLAG may be performed. Whether to perform signaling/encoding/decoding of OFFSET_Cr0_FLAG may be determined based on OFFSET_Cb0_FLAG. For example, only when OFFSET_Cb0_FLAG has a value of false or 0, signaling/encoding/decoding of OFFSET_Cr0_FLAG may be performed.

As an example, if two mapping models for a Cb component and two mapping models for a Cr component are used in a target block, an indicator (OFFSET_BOTH1_FLAG) indicating whether a mapping model adjustment-offset is applied to a second mapping model for a Cb component and a second mapping model for a Cr component may be signaled/encoded/decoded.

As an example, if two mapping models for a Cb component and two mapping models for a Cr component are used in a target block, at least one of an indicator (OFFSET_Cr1_FLAG) indicating whether a mapping model adjustment-offset is applied to a second mapping model for a Cb component or an indicator (OFFSET_Cbl1_FLAG) indicating whether a mapping model adjustment-offset is applied to a second mapping model for a Cr component may be signaled/encoded/decoded. Whether to perform signaling/encoding/decoding of OFFSET_Cr1_FLAG and OFFSET_Cb1_FLAG may be determined based on at least one of OFFSET_BOTH0_FLAG, OFFSET_Cr0_FLAG, OFFSET_Cb0_FLAG and OFFSET_BOTH1_FLAG. As an example, only when OFFSET_BOTH1_FLAG has a value of false or 0, signaling/encoding/decoding of at least one of OFFSET_Cr1_FLAG or OFFSET_Cb1_FLAG may be performed. As another example, signaling/encoding/decoding of at least one of OFFSET_Cr1_FLAG or OFFSET_Cb1_FLAG may be performed only if all of OFFSET_BOTH0_FLAG, OFFSET_Cr0_FLAG, OFFSET_Cb0_FLAG and OFFSET_BOTH1_FLAG have a value of false or 0. Whether to perform signaling/encoding/decoding of OFFSET_Cr1_FLAG may be determined based on OFFSET_Cb1_FLAG. For example, only when OFFSET_Cb1_FLAG has a value of false or 0, signaling/encoding/decoding of OFFSET_Cr1_FLAG may be performed.

As an example, if two mapping models for a Cb component and two mapping models for a Cr component are used in a target block, OFFSET_BOTH0_FLAG may be signaled/encoded/decoded. If OFFSET_BOTH0_FLAG has a value of true or 1, a mapping model adjustment-offset may be applied to both a first mapping model for a Cb component and a first mapping model for a Cr component. If OFFSET_BOTH0_FLAG has a value of false or 0, OFFSET_Cb0_FLAG may be signaled/encoded/decoded. If OFFSET_Cb0_FLAG has a value of true or 1, a mapping model adjustment-offset may be applied to a first mapping model for a Cb component, and a mapping model adjustment-offset may not be applied to a first mapping model for a Cr component. If OFFSET_Cb0_FLAG has a value of false or 0, a mapping model adjustment-offset may not be applied to a first mapping model for a Cb component, and OFFSET_Cr0_FLAG may be signaled/encoded/-decoded. In a method equal or similar to the above, at least one of whether to apply a mapping model adjustment-offset to a second mapping model for a Cb component of a target block or whether to apply a mapping model adjustment-offset to a second mapping model for a Cr component may be determined.

If a mapping model adjustment-offset is used in a target block, at least one of information for specifying a size, a sign or an index of a corresponding mapping model adjustment-offset for at least one of mapping model adjustment-offsets used in a target block may be signaled/encoded/decoded.

For example, an index for specifying at least one of mapping model adjustment-offsets used in a target block from a predetermined mapping model adjustment-offset list may be signaled/encoded/decoded, and a value corresponding to the index in the mapping model adjustment-offset list may be used as a mapping model adjustment-offset.

For example, an index for specifying at least one of mapping model adjustment-offsets used in a target block from a predetermined mapping model adjustment-offset list may be signaled/encoded/decoded, and a result of adding or multiplying (or, subtracting or dividing) a predetermined value and a value corresponding to the index in the mapping model adjustment-offset list may be used as a mapping model adjustment-offset.

For example, the predetermined mapping model adjustment-offset list may include an integer value from -N to N. Alternatively, for example, the predetermined mapping model adjustment-offset list may include a result of adding or multiplying (or, subtracting or dividing) each integer value from -N to N and a predetermined value. Alternatively, for example, the predetermined mapping model adjustment-offset list may include a value obtained by adding 1 to a result of adding or multiplying (or, subtracting or dividing) each integer value from -N to N and a predetermined value.

For example, the predetermined mapping model adjustment-offset list may include an integer value from -N to N, but may not include 0. Alternatively, for example, the predetermined mapping model adjustment-offset list may include a result of adding or multiplying (or, subtracting or dividing) each integer value from -N to N and a predetermined value, but may not include 0. Alternatively, for example, the predetermined mapping model adjustment-offset list may include a value obtained by adding 1 to a result of adding or multiplying (or, subtracting or dividing) each integer value from -N to N and a predetermined value, but may not include 0.

For example, the predetermined mapping model adjustment-offset list may include at least one of $-A^1, -A^2,...,-A^N, A^1, A^2,...,A^N$. Alternatively, for example, the predetermined mapping model adjustment-offset list may include at least one of a result of adding or multiplying or a result of subtracting or dividing a predetermined value and each $-A^1, -A^2, ...,-A^N, A^1, A^2, A^N$ value. Alternatively, for example, the predetermined mapping model adjustment-offset list may include at least one of a value obtained by adding 1 to a result of adding or multiplying or a value obtained by adding 1 to a result of subtracting or dividing a predetermined value and each $-A^1, A^2,...,-,A^N, A^1, A^2,...,A^N$ value.

Alternatively, for example, the predetermined mapping model adjustment-offset list may include at least one of $-A^1, -A^2, ...,-A^N A^1, A^2,...,A^N$ and 0. Alternatively, for example, the predetermined mapping model adjustment-offset list may include at least one of a result of adding or multiplying or a result of subtracting or dividing a predetermined value and each $-A^1, -A^2, ...,-A^N, A^1, A^2,...,A^N$ value and 0. Alternatively, for example, the predetermined mapping model adjustment-offset list may include at least one of a value obtained by adding 1 to a result of adding or multiplying or a value obtained by adding 1 to a result of subtracting or dividing a predetermined value and each $-A^1, -A^2,...,-A^N, A^1, A^2,...,A^N$, value and 0.

The A may be 2, 3, 4 or a positive integer. N may be 1, 2, 3, 4 or a positive integer. The predetermined value may be 1, 2, 4, 8, 16, 32, 64 or an integer.

For example, a mapping model adjustment-offset is used for a first component and a second component of a target block, the same mapping model adjustment-offset may be always applied to a mapping model for a first component and a mapping model for a second component.

For example, a mapping model adjustment-offset is used for a first component and a second component of a target block, the same or a different mapping model adjustment-offset may be applied to a mapping model for a first component and a mapping model for a second component.

Each of the first component and the second component may refer to one of a luma component, a Cb component and a Cr component.

Based on whether a mapping model adjustment-offset is applied to a specific mapping model in a target block, signaling/encoding/decoding for at least one of mapping model adjustment-offset related information for a corresponding mapping model in a target block may be performed.

For example, only when a mapping model adjustment-offset is applied to a specific mapping model in a target block or when an indicator indicating it has a value of true or 1, signaling/encoding/decoding for at least one of mapping model adjustment-offset related information for a corresponding mapping model in a target block may be performed.

For example, the specific mapping model may refer to at least one of a first mapping model, or a second mapping model, ... for (at least one of a luma component, a Cb component or a Cr component) in a target block.

A mapping model to which a mapping model adjustment-offset will be applied in a target block may be a mapping model determined in a model-based prediction merge mode.

Based on whether a mapping model adjustment-offset is applied in a target block, a type of a cost function used for calculating a matching cost when rearranging merge candidates of a prediction method information merge list in a target block may be determined.

For example, if a mapping model adjustment-offset is applied in a target block, the order of merge candidates in a prediction method information merge list in a target block may be rearranged based on a matching cost using a MR-SAD for each merge candidate. As an example, if a mapping model adjustment-offset is applied in a target block, the order of merge candidates in a prediction method information merge list in a target block may be rearranged in the ascending order of matching costs using a MR-SAD for each merge candidate.

For example, if a mapping model adjustment-offset is not applied in a target block, the order of merge candidates in a prediction method information merge list in a target block may be rearranged based on a matching cost using a SAD for each merge candidate. As an example, if a mapping model adjustment-offset is applied in a target block, the order of merge candidates in a prediction method information merge list in a target block may be rearranged in the ascending order of matching costs using a MR-SAD for each merge candidate.

Based on whether a mapping model adjustment-offset is applied in a target block, a method for configuring a prediction method information merge list in a target block may be determined.

For example, when a mapping model adjustment-offset is applied in a target block, in configuring a prediction method information merge list in a target block, only a candidate block that satisfies a predetermined condition among the candidate blocks may be used as a merge candidate.

For example, when a mapping model adjustment-offset is applied in a target block, in configuring a prediction method information merge list in a target block, only information (or, a block) about a model-based prediction method that satisfies a predetermined condition among information (or, blocks) about a model-based prediction method of a prediction method information table may be used as a merge candidate.

For example, when a mapping model adjustment-offset is applied in a target block, in configuring a prediction method information merge list in a target block, if information on a model-based prediction method of a candidate block (information on a first model-based prediction method) does not satisfy a predetermined condition, a prediction method information merge list may be configured with information on a second model-based prediction method changed to ensure that information on a first model-based prediction method satisfies a predetermined condition, instead of configuring a prediction method information merge list with information on a first model-based prediction method. If information on a first model-based prediction method satisfies the predetermined condition, a prediction method information merge list may be configured with information on a first model-based prediction method. As an example, when a prediction method information merge list is configured with information on a second model-based prediction method changed to satisfy a condition that information on a first model-based prediction method for a multi-mapping model "is information on a model-based prediction method for a single mapping model", it may mean that a prediction method information merge list is configured by using at least one of information on a model-based prediction method for a first mapping model from information on a first model-based prediction method; or information on a model-based prediction method for a second mapping model from information on a first model-based prediction method.

For example, when a mapping model adjustment-offset is applied in a target block, in configuring a prediction method information merge list in a target block, if information on a first model-based prediction method that is information (or, a block) on a model-based prediction method of a prediction method information table does not satisfy a predetermined condition, a prediction method information merge list may be configured with information on a second model-based prediction method changed to ensure that information on a first model-based prediction method satisfies a predetermined condition, instead of configuring a prediction method information merge list with information on a first model-based prediction method. If information on a first model-based prediction method satisfies the predetermined condition, a prediction method information merge list may be configured with information on a first model-based prediction method.

Based on whether a mapping model adjustment-offset is applied in a target block, a method for inheriting information on a model-based prediction method from a neighbor block and/or a merge candidate of a prediction method information merge list may be determined in a target block.

For example, if a mapping model adjustment-offset is applied in a target block, in inheriting information on a model-based prediction method from a neighbor block and/or a merge candidate of a prediction method information merge list in a target block, if information on a first model-based prediction method that is information on a model-based prediction method of a neighbor block and/or a merge candidate of a prediction method information merge list does not satisfy a predetermined condition, information on a second model-based prediction method changed to ensure that information on a first model-based prediction method satisfies a predetermined condition may be inherited, instead of inheriting information on a first model-based prediction method. If information on a first model-based prediction method satisfies the predetermined condition, information on a first model-based prediction method may be inherited.

For example, when a mapping model adjustment-offset is applied in a target block, in inheriting information on a model-based prediction method from a neighbor block and/or a merge candidate of a prediction method information merge list in a target block, if information on a first model-based prediction method that is information on a model-based prediction method of a neighbor block and/or a merge candidate of a prediction method information merge list does not satisfy a predetermined condition, only part of information on a first model-based prediction method may be inherited, instead of inheriting information on a first model-based prediction method. If information on a first model-based prediction method satisfies the predetermined condition, information on a first model-based prediction method may be inherited. As an example, when a mapping model adjustment-offset is applied in a target block, in inheriting information on a model-based prediction method from a neighbor block and/or a merge candidate of a prediction method information merge list in a target block, if information on a corresponding model-based prediction method includes information on at least two mapping models, only information on one mapping model of them may be inherited.

The predetermined condition may be a condition including a condition for at least one of an input structure of a mapping model, an output structure of a mapping model or a type of a mapping model for at least one mapping model included in information on a model-based prediction method; and/or whether to use a multi-mapping model in information on a model-based prediction method.

A type of a mapping model may be classified based on at least one of an input structure of a mapping model, an output structure of a mapping model, a relationship between at least one of input components and at least one of output components, a relationship between an input and an output (e.g., a position relationship), a method for configuring (at least one of an independent sample set, a dependent sample set and a subject sample set), whether a bias is used as an input, whether a result of performing filtering on a sample value is used as an input or whether a square of a sample value is used as an input. A square of a sample value may include a square of a result of adding or subtracting a predetermined value to or from a sample value.

For example, the condition may include that "it will be information on a model-based prediction method for a single mapping model". Information on a model-based prediction method for a single mapping model may mean that information on a corresponding model-based prediction method is information on a model-based prediction method including only information on one mapping model. Alternatively, information on a model-based prediction method for a single mapping model may mean that information on a corresponding model-based prediction method is information on a model-based prediction method including only information on at most one mapping model for each component. Each component above may be one of a luma component, a Cb component and a Cr component.

For example, the condition may include that "it will be information on a model-based prediction method for a mapping model that does not use a result of performing filtering on a sample value as an input".

For example, the condition may include that "it will information on a model-based prediction method for a mapping model that does not use a square of a sample value as an input".

At least one of an input structure, an output structure or the number of coefficients of each merge candidate in a prediction method information merge list in a model-based prediction merge mode may be different.

Applying a mapping model adjustment-offset to a first mapping model may mean that at least one of a plurality of processings below is performed on a first mapping model. Alternatively, applying a mapping model adjustment-offset to a first mapping model may mean that at least one of a plurality of processings below is performed on a first mapping model to derive a second mapping model.

A plurality of processings may include 1) adding a mapping model adjustment-offset to all coefficients of a first mapping model. For example, when a mapping model adjustment-offset is a and a specific coefficient of a first mapping model is c, a corresponding coefficient may be replaced with c'=c+a.

A plurality of processings may include 2) multiplying all coefficients of a first mapping model by a mapping model adjustment-offset. For example, when a mapping model adjustment-offset is a and a specific coefficient of a first mapping model is c, a corresponding coefficient may be replaced with c'=c×a.

A plurality of processings may include 3) multiplying all coefficients of a first mapping model by a mapping model adjustment-offset and adding it to a corresponding coefficient. For example, when a mapping model adjustment-offset is a and a specific coefficient of a first mapping model is c, a corresponding coefficient may be replaced with c'=c+c×a.

A plurality of other processings may include 4) adding a mapping model adjustment-offset to some coefficients of a first mapping model; 5) multiplying some coefficients of a first mapping model by a mapping model adjustment-offset; and 6) multiplying some coefficients of a first mapping model by a mapping model adjustment-offset and adding it to a corresponding coefficient.

In addition, a plurality of processings may further include 7) adding or multiplying a mapping model adjustment-offset to some coefficients of a first mapping model (a first coefficient set) or multiplying and adding it to a corresponding coefficient and recalculating (or, deriving, updating) coefficients of a third coefficient set by using an independent sample set and a dependent sample set for a target block while fixing coefficients of a second coefficient set. The second coefficient set includes at least one of coefficients of a first mapping model and includes coefficients of a first coefficient set. The third coefficient set includes coefficients that are not included in a second coefficient set among all coefficients of a first mapping model. For example, a coefficient for inputs excluding a bias may be multiplied by a mapping model adjustment-offset and may be added to a corresponding coefficient, and then a coefficient for a bias may be recalculated while fixing coefficients for input(s) excluding a bias.

Some coefficients above may be one or plural.

Some coefficients above may include at least one of 1) a coefficient for a bias among inputs, 2) a coefficient for all inputs except for a bias, or 3) a coefficient for at least one of inputs except for a bias, 4) a coefficient for a x-component and/or a y-component of a sample position among inputs and 5) a coefficient for an input except for a x-component and a y-component of a sample position.

With regard to a coefficient for at least one of inputs except for a bias, an input excluding a bias may include at least one of a value of a sample or a result of performing a specific operation on a value of a sample (e.g., a square of a value of a sample or a result of performing filtering using a predetermined filter on prediction (or, reconstructed) samples). The predetermined filter may include at least one of an average filter, a weighted-average filter or a filter for calculating a gradient.

In the above, a coefficient for a specific element may be replaced with a coefficient for an element determined based on a specific element. For example, in the above, "a coefficient for a x component of a sample position among inputs" may be replaced with "a coefficient for a result of performing a specific operation on a x component of a sample position among inputs".

A coefficient for a specific input may refer to a coefficient multiplied by a specific input in a model.

For example, a method that a mapping model adjustment-offset is applied may be always the same regardless of a mapping model to which a mapping model adjustment-offset will be applied. Alternatively, for example, a method that a mapping model adjustment-offset is applied may be different according to a mapping model to which a mapping model adjustment-offset will be applied.

In a multi-mapping model, MODEL_NUM mapping model candidates are used, and a final mapping model may be selected and/or used based on a predefined condition and/or signaled/encoded/decoded information.

For example, in deriving a specific model candidate among MODEL_NUM mapping model candidates, only samples satisfying a specific condition among the samples in an independent sample set and a sample in a dependent sample set corresponding thereto may be used.

For example, in deriving a specific model candidate among MODEL_NUM mapping model candidates, only samples satisfying a specific condition among the samples in a dependent sample set and a sample in an independent sample set corresponding thereto may be used.

For example, an independent variable set may be divided into MODEL_NUM sets based on a specific condition, and MODEL_NUM models may be derived by using each divided independent variable set and a dependent variable set corresponding to a corresponding independent variable set.

For example, a dependent variable set may be divided into MODEL_NUM sets based on a specific condition, and MODEL_NUM models may be derived by using each divided dependent variable set and an independent variable set corresponding to a corresponding dependent variable set.

The MODEL_NUM may be 2, 3 or a positive integer.

The specific condition may relates to at least one of a position of a sample or a value of a sample, but a type of the specific condition is not limited thereto. For example, in determining an input for a specific sample in an independent sample set and outputting a result value from an input in a mapping model, when a section of a sample value may be divided into two sections based on a specific value and a sample value of the specific sample is less than the specific value, a first mapping model candidate may be used as a final mapping model, and when it exceeds the specific value, a second mapping model candidate may be used as a final mapping model.

The specific sample value may be a value of a sample existing at one of the shaded positions in FIG. 27.

The specific sample value may be an average and/or a weighted average of sample values of samples corresponding to at least two of the shaded positions in FIG. 27.

The specific sample value may be a value of one sample in an independent sample set.

The specific sample value may be an average of values of at least two samples in an independent sample set.

The specific sample value may be a value of one sample in a dependent sample set.

The specific sample value may be an average of values of at least two samples in a dependent sample set.

The specific sample value may be a statistical value of values of at least two samples in an independent sample set.

The specific sample value may be a statistical value of values of at least two samples in a dependent sample set.

The specific sample value may be a value obtained by adding a predetermined offset value based on one of 1) a value of one sample in an independent sample set; 2) an average of values of at least two samples in an independent sample set; 3) a value of one sample in a dependent sample set; 4) an average of values of at least two samples in a dependent sample set; 5) a statistical value of values of at least two samples in an independent sample set; 6) a statistical value of values of at least two samples in a dependent sample set.

Information about the predetermined offset value may be signaled/encoded/decoded.

The predetermined offset value may be -512, -256, -128, - 64, -32, -16, -8, -4, -2, -1, 0, 1, 2, 4, 8, 16, 32, 64, 128, 256, 512 or an integer.

The predetermined offset value may be a value specified from a predetermined offset candidate list.

A size of the predetermined offset candidate list may be N, and N may be 3, 5, 7, 9 or a positive integer.

The predetermined offset candidate list may include at least one value of -512, -256, -128, -64, -32, -16, -8, -4, -2, -1, 0, 1, 2, 4, 8, 16, 32, 64, 128, 256 or 512.

The predetermined offset value may be determined based on a matching cost for each offset candidate in an offset candidate list. As an example, an offset candidate having the lowest matching cost among the offset candidates in an offset candidate list may be determined as the predetermined offset value.

A matching cost for a specific offset candidate may refer to a matching cost of a model-based prediction method that uses two sections divided by using a corresponding offset candidate.

Alternatively, the predetermined offset value may be a value obtained by multiplying or dividing a predetermined value by one of 1) a value of one sample in an independent sample set; 2) an average of values of at least two samples in an independent sample set; 3) a value of one sample in a dependent sample set; 4) an average of values of at least two samples in a dependent sample set; 5) a statistical value of values of at least two samples in an independent sample set; 6) a statistical value of values of at least two samples in a dependent sample set or a value determined based thereon.

The predetermined value may be -512, -256, -128, -64, -32, -16, -8, -4, -2, -1, 0, 1, 2, 4, 8, 16, 32, 64, 128, 256, 512 or an integer.

The predetermined value may be a value specified from a predetermined candidate list.

A size of the predetermined candidate list may be N, and N may be 1, 2, 3, 4, 5, 7, 9, or a positive integer.

The predetermined candidate list may include at least one value of -512, -256, -128, -64, -32, -16, -8, -4, -2, -1, 0, 1, 2, 4, 8, 16, 32, 64, 128, 256 or 512.

The predetermined value may be determined based on a matching cost for each candidate of the predetermined candidate list. As an example, a candidate having the lowest matching cost among the candidates of the predetermined candidate list may be determined as the predetermined value.

A matching cost for a specific candidate may refer to a matching cost of a model-based prediction method that uses two sections divided by using a corresponding candidate.

At least one of whether to use and/or an indicator indicating whether to use a multi-mapping model in a target block; the number of mapping model candidates when using a multi-mapping model; the maximum number of mapping model candidates when using a multi-mapping model; or a method for selecting a final mapping model from a mapping model candidate may be determined based on a predefined condition.

For example, at least one of whether to use a multi-mapping model in a target block; the number of mapping model candidates when using a multi-mapping model; the maximum number of mapping model candidates when using a multi-mapping model; or a method for selecting a final mapping model from a mapping model candidate may be determined based on at least one of the maximum value that a specific sample may have, the minimum value, a prediction mode of a target block, the motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block and/or a neighbor sample of a target block.

For example, when some of neighbor samples of a target block are selected and a difference between the maximum value and the minimum value of a sample value for selected samples is equal to or greater than a predefined threshold, a model-based prediction method may be performed by using at least two mapping models in a target block.

Information on at least one of whether to use and/or an indicator indicating whether to use a multi-mapping model in a target block; the number of mapping model candidates when using a multi-mapping model; the maximum number of mapping model candidates when using a multi-mapping model; or a method for selecting a final mapping model from a mapping model candidate may be signaled/encoded/decoded. It may be determined based on the signaled/encoded/-decoded information.

When a single mapping model is used in a target block, it may refer to one of 1) a case in which a multi-mapping model is not used in a target block, 2) a case in which a mapping model for a first component and a mapping model for a second component are the same in a target block and 3) a case in which one mapping model is used for a first component and one mapping model is used for a second component in a target block. Each of a first component, a second component and a specific component may refer to one of a luma component, a Cb component and a Cr component.

When a multi-mapping model is used in a target block, it may refer to one of 1) a case in which a mapping model for a first component and a mapping model for a second component are different from each other in a target block, 2) two different mapping models are used for a specific component in a target block and 3) a case in which two different mapping models are used for a first component and two different mapping models are used for a second component in a target block. Each of a first component, a second component and a specific component may refer to one of a luma component, a Cb component and a Cr component.

Prediction for at least one of samples of a target block may be performed based on a subject sample set or a mapping model that calculates an association between an independent sample set and a dependent sample set. Prediction for at least one of samples of a target block may be performed based on a result obtained by inputting a subject sample set to a mapping model or a set of obtained results.

At least one of sample values of a target block may be changed based on a subject sample set or a mapping model that calculates an association between an independent sample set and a dependent sample set. At least one of sample values of a target block may be changed based on a result obtained by inputting a subject sample set to a mapping model or a set of obtained results.

For at least one sample in a target block, an input consisting of MODEL_INPUT_NUM components may be determined, including at least one of a sample in a subject sample set at a position corresponding to a corresponding sample; a sample in a subject sample set corresponding to a corresponding sample; a neighbor sample adjacent to a sample in a subject sample set corresponding to a corresponding sample; a bias value; or a result of performing a specific operation on at least one of the above-described elements.

For at least one sample in a target block, prediction for a corresponding sample may be performed, or a value for a corresponding sample may be changed based on an output consisting of MODEL_OUTPUT_NUM components of a mapping model for an input determined for a corresponding sample.

For at least one sample in a subject sample set, an input consisting of MODEL_INPUT_NUM components may be determined, including at least one of a corresponding sample; a neighbor sample adjacent to a corresponding sample; a bias value; or a result of performing a specific operation on at least one of the above-described elements.

For at least one sample in a subject sample set, prediction for at least one sample in a target block corresponding to a corresponding sample may be performed, or a value for at least one sample in a target block corresponding to a corresponding sample may be changed based on an output consisting of MODEL_OUTPUT_NUM components of a mapping model for an input determined for a corresponding sample.

For example, a target block may be divided into subblocks in a unit of width SUB_W and height SUB_H, and at least one of whether to apply a model-based prediction method; at least one of information on a model-based prediction method; a used mapping model; a method for deriving a mapping model; a neighbor block that information on a model-based prediction method will be inherited; whether to use a multi-mapping model; or the number and/or the maximum number of mapping models may be determined in a unit of a sub-block. Each of SUB_W and SUB_H may be 1, 2, 4, 8, 16 or a positive integer.

A method for deriving a mapping model may include a derivation method through regression analysis and a method for inheriting information about a model-based prediction method from a neighbor block, but a method for deriving a mapping model is not limited thereto.

Information about a model-based prediction method may include whether and/or an indicator indicating whether at least one of whether to apply a model-based prediction method; at least one of information on a model-based prediction method; a used mapping model; a method for deriving a mapping model; a neighbor block that information on a model-based prediction method will be inherited; whether to use a multi-mapping model; the number and/or the maximum number of mapping models will be determined in a unit of a sub-block. Information about a model-based prediction method may include information about SUB_W and/or SUB_H.

A type of a cost function used for calculating a matching cost in template matching and/or bilateral matching may be determined based on whether to perform and/or an indicator indicating whether to perform a model-based prediction method in a target block.

For example, when a model-based prediction method is performed in a target block or an indicator indicating whether to use a model-based prediction method is true, a matching cost may be calculated by using a MR-SAD in performing template matching and/or bilateral matching.

For example, when a model-based prediction method is not performed in a target block or an indicator indicating whether to use a model-based prediction method is false, a matching cost may be calculated by using a SAD in performing template matching and/or bilateral matching.

As an example, if a target block is bidirectional prediction, an independent sample set may include at least one of neighbor samples of a reference block in a L0 direction or at least one of neighbor samples of a reference block in a L1 direction.

As an example, if a target block is bidirectional prediction, a dependent sample set may include at least one of neighbor samples of a target block.

As an example, if a target block is bidirectional prediction, a subject sample set may include at least one of samples in a reference block in a L0 direction or at least one of samples in a reference block in a L1 direction.

As an example, if a target block is bidirectional prediction, an input of a mapping model may include 1) a neighbor sample of a reference block in a L0 direction and a neighbor sample of a reference block in a L1 direction; and/or 2) a sample in a reference block in a L0 direction and a sample in a reference block in a L1 direction. For example, if a target block is a bidirectional prediction, prediction for at least one sample in a target block may be performed, or a value for at least one sample may be changed based on an output of a mapping model for an input including at least one sample in a reference block in a L0 direction or at least one sample in a reference block in a L1 direction.

As an example, if a target block is bidirectional prediction, an input of a mapping model may include 1) a neighbor sample of a reference block in a L0 direction or a neighbor sample of a reference block in a L1 direction; and/or 2) a sample in a reference block in a L0 direction or a sample in a reference block in a L1 direction. For example, if a target block is bidirectional prediction, prediction for at least one sample in a target block may be performed, or a value for at least one sample may be changed based on an output of a mapping model for a L0 direction for an input including at least one sample in a reference block in a L0 direction and/or an output of a mapping model for a L1 direction for an input including at least one sample in a reference block in a L1 direction.

For example, prediction for at least one sample in a target block may be performed, or a value for at least one sample may be changed by using a weighted sum of an output of a mapping model for a L0 direction and an output of a mapping model for a L1 direction. In this case, a weight of the weighted sum may be determined based on an index in bi-prediction with weights and/or a weight in bi-prediction with weights.

A mapping model for a L0 direction and a mapping model for a L1 direction may be a different model.

An independent sample set for a mapping model for a L0 direction may include at least one of neighbor samples of a reference block in a L0 direction, and may not include a neighbor sample of a reference block in a L1 direction. An independent sample set for a mapping model for a L1 direction may include at least one of neighbor samples of a reference block in a L1 direction, and may not include a neighbor sample of a reference block in a L0 direction.

A subject sample set for a mapping model for a L0 direction may include at least one of samples in a reference block in a L0 direction, and may not include a sample in a reference block in a L1 direction. A subject sample set for a mapping model for a L1 direction may include at least one of samples in a reference block in a L1 direction, and may not include a sample in a reference block in a L0 direction.

For example, for a L0 direction and a L1 direction, a mapping model for each direction may be iteratively derived. In other words, 1) after deriving a mapping model in a L0 direction, 2) a mapping model in a L1 direction may be derived, and then 3) a mapping model in a L0 direction may be derived. In this case, the number of times or order of deriving a mapping model is not limited thereto. In the embodiment, a mapping model in a L0 direction derived in 1) and a mapping model in a L0 direction derived in 3) may be different from each other. In other words, at least one of an independent sample set, a dependent sample set or a subject sample set of a mapping model may be different. For example, for a L0 direction and a L1 direction, a mapping model for each direction may be iteratively derived ITER_NUM times. ITER_NUM may be 1, 2, 3 or a positive integer. ITER_NUM may be a predefined value. Alternatively, information about ITER_NUM may be signaled/encoded/decoded. For example, in the embodiment, it is an embodiment for a case in which the number of repetitions ITER_NUM is 3.

Based on a mapping model in a L1 direction (or, a L0 direction), at least one of an independent sample set, a dependent sample set or a subject sample set for a mapping model in a L0 direction (or, a L1 direction) may be configured.

For example, a dependent sample set for a mapping model in a L0 direction (or, a L1 direction) may include a value determined based on at least one of a neighbor sample of a target block; an output for an input corresponding to a neighbor sample of a target block for a mapping model in a L1 direction (or, a L0 direction); or an index and/or a weight in bi-prediction with weights.

FIG. 35 is a reference diagram for convenience of a description of a mapping model function.

For example, when a mapping model in a L0 direction is $f_o$, a mapping model in a L1 direction is $f_1$, a neighbor sample of a target block is $Pix_{neigh}$ and an input for a mapping model in a L1 direction corresponding to $Pix_{neigh}$ is $ModelInput_1(Pix_{neigh})$, a dependent sample set for $f_o$ may include a weighted sum value of $Pix_{neigh}$ and $f_1(ModelInput_1(Pix_{neigh}))$. The weighted sum value may be $w_{neight} \times Pix_{neigh\text{-}W} \times f_1(ModelInput_1(Pix_{neigh}))$. The weight $w_{neight}$ and w may be a value determined based on an index and/or a weight in bi-prediction with weights, or may be a predefined value.

For example, $w_{neight}$ may be 2, and w may be 1.

For example, when a weight for a L0 direction is $w_{bcw0}$ and a weight for a L1 direction is $w_{bcwi}$ in bi-prediction with weights, a dependent sample set for $f_o$ may include $W_{neight} \times Pix_{neigh\text{-}W} \times f_1(ModelInput_1(Pix_{neigh}))$, and in this case, $w_{neight}$ may be $1/w_{bcwi}$, and w may be $w_{bcw0}/w_{bcw1}$.

A result value may be rounded up in a calculation process of at least one of $w_{neight}$, w, ($w_{neight} \times Pix_{neigh\text{-}w} \times f_1(ModelInput_1(Pix_{neigh}))$) or ($w_{neight} \times Pix_{neigh\text{-}w} \times f_0(ModelInput_0(Pix_{neigh}))$).

In order to improve accuracy of an operation in a calculation process of at least one of $w_{neight}$, w, ($w_{neight} \times Pix_{neigh\text{-}w} \times f_1(ModelInput_1(Pix_{neigh}))$) or ($w_{neight} \times Pix_{neigh\text{-}w} \times f_0(ModelInput_0(Pix_{neigh}))$), a predetermined value may be multiplied or divided. For example, $w_{neight}$ may be a value obtained by dividing a predetermined value by $w_{bcw1}$, and w may be a value obtained by multiplying a predetermined value by $w_{bcw0}$ and dividing a predetermined value by $w_{bcw1}$. For example, the predetermined value may be 2, 4, 8, 16 and/or 32 to the square of 2.

A dependent sample set for prediction model f1 in a L1 direction may also be derived in the same way. As an example, a dependent sample set for $f_1$ may include ($w_{neight} \times Pix_{neigh\text{-}w} \times f_0(ModelInput_0(Pix_{neigh}))$), and in this case, $w_{neight}$ may be $1/w_{bcw1}$ and w may be $w_{bcw1}/w_{bcw0}$.

If a mapping model $f_o$ is derived based on neighbor samples for a L0 prediction block, a mapping model $f_1$ may be derived by setting what is obtained by adjusting a value of neighbor samples for a L1 prediction block according to the above-described formula as a dependent sample set. In addition, if a mapping model $f_o$ is derived, a pre-derived mapping model $f_o$ may be updated by adjusting a value of neighbor samples for a L0 prediction block according to the above-described formula.

bi-prediction with weights may refer to a method for generating a prediction block for a target block by performing a weighted sum on a reference block in a L0 direction and a reference block in a L1 direction, in generating a prediction block for a target block by using a reference block in a L0 direction and a reference block in a L1 direction in a bidirectional prediction block. In this case, the sum of a weight for a L0 direction and a weight for a L1 direction may be 1. Information on a weight for a L0 direction and a weight for a L1 direction used in a target block may be signaled/encoded/decoded. Alternatively, a weight for a L0 direction and a weight for a L1 direction used in a target block may be determined based on a weight in a neighbor block.

A weight in bi-prediction with weights may refer to at least one of a weight for a L0 direction or a weight for a L1 direction.

As an example, at least one of coefficients of a mapping model in a L0 direction; and/or at least one of coefficients of a mapping model in a L1 direction may be determined based on a weight in bi-prediction with weights, or may be the same as a weight in a L0 direction and/or a weight in a L1 direction in bi-prediction with weights.

Alternatively, as an example, a weight in a L0 direction and/or a weight in a L1 direction in bi-prediction with weights may be determined based on at least one of coefficients of a mapping model in a L0 direction; and/or at least one of coefficients of a mapping model in a L1 direction.

As an example, in a target block, an independent sample set for at least one mapping model in a model-based prediction method may include at least one of luma component reconstructed samples around a target block, a dependent sample set may include at least one of chroma component reconstructed samples corresponding to luma component reconstructed samples around a target block in an independent sample set and a subject sample set may include at least one of luma component reconstructed samples in a target block. In a target block, prediction of at least one chroma component sample may be performed, or a value of at least one chroma component prediction sample may be changed based on at least one mapping model and a subject sample set.

As an example, in a target block, an independent sample set for at least one mapping model in a model-based prediction method may include at least one of reconstructed samples of a specific component around a reference block, a dependent sample set may include at least one of reconstructed samples of the specific component around a target block and a subject sample set may include at least one of prediction samples of the specific component in a target block and/or at least one of reconstructed samples of the specific component in a reference block. In a target block, a value of at least one of specific component samples may be changed based on at least one mapping model and a subject sample set.

As an example, in a target block, an independent sample set for at least one mapping model in a model-based prediction method may include a x-component and/or a y-component of at least one position among neighbor samples of a target block, a dependent sample set may include motion information on at least one of neighbor samples of a target block and/or motion information in at least one of neighbor samples of a target block and a subject sample set may include a x-component and/or a y-component of a position of at least one sample in a target block. In a target block, prediction of at least one sample may be performed, or a value of at least one prediction sample may be changed based on at least one mapping model and a subject sample set. For example, at least one sample within a target block may be predicted by performing inter prediction by using motion information determined based on a result of a mapping model.

As an example, in a target block, an independent sample set for at least one mapping model in a model-based prediction method may include a x-component and/or a y-component of at least one position among samples in a target block, a dependent sample set may include motion information on at least one of samples in a target block and/or motion information in at least one of samples in a target block and a subject sample set may include a x-component and/or a y-component of a position of at least one sample around a target block. In a target block, prediction of at least one sample may be performed, or a value of at least one prediction sample may be changed based on at least one mapping model and a subject sample set. For example, at least one CPMV of a target block may be determined based on a result of a mapping model.

As an example, in a target block, an independent sample set for at least one mapping model in a model-based prediction method may include a prediction sample around a target block, a dependent sample set may include a reconstructed sample around a target block and/or a residual sample around a target block and a subject sample set may include a prediction sample in a target block and/or a reconstructed sample of the specific component in a reference block. In a target block, a value of a prediction sample may be changed based on at least one mapping model and a subject sample set.

As an example, in a target block, an independent sample set for at least one mapping model in a model-based prediction method may include a prediction sample of a specific component around a target block, a dependent sample set may include a reconstructed sample of a corresponding specific component around a target block in an independent sample set and a subject sample set may include a prediction sample of a corresponding specific component in a target block and/or a reconstructed sample of the specific component in a reference block. In a target block, a value of a prediction sample of a corresponding specific component may be changed based on at least one mapping model and a subject sample set. The specific component may refer to a luma component and/or a chroma component.

As an example, in a target block, an independent sample set for at least one mapping model in a model-based prediction method may include a x-component and/or a y-component of a position of at least one of samples in a target block, a dependent sample set may include a sample value of at least one of samples in a target block and a subject sample set may include a x-component and/or a y-component of a position of at least one sample around a target block. In a target block, prediction of at least one sample may be performed, or a value of at least one prediction sample may be changed based on at least one mapping model and a subject sample set.

As an example, in a target block, an independent sample set for at least one mapping model in a model-based prediction method may include at least one of reconstructed samples of a luma component around a reference block or at least one of reconstructed samples of a chroma component around a reference block, a dependent sample set may include at least one of reconstructed samples of the chroma component around a target block and a subject sample set may include at least one of prediction samples of a luma component in a target block and/or at least one of reconstructed samples of a luma component in a reference block; and at least one prediction samples of a chroma component in a target block and/or at least one of reconstructed samples of a chroma component in a reference block. In a target block, prediction of at least one chroma sample may be performed, or a value of at least one chroma component sample may be changed based on at least one mapping model and a subject sample set.

As an example, at least one of cost functions used in template matching and/or bilateral matching may be determined based on whether to perform and/or an indicator indicating whether to perform a model-based prediction method in a target block.

As an example, if whether to perform a model-based prediction method in a target block is true or if an indicator indicating whether to perform a model-based prediction method in a target model is true, at least one of cost functions used in template matching and/or bilateral matching may be a MR-SAD. Otherwise, at least one of cost functions used in template matching and/or bilateral matching may be a SAD.

As an example, if whether to perform a model-based prediction method in a target block is true or if an indicator indicating whether to perform a model-based prediction method in a target model is true, a MR-SAD may be used as a cost function in template matching and/or bilateral matching. Otherwise, a SAD may be used as a cost function in template matching and/or bilateral matching.

As an example, if whether to perform a model-based prediction method in a target block is true or if an indicator indicating whether to perform a model-based prediction method in a target model is true, a value of at least one sample of a reference template of template matching may be determined or changed based on a mapping model. Afterwards, a cost function may be calculated by using a sample value determined or changed based on a mapping model. For example, a specific sample of a reference template may change a value of a corresponding sample based on an output of a mapping model for an input including a corresponding sample.

If a target block is in a geometric partitioning mode and a model-based prediction method is performed in a target block, a different mapping model may be used for each prediction block (or, reference block) of a target block. A mapping model for each prediction block (or, reference block) may use the same dependent sample set. Alternatively, a mapping model for each prediction block (or, reference block) may be different in at least one of a coefficient, a type, an input structure, an output structure or a subject sample set of a mapping model.

If template matching and/or bilateral matching are performed in a target block, a type of a cost function used in template matching and/or bilateral matching may be determined based on whether a model-based prediction method is performed in a target block.

As an example, if a model-based prediction method is performed in a target block, a cost function used in template matching and/or bilateral matching in a target block may be a MR-SAD.

As an example, if a model-based prediction method is not performed in a target block, a cost fiction used in template matching and/or bilateral matching in a target block may be a SAD.

As an example, if a model-based prediction method and template matching (and/or bilateral matching) are performed in a target block, motion information of a target block may be improved by performing template matching (and/or bilateral matching) that uses a MR-SAD as a cost function. At least one of an independent sample set or a subject sample set in a target block may be configured by using reference block(s) indicated by motion information improved by performing template matching (and/or bilateral matching) using a MR-SAD as a cost function in a target block and/or neighbor samples of corresponding reference block(s). At least one mapping model in a target block may be derived by using an independent sample set and/or a subject sample set derived by using reference block(s) indicated by motion information improved by performing template matching (and/or bilateral matching) using a MR-SAD as a cost function in a target block and/or neighbor samples of corresponding reference block(s). The derived mapping model may be applied to at least one of reference block(s) indicated by motion information improved by performing template matching (and/or bilateral matching) using a MR-SAD as a cost function and/or a prediction block generated by using it.

When a mapping model is applied to a specific block, it may mean that a subject sample set is configured by using a sample included in any one of 1) a corresponding block, a neighbor sample of a corresponding block, a neighbor block of a corresponding block, 2) a chroma component block corresponding to a corresponding block if a corresponding block is a luma component block, 3) a chroma component block corresponding to a corresponding block if a corresponding block is a chroma component block and 4) another chroma component block corresponding to a corresponding block if a corresponding block is a chroma component block (e.g., a Cr component block corresponding thereto if a target block is a Cb component block).

Alternatively, when a mapping model is applied to a specific block, it may mean that a sample included in any one of 1) a corresponding block, a neighbor sample of a corresponding block, a neighbor block of a corresponding block, a chroma component block corresponding to a corresponding block if a corresponding block is a luma component block, 2) a chroma component block corresponding to a corresponding block if a corresponding block is a chroma component block and 3) another chroma component block corresponding to a corresponding block if a corresponding block is a chroma component block (e.g., a Cr component block corresponding thereto if a target block is a Cb component block) may be used to configure an input of a mapping model and an output therefor may be used to generate at least one of a prediction sample, a reconstructed sample, a residual sample or a decoded sample of a corresponding block or change a value thereof.

Information about at least one of information about a model-based prediction method may be signaled/encoded/decoded. A model-based prediction method may be determined based on the signaled/encoded/decoded information. For example, in configuring an independent sample set and a dependent sample set in a target block, an indicator indicating whether a neighbor sample in a specific direction for a target block may be included may be signaled/encoded/decoded.

For example, only when an indicator indicating whether a neighbor sample in a top direction of a target block may be included is true, a neighbor sample in a top direction of a target block may be used to configure an independent sample set and a dependent sample set.

For example, only when an indicator indicating whether a neighbor sample in a left direction of a target block may be included is true, a neighbor sample in a left direction of a target block may be used to configure an independent sample set and a dependent sample set.

Information about at least one of information about a model-based prediction method may be predefined. For example, at least one of information about a model-based prediction method may be determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

In entropy encoding/decoding information about at least one of information about a model-based prediction method, a context model in entropy encoding/decoding may be determined based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block or a neighbor sample of a target block.

For example, based on at least one of whether a luma component block of a target block has a motion vector or a block vector; whether a luma component block of a target block is a prediction mode having a motion vector or a block vector; or whether there is a motion vector or a block vector corresponding to a luma component block of a target block, a context model in entropy encoding/decoding information about at least one of information about a model-based prediction method may be determined.

For example, a context model in entropy encoding/decoding information about at least one of information about a model-based prediction method may be determined based on whether of a model-based prediction method in a neighbor block and/or whether to perform a model-based prediction method in a neighbor block.

If template matching is performed in a target block, or if an indicator indicating whether template matching is performed is true, a model-based prediction method may always be performed in a target block. For example, if template matching is performed in a target block, or if an indicator indicating whether template matching is performed is true, an indicator indicating whether a model-based prediction method is performed in a target block may always be true.

If bilateral matching is performed in a target block, or if an indicator indicating whether bilateral matching is performed is true, a model-based prediction method may always be performed in a target block. For example, if bilateral matching is performed in a target block, or if an indicator indicating whether bilateral matching is performed is true, an indicator indicating whether a model-based prediction method is performed may always be true in a target block.

Whether to perform a model-based prediction method and/or an indicator indicating whether to perform a model-based prediction method may be inherited from a neighbor block.

For example, in using motion information of a merge candidate specified through a merge index in a merge list as motion information of a target block, whether a model-based prediction method is performed in a target block may use whether a model-based prediction method is performed in the specified merge candidate.

For example, in using motion information of a merge candidate specified through a merge index in a merge list as motion information of a target block, an indicator indicating whether to perform a model-based prediction method in the specified merge candidate may be used as an indicator indicating whether to perform a model-based prediction method in a target block.

If template matching is performed in a target block and/or if an indicator indicating whether to perform template matching in a target block is true, a model-based prediction method may always be performed in a target block. For example, if template matching is performed in a target block and/or if an indicator indicating whether to perform template matching in a target block is true, an indicator indicating whether to perform a model-based prediction method in a target block may always be true. For example, if template matching is performed in a target block and/or if an indicator indicating whether to perform template matching in a target block is true, an indicator indicating whether to perform a model-based prediction method in a target block may be changed to be true.

If bilateral matching is performed in a target block and/or if an indicator indicating whether to perform bilateral matching in a target block is true, a model-based prediction method may always be performed in a target block. For example, if bilateral matching is performed in a target block and/or if an indicator indicating whether to perform bilateral matching in a target block is true, an indicator indicating whether to perform a model-based prediction method in a target block may always be true. For example, if bilateral matching is performed in a target block and/or if an indicator indicating whether to perform bilateral matching in a target block is true, an indicator indicating whether to perform a model-based prediction method in a target block may be changed to be true.

Luma Mapping with Chroma Scaling (LMCS) is a technology for improving encoding performance and subjective image quality by performing encoding in a more efficient dynamic range of pixel values, and it includes luma signal mapping and chroma signal scaling.

When performing a model-based prediction method in a target block, a model-based prediction method may be performed based on information about LMCS in a target picture.

In addition, when at least one of a prediction/residual/reconstructed/decoded sample in a first picture is used to configure at least one of an independent sample set, a dependent sample set or a subject sample set in a target block, a model-based prediction method in a target block may also be performed based on information about LMCS of a first picture.

For example, when LMCS is performed in a target picture, in configuring a sample set by using a neighbor sample of a target block, a sample set may be configured by using a result of performing inverse mapping of LMCS on a neighbor sample of a target block.

For example, when LMCS is performed in a target picture, in configuring a sample set by using a sample in another picture, a sample set may be configured by using a result of performing forward mapping of LMCS on a sample in another picture.

The sample set may include at least one of an independent sample set, a dependent sample set or a subject sample set.

In addition, when inheriting first mapping model information, mapping model information in a first block existing in a first picture in a target block, second mapping model information may be derived and a second mapping model may be inherited by performing a specific processing on first mapping model information based on at least one of information on LMCS of a target picture and/or information on LMCS of a first picture. The first picture may be a reference picture and/or a collocated picture.

In deriving a merge candidate from a temporally adjacent block existing in a first picture in a target block, whether a corresponding temporally adjacent block may be used for deriving a merge candidate may be determined based on at least one of information about LMCS in a target picture or information about LMCS in a first picture.

For example, whether a merge candidate may be derived from a temporally adjacent block existing in a first picture in a target block may be determined based on whether at least one of information about LMCS in a target picture or in a first picture is the same.

As an example, if both ph_lmcs_enabled_flag in a target picture and ph_lmcs_enabled_flag in a first picture are a first value, a merge candidate may be derived from a temporally adjacent block existing in a first picture in a target block. A first value may be 0 or false.

As another example, if both ph_lmcs_enabled_flag in a target picture and ph_lmcs_enabled_flag in a first picture are a second value and ph_lmcs_aps_id are the same, a merge candidate may be derived from a temporally adjacent block existing in a first picture in a target block.

For example, a specific processing performed on the first mapping model information may refer to a change in a value of at least one of coefficients of a first mapping model.

Information about LMCS may be information including at least one of whether LMCS is performed in a picture or LMCS parameter information.

ph_lmcs_enabled_flag may be an indicator indicating whether LMCS is performed in a target picture. ph_lmcs_aps_id may be information identifying a LMCS parameter set in a target picture. For example, at least one of LMCS parameters in a target picture may be determined based on ph_lmcs_aps_id. Alternatively, for example, LMCS mapping in a target picture may be performed based on ph_lmcs_aps_id.

A LMCS parameter set includes a pivot table. A pivot table may be composed of a plurality of codewords, and information about a codeword may be encoded and signaled.

When at least two reference blocks are used in a target block, a weighted sum of reference blocks may be performed to generate a prediction block of a target block. A weight for the weighted sum may be determined in a unit of a reference block, in a unit of a predetermined region in a reference block or in a unit of a sample in a reference block.

As an example, a weight for at least one of reference blocks of a target block may be determined based on a mapping model. Alternatively, a weight for a sample belonging to at least one of reference blocks of a target block may be determined based on a mapping model.

An independent sample set may be a set of independent variables of a mapping model. Alternatively, a set of independent variables of a mapping model may be determined based on an independent sample set. An independent sample set may include at least one neighbor sample among the reference blocks of a target block.

A dependent sample set may be a set of dependent variables of a mapping model. Alternatively, a set of dependent variables of a mapping model may be determined based on a dependent sample set.

A dependent sample set may include a neighbor sample of **a target** block. A subject sample set may include at least one sample among the reference blocks of a target block.

A weight for reference blocks of a target block and/or a weight for samples in reference blocks of a target block may be determined simultaneously.

Alternatively, a weight for reference blocks of a target block and/or a weight for samples in reference blocks of a target block may be determined sequentially. In this case, a dependent sample set may include a sample value determined based on at least one of a neighbor sample of a target block; at least one neighbor sample of a reference block whose weight was already determined; or a weight of a reference block whose weight was already determined. For example, a weight for the same reference block may be determined at least two times. The order of reference blocks whose weight is determined may be determined based on at least one of a POC of an image to which each reference block belongs; a direction of a reference image to which each reference block belongs; an index of motion information indicating each reference block; or a matching cost for each reference block.

A value of at least one coefficient in a target block may be corrected. The coefficient may be a coefficient of one of mapping models of a target block.

Information for specifying a coefficient to be corrected may be signaled/encoded/decoded. Alternatively, a coefficient to be corrected may be determined based on at least one of a mapping model, a neighbor sample of a target block or a neighbor sample of at least one of reference blocks. For example, information for specifying a mapping model to be corrected may be signaled/encoded/decoded.

A coefficient to be corrected may be determined based on a second sample set that is a result of applying a mapping model to a first sample set, and a third sample set.

For example, a coefficient to be corrected may be determined based on a difference between a second sample set and a third sample set.

For example, a first sample set may include a neighbor luma prediction/reconstructed sample of a target block, and a third sample set may include a neighbor chroma prediction/reconstructed sample of a target block.

For example, a first sample set may include a neighbor luma/chroma prediction samples of a target block, and a third sample set may include a neighbor luma/chroma reconstructed sample of a target block.

For example, at least one correction value may be specified from a correction candidate list.

A correction candidate list may be a list composed of predetermined values.

For example, a correction candidate list may not always include 0.

For example, a correction candidate list may be a predetermined configured list.

For example, a correction candidate list may include at least one of -4, -3, -2, -1, 1, 2, 3 or 4.

A coefficient to be corrected may be replaced with a result of adding or multiplying a corresponding coefficient by a correction value specified from a correction candidate list.

In this case, a corrected coefficient may be divided by a predetermined value, or a corrected coefficient may be multiplied by a predetermined value.

The predetermined value may be a value of 2 to the power of N. The N may be 1, 2, 3, 4, 5 or a positive integer.

A dual mode prediction method may refer to a method that prediction is performed by at least one method of inter prediction; intra block copying; or template matching in predicting a luma component of a target block and prediction is performed by an inter-component prediction method in predicting a chroma component.

Herein, template matching may refer to at least one of an intra template matching mode or an inter template matching mode.

If a target block is an intra template matching mode, a prediction mode of a target block may be an intra prediction mode and/or an intra block copy mode, and template matching may be performed in a target block. A reference region when performing template matching in a target block may be a region within a target image. As an example, if a target block is an intra template matching mode, a reference block may be a block indicated by block vector information of a target block. Block vector information may be information including a block vector.

If a target block is an inter template matching mode, a prediction mode of a target block may be an inter prediction mode, and template matching may be performed in a target block. A reference region when performing template matching in a target block may be a region within a reference image. As an example, if a target block is an inter template matching mode, a reference block may be a block indicated by motion information of a target block. Motion information may be information including a motion vector.

An inter-component prediction method may refer to a model-based prediction method that an independent sample set includes a luma component sample, a dependent sample set includes a chroma component sample and a subject sample set includes a luma component sample within a target block.

As an example, an independent sample set may include a luma component prediction sample around a target block and/or a luma component reconstructed sample around a target block. As another example, an independent sample set may include a luma component prediction sample around a reference block and/or a luma component reconstructed sample around a reference block.

As an example, a dependent sample set may include a chroma component prediction sample around a target block and/or a chroma component reconstructed sample around a target block. As another example, an independent sample set may include a chroma component prediction sample around a reference block and/or a chroma component reconstructed sample around a reference block.

The reference block may refer to a reference block indicated by a block vector and/or a motion vector.

An indicator for whether a target CTU has a single tree structure or a dual tree structure may be signaled/encoded/decoded.

If a target CTU has a single tree structure, a block division structure of a luma component block and a chroma component block may be the same in a target CTU. However, a block size of a luma component and a block size of a chroma component may be different from each other based on a chroma component format.

A chroma component format may include at least one of 4:4:4, 4:2:2 or 4:2:0 formats.

If a target CTU has a dual tree structure, a block division structure of a luma component block and a chroma component block may be independent in a target CTU. In other words, if a target CTU has a dual tree structure, a block division structure of a luma component block and a block division structure of a chroma component block may be different from each other in a target CTU.

If a target CTU has a single tree structure, a dual mode prediction method may be performed in a target block.

An indicator indicating whether a dual mode prediction method is enabled may be signaled/encoded/decoded in a specific unit. For the specific unit, at least one of a parameter set, a header, a brick, a CTU, a CU, a PU, a TU, a CB, a PB or a TB may include at least one of a video parameter set, a decoding parameter set, a sequence parameter set, an adaptation parameter set, a picture parameter set, a picture header, a sub-picture header, a slice header, a tile group header, a tile header, a brick, a coding tree unit (CTU), a coding unit (CU), a prediction unit (PU), a transform unit (TU), a coding block (CB), a prediction block (PB) or a transform block (TB).

In the prior art, when a target CTU has a single tree structure, it is determined that a prediction mode of a luma component and a chroma component of a target block are the same. On the other hand, in a dual mode prediction method, even when a target CTU has a single tree structure, it may be determined that a prediction mode of a luma component and a chroma component of a target block are different.

As an example, in the prior art, when a target CTU has a single tree structure, both a luma component and a chroma component of a target block may be predicted through inter prediction when a prediction mode of a target block is an inter prediction mode.

As another example, in the prior art, when a target CTU has a single tree structure, both a luma component and a chroma component of a target block may be predicted through intra block copy when a prediction mode of a target block is an intra block copy mode.

When a prediction mode of a target block is at least one of an inter prediction mode; an intra block copy mode; or a template matching mode, information about a dual mode prediction method may be signaled/encoded/decoded in a target block. Alternatively, when a prediction mode of a target block is at least one of an inter prediction mode; an intra block copy mode; or a template matching mode, information about a dual mode prediction method in a target block may be determined based on at least one of a size of a target block; a prediction mode of a target block; motion information of a target block; a neighbor block of a target block; a neighbor sample of a target block; or a coding parameter of a target block.

Alternatively, a prediction mode of a target block may be at least one of an inter prediction mode; an intra block copy mode; a template matching mode or a dual mode prediction mode. Information about whether a prediction mode of a target block is a dual mode prediction mode may be signaled/encoded/decoded. Alternatively, when a prediction mode of a target block is a dual mode prediction mode, information about a dual mode prediction method in a target block may be determined based on at least one of a size of a target block; a prediction mode of a target block; motion information of a target block; a neighbor block of a target block; a neighbor sample.

Information about a dual mode prediction method may include at least one of whether a dual mode prediction method is activated; an indicator indicating whether to perform a dual mode prediction method for at least one of a Cb component block and a Cr component block; or information about an inter-component prediction method of a dual mode prediction method.

Information about an inter-component prediction method may include at least one of information about a model-based prediction method.

For example, if a dual-mode prediction method is performed in a target block and there is one transform block for a luma component block of a target block, prediction and reconstruction of a luma component and a chroma component of a target block may be performed in the following order.

Predict a luma component of a target block → Reconstruct a luma component of a target block → Predict a chroma component of a target block → Reconstruct a chroma component of a target block

Alternatively, predict a luma component of a target block → Predict a chroma component of a target block → Reconstruct a luma component of a target block → Reconstruct a chroma component of a target block

Alternatively, predict a luma component of a target block → Predict a chroma component of a target block → Derive a mapping model through a prediction component of a luma component and a prediction component of a chroma component → Reconstruct a luma component of a target block → Re-predict a chroma component of a target block based on a reconstructed luma component of a target block → Reconstruct a chroma component of a target block based on a re-prediction result

In this case, prediction for a luma component and a chroma component before deriving a mapping model may be performed by the same method (e.g., intra prediction or inter prediction).

In this case, prediction for a luma component and prediction for a chroma component before deriving a mapping model may be processed in parallel, or the order may be switched.

The re-prediction for a chroma component of a target block based on a reconstructed luma component of a target block may be based on deriving a mapping model derived through a prediction component of a chroma component and a prediction component of a luma component and a subject sample set including a reconstructed luma component sample of a target block.

For example, when a dual mode prediction method is performed in a target block and there are at least two transform blocks for a luma component block of a target block, prediction and reconstruction for a luma component and a chroma component of a target block may be performed in the following order.

Predict a luma component of a target block → Reconstruct a luma component of a target block → Predict a chroma component of a target block → Reconstruct a chroma component of a target block

Alternatively, predict a luma component of a target block → Predict a chroma component of a target block → Reconstruct a luma component of a target block → Reconstruct a chroma component of a target block

Alternatively, predict a luma component of a target block → reconstruct a first region in a luma component of a target block → predict a region corresponding to a first region in a chroma component of a target block → reconstruct a region corresponding to a first region in a chroma component of a target block → predict a second region in a luma component of a target block → reconstruct a region corresponding to a second region in a chroma component of a target block ...

Alternatively, predict a luma component of a target block → reconstruct a first region in a luma component of a target block → predict a region corresponding to a first region in a chroma component of a target block → predict a second region in a luma component of a target block → ... → reconstruct a chroma component of a target block

The i-th region may be a region indicated by a i-th residual block for a luma component of a target block. (i may have a value from 1 to the number of residual blocks for a luma component block of a target block.)

Alternatively, predict a luma component of a target block → predict a chroma component of a target block → derive a mapping model through a prediction component of a luma component and a prediction component of a chroma component → reconstruct a luma component of a target block → re-predict a chroma component of a target block based on a reconstructed luma component of a target block → reconstruct a chroma component of a target block **based on** a re-prediction result

In this case, prediction for a luma component and a chroma component before deriving a mapping model may be performed by the same method (e.g., intra prediction or inter prediction).

In this case, prediction for a luma component and prediction for a chroma component before deriving a mapping model may be processed in parallel, or the order may be switched.

The re-prediction for a chroma component of a target block based on a reconstructed luma component of a target block may be based on deriving a mapping model derived through a prediction component of a chroma component and a prediction component of a luma component and a subject sample set including a reconstructed luma component sample of a target block.

A prediction sample value of a chroma component sample of a target block may be determined as a result value of a mapping model for an input including at least one of a first luma component sample which is a luma component sample corresponding to a corresponding sample (or a downsampled luma component sample corresponding to a corresponding sample); a neighbor sample of a first luma component sample; or a bias value.

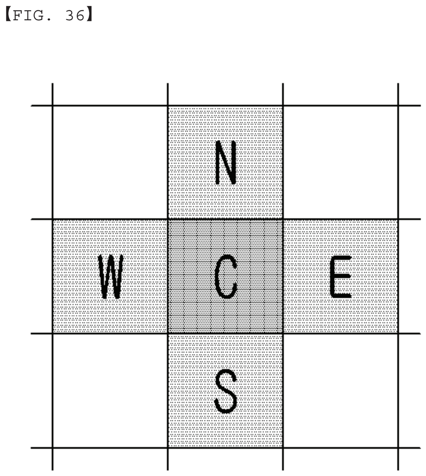

FIG. 36 shows a first luma component sample and a neighbor sample.

As an example, C may refer to the first luma component sample in FIG. 36. In this case, as a result value of a mapping model for an input consisting of C, a sample at a position W, N, S and E corresponding to a neighbor sample of C, a first value determined from C and a second value which is a bias value, a prediction sample value of a chroma component sample of a target block corresponding to C may be determined.

The first value may be a square of a prediction value (or, a reconstructed value) of C. Alternatively, the first value may be a result of dividing a square of a prediction value (or, a reconstructed value) of C by a third value. The third value may be a value determined based on a range of values that a luma component and/or a chroma component may have in a target block.

The second value may be a value determined based on at least one of a range of values that a luma component and/or a chroma component may have in a target block; at least one prediction sample in a target block; at least one reconstructed sample in a target block; at least one of neighbor prediction samples of a target block; or at least one of neighbor reconstructed samples of a target block.

As another example, instead of predicting a chroma component of a target block from a luma component of a target block, a chroma component of a target block may be predicted from a reference block indicated by a motion vector or a block vector of a luma component.

As an example, if a luma component of a target block is predicted by intra block copy, a reference block may be specified based on a block vector of a luma component.

As an example, if a target block is predicted by inter prediction, a reference block may be specified based on motion information of a luma component.

A prediction sample value of a luma component of a target block may be determined based on at least one of a first luma component sample at a position corresponding to the chroma component sample in a reference block; a neighbor sample of a first luma component sample; or a bias value.

Alternatively, when predicting a chroma component of a target block, at least one of a luma component of a target block or a reference block for the luma component may be selectively used.

Information indicating one of a luma component of a target block or a reference block may be encoded and signaled.

Alternatively, based on whether a target block borders a boundary of a coding tree unit, a slice, a tile or a picture, one of a luma component of a target block or a reference block may be selected.

Alternatively, prediction for a chroma component may be performed by using a chroma component reference block corresponding to a luma component reference block indicated by a block vector/a motion vector of a luma component of a target block.

In this case, in order to reduce complexity, instead of a first block vector/motion information which is a block vector/motion information of a luma component of a target block, a prediction block for a chroma component may be generated by using a chroma component reference block corresponding to a luma component reference block indicated by a second block vector/motion information derived based thereon.

In this case, a second block vector/motion information may be a block vector/motion information that rounds up a first block vector/motion information in a unit of an integer-pixel. In this case, since motion compensation filtering for determining a sample value of a sub-pixel unit sample is not performed, complexity may be reduced.

Meanwhile, if bidirectional inter prediction is performed for a luma component, the operation may be performed for each of a L0 direction and a L1 direction. In this case, a prediction block for a chroma component may be obtained by performing a weighted sum for a chroma component reference block in a L0 direction and a chroma component reference block in a L1 direction.

At least one of methods for configuring a sample set in a model-based prediction method of a target block may be determined based on at least one of whether a sample positioned in a specific direction of a target block is available; whether a sample exists in a specific direction of a target block; whether a neighbor block exists in a specific direction of a target block; whether a neighbor block positioned in a specific direction of a target block is available; or signaled/encoded/decoded information.

Based on at least one of a size of a target block or a coding parameter of a target block, whether a dual mode prediction method is activated in a target block may be determined.

For example, a dual mode prediction method may be activated in a target block only when a size of a target block is equal to or greater than a threshold value.

For example, a dual mode prediction method may be activated in a target block only when a target block is not in a geometrical partitioning mode.

Information about a dual mode prediction method in a target block may be signaled/encoded/decoded only when a dual mode prediction method is activated in a target block.

A chroma component may include at least one of a Cb component or a Cr component. In addition, a chroma component block may include at least one of a Cb component block or a Cr component block.

An indicator indicating whether a dual mode prediction method will be performed for a Cb component and a Cr component in a target block may be signaled/encoded/decoded.

Alternatively, an indicator indicating whether a dual mode prediction method will be performed for a Cb component or a Cr component in a target block may be signaled/encoded/decoded.

Alternatively, an indicator indicating whether a dual mode prediction method will be performed for a Cb component in a target block and an indicator indicating whether a dual mode prediction method will be performed for a Cr component may be signaled/encoded/decoded separately.

As an example, based on at least one of the above-described indicators in a target block, it may be determined to perform a dual mode prediction method for a Cb component and not to perform a dual mode prediction method for a Cr component. In this case, a Cr component may be predicted by the same prediction method as a luma component. For example, in this case, if a luma component block of a target block is predicted by inter prediction, a Cr component block of a target block may also be predicted by inter prediction.

If a dual mode prediction method is performed in a target block, at least one of information on a dual mode prediction method in a target block may be stored.

In a target block, at least one of information on a dual mode prediction method in a neighbor block may be inherited from a neighbor block.

When inheriting information on a dual mode prediction method in a neighbor block in a target block, it may mean that information on a dual mode prediction method in a neighbor block is used as it is in a target block, or that information on a dual mode prediction method in a target block is determined based on information on a dual mode prediction method in a neighbor block.

For example, if a target block is in a merge mode, in configuring a merge candidate list in a target block, each merge candidate may include at least one of information on a dual mode prediction method in a target block. In other words, at least one of information on a dual mode prediction method in a target block may be determined based on information on a dual mode prediction method in a merge candidate specified from a merge candidate list.

A weighted sum of at least two prediction blocks (or, reference blocks) may be performed in a target block, and a block generated by the weighted sum may be determined as a final prediction block of a target block. Herein, "a weighted sum prediction method" may refer to a method in which a weighted sum of at least two prediction blocks (or, reference blocks) is performed in a target block.

A method in which a weighted sum of at least two prediction blocks (or, reference blocks) is performed in a target block may include geometric division, an overlapping block motion compensation method and combined inter-intra prediction.

When both a weighted sum prediction method and a dual mode prediction method are performed in a target block, a chroma component block of a target block may be predicted by at least one of methods described below. The following methods were described based on a case in which a weighted sum is performed for two prediction blocks in a weighted sum prediction method, but even when a weighted sum is performed for at least three prediction blocks in a weighted sum prediction method, a chroma component block of a target block may be predicted in a similar manner to a description.

When two luma component prediction blocks (or, reference blocks), a first luma component block and a second luma component block, are determined, inter-component prediction for a first luma component block may be performed to generate a first chroma component block, and inter-component prediction for a second luma component block may be performed to generate a second chroma component block. A final chroma component prediction block may be generated by performing a weighted sum for a first chroma component block and a second chroma component block.

Alternatively, when two luma component prediction blocks (or, reference blocks), a first luma component block and a second luma component block, are determined, a weighted sum of a first luma component block and a second luma component block may be performed to generate a third luma component block, which is a final prediction block of a luma component. A weighted sum may be performed by performing inter-component prediction on a third luma component block, generating a final chroma component prediction block.

When a model-based prediction method is performed in a target block, a motion vector/block vector candidate list including at least one of an adjacent block, a non-adjacent block or a temporally adjacent block of a target block may be configured, and one motion vector candidate/block vector candidate may be specified therefrom.

For example, the motion vector/block vector candidate list may be configured in a manner similar to a configuration method of a merge candidate list and/or a block vector candidate list.

For example, when a model-based prediction method is performed in a target block, information for specifying at least one motion vector candidate/block vector candidate may be signaled/encoded/decoded from a motion vector/block vector candidate list. Alternatively, when a model-based prediction method is performed in a target block, at least one motion vector candidate/block vector candidate may be determined based on at least one of a coding parameter of a target block; a coding parameter of a neighbor block of a target block; or a neighbor sample of a target block from a motion vector/block vector candidate list.

Alternatively, when a model-based prediction method is performed in a target block, at least one block of an adjacent block, a non-adjacent block or a temporally adjacent block of a target block may be specified. In this case, the method for specifying a block may be a method by signaling/encoding/decoding of related information, or a method based on at least one of a coding parameter of a target block; a coding parameter of a neighbor block of a target block; or a neighbor sample of a target block.

At least one of an independent sample set, a dependent sample set or a subject sample set in a target block may be configured by using a neighbor sample of a block indicated by the specific motion vector/block vector.

In inter-component prediction of the present disclosure, the following embodiments may be always applied, may be applied according to a specific condition or may be applied in a separate mode.

For a first embodiment, when performing motion compensation (MC) for a fractional Pel, a luma prediction value may be interpolated from a luma reconstructed sample, and a chroma prediction value may be interpolated from a chroma reconstructed sample to generate a chroma prediction value.

For a second embodiment, when performing MC for a fractional Pel, 1) a Luma to Chroma mapping function may be calculated in a unit of an integer Pel (Int Pel) in a reference image, 2) a luma prediction value may be interpolated from a luma sample, and 3) a chroma prediction value may be generated by applying a mapping function in 1) to luma prediction values for a fractional pel. In this case, unlike a first embodiment, interpolation may not be performed when generating a chroma reference block.

Whether to perform a first embodiment or a second embodiment may be predefined or determined by encoding/decoding information signaled from a bitstream.

The following embodiments may always be applied to a coefficient of an interpolation filter of the present disclosure, may be applied according to a specific condition or may be applied in a separate mode.

Specifically, the present disclosure may apply interpolation filtering and local illumination compensation (LIC) in an inter mode or an IBC mode at once.

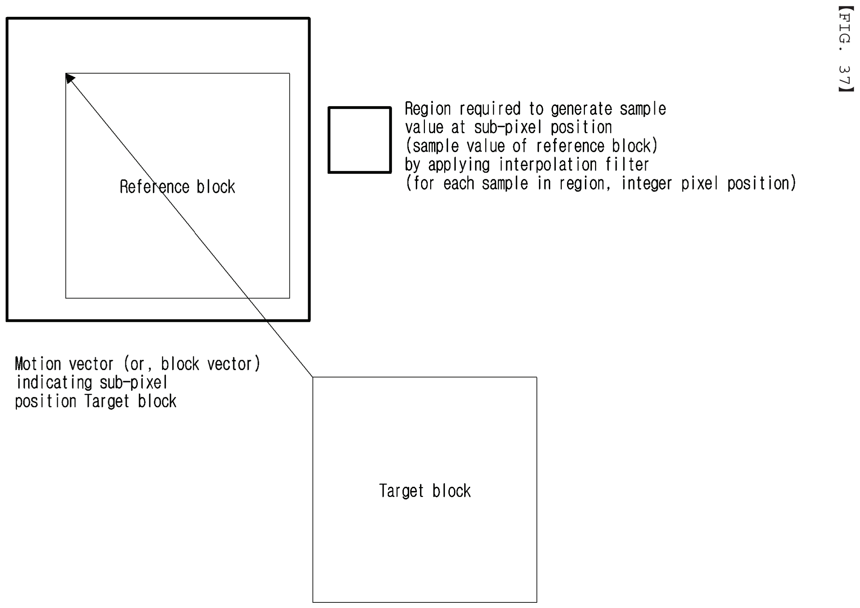

FIG. 37 shows a first embodiment for generating a reference block when a motion vector (or a block vector) indicates a sub-pixel position.

As a first embodiment, when a motion vector (or, a block vector) indicates a sub-pixel position, in order to generate a reference block, sub-pixel position sample values may be generated by performing interpolation filtering after referring to integer pixels around a position indicated by motion information, and when a LIC flag is true, LIC may be performed to change a sample value of a reference block.

LIC may perform local illumination compensation by using a neighbor reconstructed sample of a current block and a reference block. In this case, a necessary weight and offset may be calculated by using a neighbor reconstructed sample, and LIC may be selectively performed in a unit of a coding unit (CU).

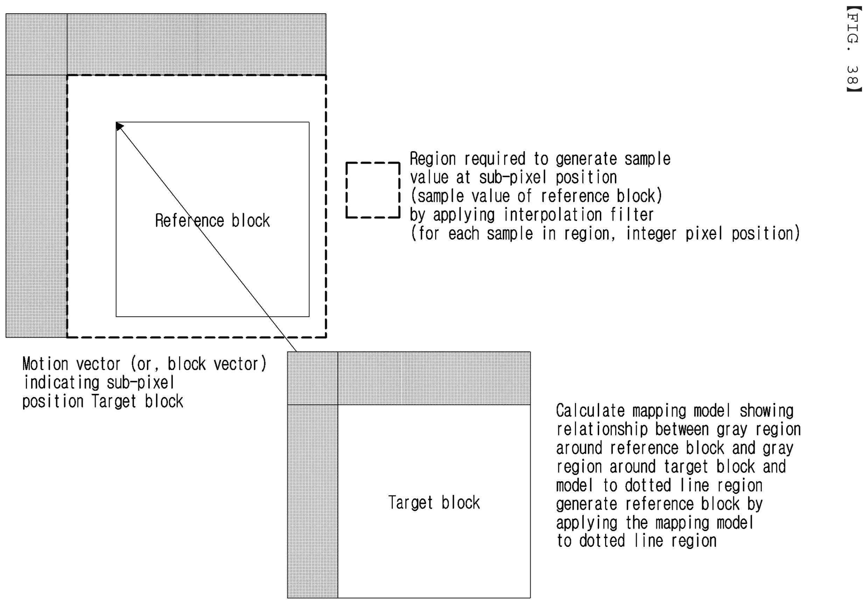

FIG. 38 shows a second embodiment for generating a reference block when a motion vector (or a block vector) indicates a sub-pixel position.

As a second embodiment, when a motion vector (or, a block vector) indicates a sub-pixel position, in order to generate reference sample values at a sub-pixel position through interpolation filtering, a region larger than a size of a target block may be referred to. In this case, according to the number of taps of an interpolation filter, how many more pixels should be referred to in right and left and top and bottom directions may be determined.

Referring to Fig. 38, a mapping model representing a relationship between a gray region around a reference block and a gray region around a target block may be calculated, and the mapping model may be applied to a dotted line region to generate a reference block.

In this case, a size of a gray region around a target block and a size of a gray region around a reference block may be the same or different from each other. In addition, a size of a dotted line region and a size of a target block may be the same or different from each other. Whether they are the same or different may be determined according to an input structure of a mapping model, an output structure, the number of taps of a filter, etc.

An encoder may perform determination of a size and/or a position of at least one reference region; configuration of at least one independent sample set; configuration of at least one dependent sample set; configuration of at least one subject sample set; determination of MODEL_INPUT_NUM and/or MODEL_OUTPUT_NUM of at least one mapping model; determination of at least one bias value; determination of at least one BOUND_LINE_NUM value; determination of at least one DEFAULT_COEF_NUM value; determination of at least one MODEL_NUM value; determination of whether to use a multi-mapping model and/or signaling/encoding/decoding of an indicator indicating whether to use a multi-mapping model; determination of the number of mapping model candidates; determination of the maximum number of mapping model candidates in a multi-mapping model; an indicator indicating whether to use an information merge list for a prediction method; an index indicating one of merge candidates included in an information merge list for a prediction method; selection of a final mapping model from a mapping model candidate; determination of at least one SUB_W and/or SUB_H value; determination of at least one ITER_NUM value; determination of a prediction/reconstructed/residual/decoded value of a sample in a target block from a mapping model result; information on a model-based prediction method; determination of at least one of a method for applying a mapping model adjustment-offset and mapping model adjustment-offset related information and/or determination of a size and/or a position of at least one reference region by using at least one of the above-described embodiments in a signaling/encoding/decoding process; configuration of at least one independent sample set; configuration of at least one dependent sample set; configuration of at least one subject sample set; determination of MODEL_INPUT_NUM and/or MODEL_OUTPUT_NUM of at least one mapping model; determination of at least one bias value; determination of at least one BOUND_LINE_NUM value; determination of at least one DEFAULT_COEF_NUM value; determination of at least one MODEL_NUM value; determination of whether to use a multi-mapping model and/or signaling/encoding/decoding of an indicator indicating whether to use a multi-mapping model; determination of the number of mapping model candidates; determination of the maximum number of mapping model candidates in a multi-mapping model; selection of a final mapping model from a mapping model candidate; determination of at least one SUB_W and/or SUB_H value; determination of at least one ITER_NUM value; determination of a prediction/reconstructed/residual/decoded value of a sample in a target block from a mapping model result;

information on a model-based prediction method; determination and/or signaling/encoding/decoding of at least one of a method for applying a mapping model adjustment-offset or mapping model adjustment-offset related information.

In addition, a decoder may use at least one of the above-described embodiments in the process to perform determination of a size and/or a position of at least one reference region; configuration of at least one independent sample set; configuration of at least one dependent sample set; configuration of at least one subject sample set; determination of MODEL_INPUT_NUM and/or MODEL_OUTPUT_NUM of at least one mapping model; determination of at least one bias value; determination of at least one BOUND_LINE_NUM value; determination of at least one DEFAULT_COEF_NUM value; determination of at least one MODEL_NUM value; determination of whether to use a multi-mapping model and/or signaling/encoding/decoding of an indicator indicating whether to use a multi-mapping model; determination of the number of mapping model candidates; determination of the maximum number of mapping model candidates in a multi-mapping model; selection of a final mapping model from a mapping model candidate; determination of at least one SUB_W and/or SUB_H value; determination of at least one ITER_NUM value; determination of a prediction/reconstructed/residual/decoded value of a sample in a target block from a mapping model result; information on a model-based prediction method; determination and/or signaling/encoding/decoding of at least one of a method for applying a mapping model adjustment-offset or mapping model adjustment-offset related information.

The embodiments of the present disclosure described a case in which two reference picture lists are used, but they are not limited to a case in which inter prediction to which the present disclosure is applied uses two reference picture lists, and the embodiments of the present disclosure may be applied even when NUM_REFPICLIST reference picture lists are used. NUM_REFPICLIST may be 1, 2, 3 or a positive integer.

The embodiments of the present disclosure described only a case in which prediction of a sample in a target block is performed based on a result of a mapping model or a value of a prediction sample in a target block is changed based on a result of a mapping model, but the embodiments of the present disclosure may be applied even when a sample in a target block is reconstructed/decoded or a value of a reconstructed/residual/decoded sample in a target block is changed based on a result of a mapping model.

The embodiments of the present disclosure described a case in which one or two motion information candidate lists are used, but they are not limited to a case in which inter prediction to which the present disclosure is applied uses one or two motion information candidate lists, and the embodiments of the present disclosure may be applied even when NUM_MILIST motion information candidate lists are used. NUM_MILIST may be 1, 2, 3 or a positive integer.

The embodiments of the present disclosure may be applied according to a size of at least one of a coding block, a prediction block, a block or a unit. A size here may be defined as the minimum size and/or the maximum size for applying the embodiments, or may be defined as a fixed size to which the embodiments are applied. In addition, in the embodiments, a first embodiment may be applied in a first size, and a second embodiment may be applied in a second size. In other words, the embodiments may be applied in combination according to a size. In addition, the embodiments of the present disclosure may be applied only when it is equal to or greater than the minimum size and less than or equal to the maximum size. In other words, the embodiments may be applied only when a block size is included within a certain range.

In addition, the embodiments of the present disclosure may be applied only when it is equal to or greater than the minimum size and less than or equal to the maximum size, and here, the minimum size and the maximum size may be a size of one of a block or a unit, respectively. In other words, a block that is a target of the minimum size and a block that is a target of the maximum size may be different from each other. For example, the embodiments of the present disclosure may be applied only when a current block size is equal to or greater than the minimum size of a block and less than or equal to the maximum size of a block.

For example, the embodiments may be applied only when a current block size is 8x8 or larger. For example, the embodiments may be applied only when a current block size is 16x16 or larger. For example, the embodiments may be applied only when a current block size is 32x32 or larger. For example, the embodiments may be applied only when a current block size is 64x64 or larger. For example, the embodiments may be applied only when a current block size is 128x128 or larger. For example, the embodiments may be applied only when a current block size is 4x4. For example, the embodiments may be applied only when a current block size is 8x8 or less. For example, the embodiments may be applied only when a current block size is 16x16 or less. For example, the embodiments may be applied only when a current block size is 8x8 or larger and 16x16 or less. For example, the embodiments may be applied only when a current block size is 16x16 or larger and 64x64 or less.

The embodiments of the present disclosure may be applied according to a temporal layer. A separate identifier is signaled to identify a temporal layer to which the embodiments may be applied, and the embodiments may be applied to a temporal layer specified by a corresponding identifier. An identifier here may be defined as a minimum layer and/or a maximum layer to which the embodiments may be applied, or may be defined as indicating a specific layer to which the embodiments are applied.

For example, the embodiments may be applied only when a temporal layer of a current image is the lowest layer. For example, the embodiments may be applied only when a temporal layer identifier of a current image is 0. For example, the embodiments may be applied only when a temporal layer identifier of a current image is 1 or higher. For example, the embodiments may be applied only when a temporal layer of a current image is the highest layer.

In the above-described embodiments, based on at least one of a prediction mode of a target block, motion information of a target block, a coding parameter of a target block, a size of a target block, a range of values that a luma component of a target block may have, a range of values that a chroma component of a target block may have, availability of a neighbor block of a target block, a coding parameter of a neighbor block of a target block; a neighbor sample of a target block; and a mapping model, at least one of a probability model or a context model may be determined which is used for entropy encoding/decoding for determination of a size and/or a position of at least one reference region; configuration of at least one independent sample set; configuration of at least one dependent sample set; configuration of at least one subject sample set; determination of MODEL_INPUT_NUM and/or MODEL_OUTPUT_NUM of at least one mapping model; determination of at least one bias value; determination of at least one BOUND_LINE_NUM value; determination of at least one DEFAULT_COEF_NUM value; determination of at least one MODEL_NUM value; determination of whether to use a multi-mapping model and/or signaling/encoding/decoding of an indicator indicating whether to use a multi-mapping model; determination of the number of mapping model candidates; determination of the maximum number of mapping model candidates in a multi-mapping model; selection of a final mapping model from a mapping model candidate; determination of at least one SUB_W and/or SUB_H value; determination of at least one ITER_NUM value; determination of a prediction/reconstructed/residual/decoded value of a sample in a target block from a mapping model result; information on a model-based prediction method; determination and/or signaling/encoding/decoding of at least one of a method for applying a mapping model adjustment-offset and mapping model adjustment-offset related information.

As in the embodiment of the present disclosure, a reference picture set used in a process of reference picture list construction and reference picture list modification may use at least one reference picture list among L0, L1, L2 or L3.

According to the embodiment of the present disclosure, when calculating boundary strength in a deblocking filter, one or more and up to N motion information of a current block may be used. Here, N represents a positive integer equal to or greater than 1, and may be 2, 3, 4, etc.

The embodiments of the present disclosure may also be applied even when a motion vector has at least one of a 16-pel unit, a 8-pel unit, a 4-pel unit, an integer-pel unit, a 1/2-pel unit, a 1/4-pel unit, a 1/8-pel unit, a 1/16-pel unit, a 1/32-pel unit or a 1/64-pel unit. In addition, a motion vector may be selectively used per the pixel unit in an encoding/decoding process of a current block.

A slice type to which the embodiments of the present disclosure are applied is defined, and the embodiments of the present disclosure may be applied according to a corresponding slice type.

A shape of a block to which the embodiments of the present disclosure are applied may have a square shape or a non-square shape.

At least one of context elements related to determination of a neighbor block which will be included in a motion information candidate list such as an indicator, an index, a flag, etc., configuration, reconstruction and determination of a motion information candidate list, determination of motion information (determination of a motion information index, derivation of an index using a decoder-side motion information derivation method, derivation of motion information using a decoder-side motion information derivation method), performance of an operation with a motion information offset, addition of a motion vector different to motion information, correction of motion information using a decoder-side motion information derivation method, a motion vector difference, a reference image index or a motion information index, etc. entropy-encoded in the encoder and entropy-decoded in a decoder may use at least one of the following binarization, debinarization or entropy encoding/decoding.

1) A 0-th order Exp_Golomb binarization/debinarization method with a sign (se(v))
2) A k-th order Exp_Golomb binarization/debinarization method with a sign (sek(v))
3) A 0-th order Exp_Golomb binarization/debinarization method for a positive integer without a sign (ue(v))
4) A k-th order Exp_Golomb binarization/debinarization method for a positive integer without a sign (uek(v))
5) A fixed-length binarization/debinarization method (f(n))
6) A truncated rice binarization/debinarization method or a truncated unary binarization/debinarization method (tu(v))
7) A truncated binary binarization/debinarization method (tb(v))
8) A context adaptive arithmetic encoding/decoding method (ae(v))
9) A bite unit bit string (b(8))
10) An integer binarization/debinarization method with a sign (i(n))
11) A positive integer binarization/debinarization method without a sign (u(n)), wherein u(n) may refer to a fixed length binarization/debinarization method .
12) A unary binarization/debinarization method

It is not limited to any one embodiment among the embodiments and applied to an encoding/decoding process of a current block, and a specific embodiment or at least one combination of the embodiments may be applied to an encoding/decoding process of a current block.

The exemplary methods of the present disclosure are expressed as a series of operations for clarity of a description, but it is not intended to limit order in which steps are performed, and each step may be performed simultaneously or in different order, if necessary. In order to implement a method according to the present disclosure, a different step may be additionally included in an exemplary step, the remaining steps may be included by excluding some steps, or an additional different step may be included by excluding some steps.

A variety of embodiments of the present disclosure are not intended to list all possible combinations, but are intended to describe a representative aspect of the present disclosure, and matters described in a variety of embodiments may be applied independently or in combinations of at least two.

In addition, a variety of embodiments of the present disclosure may be implemented by hardware, firmware, software or a combination thereof. For implementation by hardware, it may be implemented by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), general processors, controllers, micro controllers, micro processors, etc.

A scope of the present disclosure includes software or machine-executable instructions that make an operation according to a method in a variety of embodiments to be executed on a device or a computer (e.g., an operating system, an application, firmware, a program, etc.), and a non-transitory computer-readable medium where such software or instruction, etc. is stored and executable on a device or a computer.

**Claims**

1.  An image decoding method, the method comprising:

    obtaining, based on a dual-mode prediction method, a prediction block of a chrominance component by performing prediction on the chrominance component of a target block; and
    reconstructing, based on the prediction block of the chrominance component, the chrominance component of the target block,
    wherein a luminance component of the target block is predicted by at least one prediction method among inter prediction, intra block copy, or template matching.

2.  The method of Claim 1,
    wherein the prediction on the chrominance component is performed by a model-based prediction method based on a correlation between an independent sample set and a dependent sample set.

3.  The method of Claim 2,

    wherein the independent sample set includes a predicted or reconstructed sample of a neighboring luminance component of the target block, and
    wherein the dependent sample set includes a predicted or reconstructed sample of a neighboring chrominance component of the target block.

4.  The method of Claim 2,

    wherein the independent sample set includes a predicted, reference, or reconstructed sample of the luminance component of the target block,
    wherein the dependent sample set includes a predicted sample of the chrominance component of the target block, and
    wherein the reference block is a reference block indicated by a block vector or a motion vector.

5.  The method of Claim 1,
    wherein a CTU (coding tree unit) containing the target block is a single tree structure.

6.  The method of Claim 1,
    wherein the template matching is performed by at least one of an intra template matching mode or an inter template matching mode.

7.  The method of Claim 1,
    wherein whether to activate the dual-mode prediction method is determined based on at least one of a size of the target block or whether the target block is in geometric partition mode.

8. An image encoding method, the method comprising:

obtaining, based on a dual-mode prediction method, a prediction block of a chrominance component by performing prediction on the chrominance component of a target block; and
reconstructing, based on the prediction block of the chrominance component, the chrominance component of the target block,
wherein a luminance component of the target block is predicted by at least one prediction method among inter prediction, intra block copy, or template matching.

9. The method of Claim 8,
wherein the prediction on the chrominance component is performed by a model-based prediction method based on a correlation between an independent sample set and a dependent sample set.

10. The method of Claim 9,

wherein the independent sample set includes a predicted, reference, or reconstructed sample of the luminance component of the target block, and
wherein the dependent sample set includes a predicted sample of the chrominance component of the target block.

11. The method of Claim 9,

wherein the independent sample set includes a predicted or reconstructed sample of a neighboring luminance component of a reference block of the target block,
wherein the dependent sample set includes a predicted or reconstructed sample of a neighboring chrominance component of a reference block of the target block, and
wherein the reference block is a reference block indicated by a block vector or a motion vector.

12. The method of Claim 8,
wherein a CTU (coding tree unit) containing the target block is a single tree structure.

13. The method of Claim 8,
wherein the template matching is performed by at least one of an intra template matching mode or an inter template matching mode.

14. The method of Claim 8,
wherein whether to activate the dual-mode prediction method is determined based on at least one of a size of the target block or whether the target block is in geometric partition mode.

15. A non-transitory computer readable recording medium storing a bitstream generated by an encoding method, the method comprising:

obtaining, based on a dual-mode prediction method, a prediction block of a chrominance component by performing prediction on the chrominance component of a target block; and
reconstructing, based on the prediction block of the chrominance component, the chrominance component of the target block,
wherein a luminance component of the target block is predicted by at least one prediction method among inter prediction, intra block copy, or template matching.

【FIG. 1】

【FIG. 2】

【FIG. 3】

EP 4 697 701 A1

LCU

Division information=0 : 2N × 2N (2N)

division information =1 : | 0 | 1 | / | 2 | 3 | N (N)

Depth=0,N=32

Division information=0 : 2N × 2N (2N)

division information =1 : | 0 | 1 | / | 2 | 3 | N (N)

Depth=1,N=16

SCU

No division information : 2N × 2N (2N)

Depth=3,N=4

【FIG. 4】

0 : Planar
1 : DC

【FIG. 5】

【FIG. 6】

【FIG. 7】

【FIG. 8】

Division boundary
in geometric mode

Division
offset

Division
angle

【FIG. 9】

Blending matrix W₀ — Blending matrix W₁

【FIG. 10】

Reference image                    Target image

【FIG. 11】

【FIG. 12】

:Target block and/or reference block

【FIG. 13】

| Search pattern and search resolution | Improved motion vector prediction mode | | | | Merge mode | |
|---|---|---|---|---|---|---|
| | Adaptive motion vector resolution index | | | | | |
| | 4-pel | Full-pel | Half-pel | Quarter-pel | AltIF=0 | AltIF=1 |
| 4-pel diamond | v | | | | | |
| pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| Octa-pel cross | | | | | v | |

EP 4 697 701 A1

【FIG. 14】

| Search pattern and search resolution | Improved motion vector prediction mode | | | | Merge mode | |
|---|---|---|---|---|---|---|
| | Adaptive motion vector resolution index | | | | | |
| | 4-pel | Full-pel | Half-pel | Quarter-pel | AltIF=0 | AltIF=1 |
| 4-pel diamond | v | | | | | |
| pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| Octa-pel cross | | | | | | |

【FIG. 15】

| Search pattern and search resolution | Improved motion vector prediction mode | | | | Merge mode | |
|---|---|---|---|---|---|---|
| | Adaptive motion vector resolution index | | | | | |
| | 4-pel | Full-pel | Half-pel | Quarter-pel | AltIF=0 | AltIF=1 |
| 4-pel diamond | v | v | v | v | v | v |
| pel cross | v | v | v | v | v | v |
| Full-pel diamond | | v | v | v | v | v |
| Full-pel cross | | v | v | v | v | v |
| Half-pel cross | | | v | v | v | v |
| Quarter-pel cross | | | | v | v | |
| Octa-pel cross | | | | | v | |

【FIG. 16】

| Search pattern and search resolution | Improved motion vector prediction mode | | | | Merge mode | |
| --- | --- | --- | --- | --- | --- | --- |
| | Adaptive motion vector resolution index | | | | | |
| | 4-pel | Full-pel | Half-pel | Quarter-pel | AltIF=0 | AltIF=1 |
| 4-pel diamond | ✓ | | | | | |
| pel cross | ✓ | | | | | |
| Full-pel diamond | | ✓ | ✓ | ✓ | ✓ | ✓ |
| Full-pel cross | | ✓ | ✓ | ✓ | ✓ | ✓ |
| Half-pel cross | | | ✓ | ✓ | ✓ | ✓ |
| Quarter-pel cross | | | | ✓ | | |
| Octa-pel cross | | | | | | |

【FIG. 17】

| Search pattern and search resolution | Improved motion vector prediction mode | | | | Merge mode | |
| | Adaptive motion vector resolution index | | | | | |
| | 4-pel | Full-pel | Half-pel | Quarter-pel | AltIF=0 | AltIF=1 |
| 4-pel diamond | | | | | | |
| pel cross | v | | | | | |
| Full-pel diamond | | | | | | |
| Full-pel cross | | v | v | v | v | v |
| Half-pel cross | | | | | | |
| Quarter-pel cross | | | | v | v | |
| Octa-pel cross | | | | | | |

【FIG. 18】

| Search pattern and search resolution | Improved motion vector prediction mode<br>Adaptive motion vector resolution index | | | | Merge mode | |
|---|---|---|---|---|---|---|
|  | 4-pel | Full-pel | Half-pel | Quarter-pel | AltIF=0 | AltIF=1 |
| 4-pel diamond | v | v | v | v | v | v |
| pel cross | v | v | v | v | v | v |
| Full-pel diamond |  |  | v | v | v | v |
| Full-pel cross |  |  | v | v | v | v |
| Half-pel cross |  |  |  | v | v |  |
| Quarter-pel cross |  |  |  |  | v |  |
| Octa-pel cross |  |  |  |  |  |  |

【FIG. 19】

【FIG. 20】

Top reference template

Left reference template

Prediction block

20A

20B

【FIG. 21】

【FIG. 22】

Encoding method and device including

[E1/D1] configuring sample set and deriving mapping model;

[E2/D2] applying mapping model to target block;

[D3] entropy encoding encoding information;

in performing encoding for target block

【FIG. 23】

```
┌──────────────────────────────────────────┐
│  Encoding method and device including     │
└──────────────────────────────────────────┘
                    │
                    ▼
┌──────────────────────────────────────────┐
│                                          │
│         deriving mapping model;          │
│                                          │
└──────────────────────────────────────────┘
                    │
                    ▼
┌──────────────────────────────────────────┐
│                                          │
│         applying mapping model;          │
│                                          │
└──────────────────────────────────────────┘
                    │
                    ▼
┌──────────────────────────────────────────┐
│      [D3] entropy encoding encoding      │
│             information;                 │
└──────────────────────────────────────────┘
                    │
                    ▼
┌──────────────────────────────────────────┐
│  in performing encoding for target block │
└──────────────────────────────────────────┘
```

【FIG. 24】

```
┌────────────────────────────────────────┐
│  Decoding method and device including   │
└────────────────────────────────────────┘
                    │
                    ▼
┌────────────────────────────────────────┐
│   [D3] entropy decoding encoding        │
│            information;                 │
└────────────────────────────────────────┘
                    │
                    ▼
┌────────────────────────────────────────┐
│  [E1/D1] configuring sample set and     │
│        deriving mapping model;          │
└────────────────────────────────────────┘
                    │
                    ▼
┌────────────────────────────────────────┐
│   [E2/D2] applying mapping model        │
│          to target model;               │
└────────────────────────────────────────┘
                    │
                    ▼
┌────────────────────────────────────────┐
│ in performing decoding for target block │
└────────────────────────────────────────┘
```

【FIG. 25】

```
┌─────────────────────────────────────────┐
│  Decoding method and device including    │
└─────────────────────────────────────────┘
                    │
                    ▼
┌─────────────────────────────────────────┐
│    [D3] entropy decoding encoding        │
│             information;                 │
└─────────────────────────────────────────┘
                    │
                    ▼
┌─────────────────────────────────────────┐
│         deriving mapping model;          │
└─────────────────────────────────────────┘
                    │
                    ▼
┌─────────────────────────────────────────┐
│         applying mapping model;          │
└─────────────────────────────────────────┘
                    │
                    ▼
┌─────────────────────────────────────────┐
│  in performing decoding for target block │
└─────────────────────────────────────────┘
```

【FIG. 26】

When configuring input for target sample

First input structure        Second input structure

☐ :Target sample

▨ :Sample used as input

【FIG. 27】

【FIG. 28】

【FIG. 29】

【FIG. 30】

BOUND_LINE_NUM

Target block

BOUND_
LINE_NUM

Target block

【FIG. 31】

| p(0,2) | p(1,2) | p(2,2) | p(3,2) | p(4,2) | p(5,2) | p(6,2) | p(7,2) |
|---|---|---|---|---|---|---|---|
| p(0,1) | p(1,1) | p(2,1) | p(3,1) | p(4,1) | p(5,1) | p(6,1) | p(7,1) |
| q(0,1) | q(1,1) | q(2,1) | q(3,1) | q(4,1) | q(5,1) | q(6,1) | q(7,1) |
| q(0,2) | q(1,2) | q(2,2) | q(3,2) | q(4,2) | q(5,2) | q(6,2) | q(7,2) |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |
|  |  |  |  |  |  |  |  |

:Target block

【FIG. 32】

:Target block

【FIG. 33】

【FIG. 34】

$$1/16 \quad \begin{array}{|c|c|c|} \hline 1 & 1 & 1 \\ \hline 1 & 8 & 1 \\ \hline 1 & 1 & 1 \\ \hline \end{array}$$

【FIG. 35】

$$P_{neigh} = W_{bcw_0} * f_0(\sim) + w_{bcw_1} * f_1(\sim)$$

$$\frac{1}{W_{bcw_1}} * P_{neigh} = (W_{bcw_0} / W_{bcw_1}) * f_0(\sim) + f_1(\sim)$$

$$f_1(\sim) = \frac{1}{W_{bcw_1}} * P_{neigh} - (W_{bcw_0} / W_{bcw_1}) * f_0(\sim)$$

【FIG. 36】

【FIG. 37】

Region required to generate sample
value at sub-pixel position
(sample value of reference block)
by applying interpolation filter
(for each sample in region, integer pixel position)

Target block

Reference block

Motion vector (or, block vector)
indicating sub-pixel
position Target block

[FIG. 38]

Reference block

Motion vector (or, block vector)
indicating sub-pixel
position Target block

Region required to generate sample
value at sub-pixel position
(sample value of reference block)
by applying interpolation filter
(for each sample in region, integer pixel position)

Target block

Calculate mapping model showing
relationship between gray region
around reference block and gray
region around target block and
model to dotted line region
generate reference block by
applying the mapping model
to dotted line region

## INTERNATIONAL SEARCH REPORT

| | International application No. |
|---|---|
| | **PCT/KR2024/004766** |

| A. | CLASSIFICATION OF SUBJECT MATTER |
|---|---|

**H04N 19/105**(2014.01)i; **H04N 19/186**(2014.01)i; **H04N 19/176**(2014.01)i; **H04N 19/132**(2014.01)i; **H04N 19/137**(2014.01)i; **H04N 19/159**(2014.01)i; **H04N 19/587**(2014.01)i; **H04N 19/119**(2014.01)i; **H04N 19/56**(2014.01)i; **H04N 19/577**(2014.01)i

According to International Patent Classification (IPC) or to both national classification and IPC

| B. | FIELDS SEARCHED |
|---|---|

Minimum documentation searched (classification system followed by classification symbols)

H04N 19/105(2014.01); G06T 9/00(2006.01); H04N 19/159(2014.01); H04N 19/186(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 색차(chroma), 휘도(luma), 예측(predict), 화면내 블록 복사 (intra block copy), 템플릿(template), 매칭(matching)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0006053 A (BEIJING BYTEDANCE NETWORK TECHNOLOGY CO., LTD. et al.) 14 January 2022 (2022-01-14)<br>See paragraphs [0030], [0055], [0239], [0250], [0259], [0385] and [0841]; claims 16, 18, 36 and 39; and figures 4-5. | 1-15 |
| Y | COBAN, Muhammed et al. Algorithm description of Enhanced Compression Model 8 (ECM 8). JVET-AC2025, Joint Video Experts Team (JVET) of ITU-T SG 16 WP 3 and ISO/IEC JTC 1/SC 29, 29th Meeting, by teleconference. pp. 1-73, 06 April 2023.<br>See pages 4, 9, 21 and 23; and figure 21. | 1-15 |
| Y | KR 10-2519241 B1 (QUALCOMM INCORPORATED) 06 April 2023 (2023-04-06)<br>See paragraphs [0102] and [0108]; and claim 17. | 3-4,10-11 |
| A | WO 2023-281158 A1 (NOKIA TECHNOLOGIES OY) 12 January 2023 (2023-01-12)<br>See paragraph [0166]; and claims 1-14. | 1-15 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 July 2024** | **23 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/004766** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2017-140211 A1 (MEDIATEK SINGAPORE PTE. LTD.) 24 August 2017 (2017-08-24)<br>See claims 1-11. | 1-15 |

Form PCT/ISA/210 (second sheet) (July 2022)

**INTERNATIONAL SEARCH REPORT**
Information on patent family members

International application No.

**PCT/KR2024/004766**

| Patent document cited in search report | | | Publication date (day/month/year) | Patent family member(s) | | | Publication date (day/month/year) |
|---|---|---|---|---|---|---|---|
| KR | 10-2022-0006053 | A | 14 January 2022 | CN | 117221558 | A | 12 December 2023 |
| | | | | EP | 3949395 | A1 | 09 February 2022 |
| | | | | JP | 2022-531216 | A | 06 July 2022 |
| | | | | JP | 7407206 | B2 | 28 December 2023 |
| | | | | KR | 10-2641796 | B1 | 04 March 2024 |
| | | | | US | 11463713 | B2 | 04 October 2022 |
| | | | | US | 2022-0385926 | A1 | 01 December 2022 |
| | | | | WO | 2020-224629 | A1 | 12 November 2020 |
| KR | 10-2519241 | B1 | 06 April 2023 | CN | 107211124 | A | 26 September 2017 |
| | | | | CN | 107211124 | B | 18 October 2019 |
| | | | | EP | 3092803 | A1 | 16 November 2016 |
| | | | | EP | 3092803 | B1 | 12 December 2018 |
| | | | | JP | 2018-509035 | A | 29 March 2018 |
| | | | | JP | 6543716 | B2 | 10 July 2019 |
| | | | | KR | 10-2017-0107448 | A | 25 September 2017 |
| | | | | US | 2016-0219283 | A1 | 28 July 2016 |
| | | | | US | 9998742 | B2 | 12 June 2018 |
| | | | | WO | 2016-123219 | A1 | 04 August 2016 |
| WO | 2023-281158 | A1 | 12 January 2023 | CN | 117597929 | A | 23 February 2024 |
| | | | | EP | 4367885 | A1 | 15 May 2024 |
| | | | | KR | 10-2024-0027829 | A | 04 March 2024 |
| WO | 2017-140211 | A1 | 24 August 2017 | CN | 109417623 | A | 01 March 2019 |
| | | | | EP | 3403407 | A1 | 21 November 2018 |
| | | | | US | 2019-0045184 | A1 | 07 February 2019 |
| | | | | WO | 2017-139937 | A1 | 24 August 2017 |

Form PCT/ISA/210 (patent family annex) (July 2022)